# EUROPEAN PATENT APPLICATION

(11) **EP 4 764 803 A1**
(43) Date of publication of application: **24.06.2026**
(21) Application number: 24930534.3
(22) Date of filing: 12.12.2024
(51) Int. Cl.: G06F 3/04842

(54) **DISPLAY METHOD, GRAPHICAL INTERFACE, AND RELATED APPARATUS**

(30) Priority: 21.03.2024 CN 202410334858; 30.03.2024 CN 202410387359
(71) Applicant: HUAWEI TECHNOLOGIES CO., LTD., Shenzhen 518129 (CN)
(72) Inventor: WANG, Zhengyun, Shenzhen, Guangdong 518129 (CN); YAO, Junyu, Shenzhen, Guangdong 518129 (CN); LIN, Zhenchao, Shenzhen, Guangdong 518129 (CN); LIU, Lei, Shenzhen, Guangdong 518129 (CN); LU, Dong, Shenzhen, Guangdong 518129 (CN)
(74) Representative: Goddar, Heinz J.
(86) International application number: PCT/CN2024/138960
(87) International publication number: WO 2025/194878

(57) **Abstract**

This application discloses a display method, a graphical interface, and a related apparatus. The method includes: detecting an operation of starting a first application on a first interface element, and displaying an icon startup animation and a startup page animation, where the icon startup animation includes a process of gradually changing from the first interface element to an icon startup page, and the startup page animation includes a process of gradually changing from a first image to a first page; displaying a second image of the startup page animation at a first moment, and then displaying a window startup animation at a second moment, where the window startup animation includes a process of gradually changing from a third image to a second page of the first application, content of the third image includes content of the second image, content of the first page is the same as content of the second page, and the content of the second page includes the content of the third image. It can be learned that, after a user triggers startup of an application, the user may view a startup animation in which an interface element gradually transitions to an application window, thereby avoiding abrupt picture switching and improving visual experience of the user.

## Description

This application claims priorities to Chinese Patent Application No. 202410334858.5, filed with the China National Intellectual Property Administration on March 21, 2024, and entitled "DISPLAY METHOD, GRAPHICAL INTERFACE, AND RELATED APPARATUS", and to Chinese Patent Application No. 202410387359.2, filed with the China National Intellectual Property Administration on March 30, 2024, and entitled "DISPLAY METHOD, GRAPHICAL INTERFACE, AND RELATED APPARATUS", both of which are incorporated herein by reference in their entireties.

### TECHNICAL FIELD

This application relates to the terminal field, and in particular, to a display method, a graphical interface, and a related apparatus.

### BACKGROUND

To provide better visual effect for a user, when an application is started, a window startup animation in which an application window is gradually scaled up usually appears. However, a prerequisite for displaying the window startup animation is that the application window is prepared. In other words, if the application window is not prepared, the window startup animation cannot be displayed. Therefore, when the application is started, if the application window is not prepared in time, the window startup animation may disappear, or the user may wait for long time to view the window startup animation, which affects visual experience of the user.

Therefore, how to improve the foregoing situation that occurs when the application is started is an urgent problem that needs to be resolved currently.

### SUMMARY

This application provides a display method, a graphical interface, and a related apparatus, to implement that when an application is started, an icon startup animation and a startup page animation are displayed to fill a gap before a window startup animation is displayed, thereby improving visual experience of a user.

According to a first aspect, an embodiment of this application provides a display method, where the method includes: An electronic device detects a first operation performed on a first interface element, where the first operation is used to start a first application; in response to the first operation, the electronic device displays a first startup animation and a second startup animation, where the first startup animation includes a process of gradually changing from the first interface element to an icon startup page, the second startup animation includes a process of gradually changing from a first image to a first page, content of the first page includes content of the first image, and locations and sizes of image frames of the first startup animation and the second startup animation at a same moment are the same; the electronic device displays a second image of the second startup animation at a first moment; and the electronic device displays a window startup animation at a second moment, where the second moment is after the first moment, the window startup animation includes a process of gradually changing from a third image to a second page of the first application, the content of the first page is the same as content of the second page, the content of the second page includes content of the third image, and the content of the third image includes content of the second image.

According to the method provided in the first aspect, before the window startup animation is displayed, the icon startup animation may be enabled for transition, to avoid a case in which the user needs to wait for excessively long time after starting the application to view a response made by the electronic device. In addition, to avoid that switching between the icon startup animation and the window startup animation is excessively abrupt, before the window startup animation is displayed, the startup page animation may be first displayed. In this way, in a process of starting the application, animation effect of gradually transitioning from displaying the interface element to displaying content of the application window is achieved, and visual experience of the user is improved.

With reference to the first aspect, in an implementation, the first startup animation includes a change process in which picture transparency increases, and the second startup animation includes a change process in which picture transparency decreases.

It can be learned that, picture transparency of the icon startup animation gradually increases, so that the icon startup animation gradually disappears in a playback process, and picture transparency of the startup page animation gradually decreases, so that the startup page animation gradually appears in a playback process. This visually displays effect of gradually transitioning the interface element to the application startup page.

With reference to the first aspect, in an implementation, the first startup animation is displayed on a first layer, and the second startup animation is displayed on a second layer; and the first layer is located above the second layer, and the first startup animation includes a change process in which picture transparency increases; or the first layer is located below the second layer, and the second startup animation includes a change process in which picture transparency decreases.

In other words, an up-down relationship of the layer may be used, and then a transparency change of an animation may be used, so that the icon startup animation gradually disappears in the playback process, and the startup page animation gradually appears in the playback process.

With reference to the first aspect, in an implementation, the window startup animation is displayed on a third layer, and the third layer is located above the first layer and the second layer.

In this way, when the electronic device displays the window startup animation, the icon startup animation and the startup page animation that are located at a lower layer may be blocked, to complete application startup.

With reference to the first aspect, in an implementation, locations, sizes, and display content of image frames of the second startup animation and the window startup animation at a same moment are the same.

In other words, when the window startup animation is displayed, the startup page animation may remain in a display state, and locations, sizes, and display content of image frames of the startup page animation and the window startup animation at the same moment are the same. In this way, when the window startup animation appears, the window startup animation can be played continuously based on the startup page animation, thereby ensuring smooth transition of the image.

With reference to the first aspect, in an implementation, in display processes of the second startup animation and the window startup animation, the display content gradually increases, and a size of the display content gradually increases.

The display content of the window startup animation of the startup page animation gradually increases in a display process, and the size of the display content gradually changes, so that the startup animation displayed by the electronic device can include picture scaling-up effect of gradually transitioning from a size of an application icon to a page size.

With reference to the first aspect, in an implementation, the method further includes: In response to a first operation, the electronic device starts to draw an application window of the first application; and after the electronic device displays the first startup animation and the second startup animation, and before displaying the window startup animation, the method further includes: the electronic device completes drawing of the application window of the first application.

The application window of the first application may be drawn by the first application in the electronic device.

It can be learned that, because it takes specific time to prepare the application window of the first application, before the application window is prepared, the icon startup animation and the startup page animation may be displayed to fill a gap before the window startup animation is displayed.

With reference to the first aspect, in an implementation, the first page is an application startup page picture preset for the first application, the first page is drawn by the electronic device based on first information of the first application, the first page is a page screenshot of the first application before the first application is backgrounded last time, or the first page is a main page screenshot of the first application.

With reference to the first aspect, in an implementation, after the electronic device displays a fourth image of the window startup animation, the displayed window startup animation includes a process of changing from a fifth image to a third page, where the content of the second page includes content of the fourth image, a size of the fifth image is greater than or equal to a size of the fourth image, content of the third page includes content of the fifth image, the third page is a main page of the first application, and the second page is different from the third page.

In other words, in a process in which the electronic device displays the window startup animation corresponding to the application window, a page displayed in the window startup animation may change, so that when the application is started, the main page of the application can be finally displayed.

With reference to the first aspect, in an implementation, before the electronic device detects the first operation, the first application does not run in the background of the electronic device, and after the window startup animation ends, the method further includes: The electronic device displays the main page of the first application in the application window of the first application; or before the electronic device detects the first operation, the first application runs in the background of the electronic device, and after the window startup animation ends, the method further includes: the electronic device display, in the application window of the first application, a page displayed by the first application before the first application is backgrounded last time.

In other words, the first operation performed on the first interface element may be used to implement cold start or hot start of the application. If the first operation is used to implement cold start of the application, after the window startup animation ends, the electronic device may display a main page of the first application. If the first operation is used to implement hot start of the application, after the window startup animation ends, the electronic device may display the page displayed before the first application is backgrounded last time.

With reference to the first aspect, in an implementation, the first interface element includes a first foreground layer and a first background layer, the icon startup page includes a second foreground layer and a second background layer, and before the electronic device displays the first startup animation, the method further includes: The electronic device scales up the first foreground layer based on a first proportion, to obtain the second foreground layer; the electronic device scales up the first background layer based on a second proportion, to obtain the second background layer, where a size of the second background layer is the same as a size of the first page; and the electronic device generates the image frame of the first startup animation based on the second foreground layer and the second background layer, where the first startup animation is used to display a process of scaling up the first foreground layer to the second foreground layer and a process of scaling up the first background layer to the second background layer.

It can be learned that the first interface element is split into a foreground layer and a background layer to separately obtain a foreground layer and a background layer in the image frame of the first startup animation. The first startup animation displayed by the electronic device may include a process of separately scaling up the foreground layer and the background layer in the first interface element, thereby avoiding a problem of image distortion that occurs when the first interface element is scaled up as a whole, and also implementing smooth transition from the first interface element to the application page in terms of appearance.

With reference to the first aspect, in an implementation, the first proportion is different from the second proportion.

In other words, in the first startup animation, the first interface element has different scaling-up proportions of the foreground layer and the background layer, so that picture scaling-up effect in the first startup animation is more vivid and rich.

With reference to the first aspect, in an implementation, a width of the first interface element after being scaled up by using the first proportion is equal to a width of the second background layer.

In other words, in the icon startup animation displayed by the electronic device, the foreground layer of the first interface element may always keep a large display size, so that animation display effect is more beautiful.

With reference to the first aspect, in an implementation, the icon startup page includes a second foreground layer and a second background layer, and before the electronic device displays the first startup animation, the method further includes: The electronic device scales up the first interface element based on a third proportion, to obtain the second foreground layer; and the electronic device generates the image frame of the first startup animation based on the second foreground layer and the second background layer, where the second background layer includes a first picture, a size of the first picture is the same as a size of the first page, and the first startup animation is used to display a process of scaling up the first interface element to the second foreground layer and a process in which the first picture appears and is scaled up.

In other words, when the electronic device detects that the user acts on the first interface element to start the first application, the icon startup animation displayed by the electronic device may include a scaling-up process of the first interface element and a scaling-up process of a newly added background image. This avoids a problem of image distortion in the scaling-up process of the first interface element as a whole, and also implements smooth transition from the first interface element to the application page in terms of appearance.

With reference to the first aspect, in an implementation, the first picture is a solid-color background picture of a first color, and the first color includes any one of the following cases: the first color is a preset color, the first color is a color included in the first interface element, or a color value of the first color is a color value of a color included in the first interface element * a coefficient; or the first picture is a gradient background picture that transitions from a second color to a third color, where the second color and/or the third color are/is obtained based on a color included in the first interface element; or the first picture includes a first region, a second region, and a third region, a boundary line between the first region and the second region is an upper boundary of the second foreground layer, a boundary line between the second region and the third region is a lower boundary of the second foreground layer, a color of the first region is a fourth color included in an upper boundary of the first interface element, a color of the second region is a fifth color included in a lower boundary of the first interface element, and a color included in the third region is a gradient color that transitions from the fourth color to the fifth color.

The first picture may be the solid-color background picture or the gradient background picture; or a partial region of the first picture is displayed in a solid color, and a partial region of the first picture is displayed in a gradient color. The solid-color background picture may make a picture of the first startup animation tidier and cleaner. The gradient background picture may make the picture of the first startup animation more rich and vivid. The partial region of the first picture is displayed in the solid color, and the partial region of the first picture is displayed in the gradient color, so that colors of a foreground picture and a background picture of the icon startup page are more harmonious and unified.

With reference to the first aspect, in an implementation, a width of the second foreground layer is equal to a width of the second background layer.

In other words, in the icon startup animation displayed by the electronic device, the first interface element may always keep a large display size, so that animation display effect is more beautiful.

With reference to the first aspect, in an implementation, that the electronic device generates the image frame of the first startup animation based on the second foreground layer and the second background layer specifically includes: The electronic device generates the image frame of the first startup animation by setting animation attributes of the second foreground layer and the second background layer, where animation attributes of image frames displayed at different moments in the first startup animation are different, and the animation attributes include one or more of the following: translating, scaling, cropping, a rounded corner, or transparency.

With reference to the first aspect, in an implementation, before the electronic device displays the first startup animation, the method further includes: The electronic device draws the first page.

In other words, the electronic device may extract drawing of the first page from a plurality of tasks of starting the application in advance. In this way, before the application window is prepared, the electronic device may draw the first page whose content is the same as the content of the application startup page in advance, so that the electronic device can display the startup page animation in parallel with the icon startup animation. This avoids sudden switching from the application icon to the application startup page after the application window is prepared, alleviates a visual jump of a picture, and implements smooth transition from the application icon to the application startup page.

With reference to the first aspect, in an implementation, before the electronic device displays the window startup animation, the method further includes: The electronic device transfers an animation attribute of the second startup animation to the application window of the first application, where the animation attribute includes one or more of the following: translating, scaling, cropping, a rounded corner, or transparency; and the electronic device draws the image frame of the window startup animation based on the animation attribute of the second startup animation.

In this way, in the window startup animation displayed by the electronic device, a scaling-up process of the application window can maintain a scaling-up process of the icon in the icon startup animation, or a scaling-up process of the first page in the startup page animation continues to change.

With reference to the first aspect, in an implementation, the second startup animation stops being displayed when the electronic device displays the window startup animation.

In this way, power consumption of the electronic device can be reduced, and workload of the electronic device when displaying the startup animation can be reduced.

With reference to the first aspect, in an implementation, in a process in which the electronic device displays the first startup animation and the second startup animation, the method further includes: The electronic device detects a second operation, where the second operation is used to exit the first application; and in response to the second operation, the electronic device reversely plays image frames of the displayed first startup animation and the displayed second startup animation, or the electronic device continues to display M frames of images of the first startup animation and the second startup animation, and then reversely plays the image frames of the displayed first startup animation and the displayed second startup animation, where in the M frames of images that are continuously displayed, a playback speed of the M frames of images gradually decreases as time goes by, and a playback speed of first L frames of images that are reversely played gradually increases.

In a process in which the electronic device displays the first startup animation, the electronic device may further detect an operation of interrupting the first startup animation by the user, and reversely plays a displayed image frame, to display an exit animation in a process of exiting the application, or first start playing the first startup animation, and then reversely plays a displayed image frame. In this way, a sudden change of an animation may be avoided after the user interrupts the animation, so that the animation can be smoothly transited, thereby improving animation smoothness.

With reference to the first aspect, in an implementation, in a process in which the electronic device displays the first startup animation, the second startup animation, and the window startup animation, the method further includes: When the electronic device displays a sixth image of the first startup animation, a seventh image of the second startup animation, and an eighth image of the window startup animation, the electronic device detects the second operation, where the second operation is used to exit the first application; and in response to the second operation, the electronic device displays a first exit animation, a second exit animation, and a third exit animation, where the first exit animation includes a process of changing from the sixth image to the first interface element, the second exit animation includes a process of changing from the seventh image to the first image, and the third exit animation includes a process of changing from the eighth image to the third image.

In this way, the electronic device may switch from the startup animation to the exit animation based on an operation of exiting the application by the user, and display a process of scaling down from the application page to the application icon, thereby improving visual experience of the user.

With reference to the first aspect, in an implementation, in a process in which the electronic device displays the first startup animation and the second startup animation, the method further includes: When the electronic device displays a ninth image in the first startup animation and a tenth image in the second startup animation, the electronic device detects a third operation, where the third operation is a sliding operation; when the third operation is an operation of holding the screen and sliding up, the electronic device may display the first exit animation and the second exit animation with the operation of holding the screen and sliding up, where the first exit animation includes a process of changing from the ninth image to the first interface element, and the second exit animation includes a process of changing from the tenth image to the first image; or when the third operation is an operation of holding the screen and sliding down, the electronic device may display, with the operation of holding the screen and sliding down, a process of gradually changing from the ninth image to the icon startup page and a process of gradually changing from the tenth image to the first page.

In this way, the electronic device controls, based on the sliding operation of the user, display of the startup animation, and flexibly changes a display direction of an image frame in a current startup animation based on a sliding direction of the user.

With reference to the first aspect, in an implementation, the first interface element includes any one of the following: an application icon, a service widget, a widget, a notification bar, and a historical task in a multi-task interface.

With reference to the first aspect, in an implementation, the first startup animation and the second startup animation are created by a system unit in the electronic device, and the system unit is different from the first application.

It can be learned that, in the display method provided in this embodiment of this application, before the application window provided by the application is displayed, a system adds the icon startup animation and the startup page animation to fill a gap before the application window is prepared, so that a user does not need to wait for long time to view a response made when the application is started, thereby visually speeding up application startup.

According to a second aspect, an embodiment of this application provides an electronic device, including a memory, one or more processors, and one or more programs. When the one or more processors execute the one or more programs, the electronic device is enabled to implement the method according to any one of the first aspect or the implementations of the first aspect.

According to a third aspect, an embodiment of this application provides a computer-readable storage medium, including instructions. When the instructions are run on an electronic device, the electronic device is enabled to perform the method according to any one of the first aspect or the implementations of the first aspect.

According to a fourth aspect, an embodiment of this application provides a computer program product. When the computer program product runs on a computer, the computer is enabled to perform the method according to any one of the first aspect or the implementations of the first aspect.

### BRIEF DESCRIPTION OF DRAWINGS

FIG. 1 is a diagram of an application startup page according to an embodiment of this application;
FIG. 2A to FIG. 2G are some user interfaces related to displaying a startup animation when an electronic device 100 starts an application according to an embodiment of this application;
FIG. 3A to FIG. 3I are some other user interfaces related to displaying a startup animation when an electronic device 100 starts an application according to an embodiment of this application;
FIG. 4 is a diagram of an icon startup page generated by an electronic device 100 according to an embodiment of this application;
FIG. 5 is a diagram of a layer relationship between an icon layer, a startup page layer, and an application window layer according to an embodiment of this application;
FIG. 6 is a diagram of boundaries of a plurality of frames of images related to a startup animation according to an embodiment of this application;
FIG. 7 is a diagram of a plurality of frames of images of an icon startup animation, a startup page animation, and a window startup animation according to an embodiment of this application;
FIG. 8 is a diagram of an image frame that corresponds to a moment T4 and that is of an icon startup animation generated by an electronic device 100 according to an embodiment of this application;
FIG. 9A to FIG. 9D are related user interfaces used when an electronic device 100 starts an application by using a service widget according to an embodiment of this application;
FIG. 10A to FIG. 10G are user interfaces displayed by an electronic device 100 when the electronic device 100 detects an operation of exiting an application by a user after completing starting the application;
FIG. 11 is a diagram of image frames that respectively correspond to moments T10 to T16 and that are of an icon exit animation and a window exit animation generated by an electronic device 100 according to an embodiment of this application;
FIG. 12A to FIG. 12E and FIG. 13A to FIG. 13E are related user interfaces used when an electronic device 100 detects an operation of exiting an application by a user in a process of displaying a startup animation according to an embodiment of this application;
FIG. 14 is a block diagram of a software structure of an electronic device 100 according to an embodiment of this application;
FIG. 15 is a diagram of a spring curve according to an embodiment of this application;
FIG. 16 is a diagram of interaction between internal modules of an electronic device 100 that displays a startup animation when an application is started according to an embodiment of this application;
FIG. 17 is a schematic flowchart of a display method according to an embodiment of this application;
FIG. 18 is a diagram of generating an icon startup page according to an embodiment of this application;
FIG. 19A and FIG. 19B are a schematic flowchart of generating an icon startup page by using a color of a first interface element according to an embodiment of this application;
FIG. 20 is a diagram of four endpoints for extracting a color of a first interface element according to an embodiment of this application;
FIG. 21 to FIG. 25 are a plurality of diagrams of an icon startup page according to an embodiment of this application;
FIG. 26 is a diagram of time sequence comparison between an application startup manner according to an embodiment of this application and an application startup manner;
FIG. 27 is a diagram of interaction between internal modules of an electronic device 100 that displays an exit animation after being interrupted by a user in an application startup process according to an embodiment of this application;
FIG. 28 is a schematic flowchart of another display method according to an embodiment of this application; and
FIG. 29 is a diagram of a hardware structure of an electronic device 100 according to an embodiment of this application.

### DESCRIPTION OF EMBODIMENTS

The technical solutions according to embodiments of this application are clearly and completely described in the following with reference to the accompanying drawings. In the descriptions of embodiments of this application, "/" indicates or unless otherwise specified. For example, A/B may indicate A or B. In this specification, "and/or" describes only an association relationship between associated objects, and indicates that three relationships may exist. For example, A and/or B may indicate the following three cases: Only A exists, both A and B exist, and only B exists. In addition, in the descriptions of embodiments of this application, "a plurality of' means two or more than two.

In the following descriptions, the terms "first" and "second" are merely intended for a purpose of description, and shall not be interpreted as an implication or implication of relative importance or implicit indication of a quantity of indicated technical features. Therefore, a feature limited by "first" and "second" may explicitly or implicitly include one or more features. In the descriptions of embodiments of this application, unless otherwise specified, "a plurality of" means two or more.

A term "user interface (user interface, UI)" in the following embodiments of this application is a medium interface for interaction and information exchange between an application or an operating system and a user, and implements conversion between an internal form of information and a form acceptable to the user. The user interface is source code written in a specific computer language such as Java or an extensible markup language (extensible markup language, XML). Interface source code is parsed and rendered on an electronic device, and is finally presented as content that can be identified by the user. A frequently-used representation form of the user interface is a graphical user interface (graphic user interface, GUI), and is a user interface that is displayed in a graphical manner and that is related to a computer operation. The user interface may be a visual interface element like a text, an icon, a button, a menu, a tab, a text box, a dialog box, a status bar, a navigation bar, or a widget that is displayed on a display of the electronic device.

An embodiment of this application provides a display method. In the display method, a first operation performed by a user on a first interface element may be detected, where the first operation is used to start a first application; an icon startup animation and a startup page animation are displayed, where the icon startup animation includes a process of gradually changing from the first interface element to an icon startup page, the startup page animation includes a process of gradually changing from a first image to a first page, and content of the first page may include content of the first image; and a second image of the startup page animation is displayed at a first moment, and a window startup animation may be displayed at a second moment, where the window startup animation includes a process of gradually changing from a third image to a second page of the first application, content of the third image may include content of the second image, the content of the first page is the same as content of the second page, and the content of the second page may include the content of the third image.

The icon startup animation includes a change process in which picture transparency increases, and/or the startup page animation includes a change process in which picture transparency decreases.

For example, the first interface element may be an interface element such as an application icon, a service widget, a widget, a notification bar, or a historical task in a multi-task interface.

In this embodiment of this application, there may be the following two cases in application startup.

### (1) Application cold start

For example, if the electronic device detects an operation of starting an application, and there is no process of the application in a background, a system re-creates a new process and allocates the new process to the application. This startup manner is referred to as cold start.

For example, if the application is started for the first time after being installed, or if the application is started after background data of the application is cleared, the application is cold started.

### (2) Application hot start

For example, if the electronic device detects an operation of starting an application, and a process of the application exists in the background, the system does not need to re-create a new process and allocate the new process to the application. This startup manner is referred to as hot start.

For example, when the application has been started, the electronic device returns to a desktop or another application by an operation performed by the user on a key such as a return key or a home key for duration not exceeding preset duration, the application is started again. This startup manner is hot start of the application.

Display content of the first page may be the same as display content of an application startup page of the first application. The application startup page is an initial page displayed after the application is started. The page may have the following cases.

Case 1: The application startup page is preset by the application in advance.

An application developer may preset, in advance, an application startup page picture displayed when the application is started. In this way, when the application is started, the electronic device may directly obtain the application startup page picture from a resource corresponding to the application, and use the application startup page picture as the first page, to play the startup page animation.

In this embodiment of this application, the application startup page picture preset in advance may be consistent with a first frame picture displayed after the application is started.

For example, the resource corresponding to the application may be obtained by using a resource identifier corresponding to the application and a PackageMangerService interface.

Case 2: The application startup page is drawn based on related information of the application.

The application startup page may be drawn by the electronic device based on the related information of the application.

The related information may include an application icon, an application name, an application slogan, a splashscreen (splashscreen) background color, an application brand picture, and the like. In this way, when the application is started, the electronic device may obtain the related information from the resource corresponding to the application, and then draw the first page according to a preset rule, to play the startup page animation.

The preset rule may indicate a location, a size, a layout, and the like of the related information that is drawn on the page.

In this embodiment of this application, the related information and the preset rule may be consistent with related information and a preset rule in content of a first frame displayed after the application is started.

For example, the related information of the application may be obtained by using a resource label such as Window_windowSplashScreenBrandingImage, Window_windowSplashScreen Background, Window_windowSplashScreenIconBackgroundColor, or Window_windowSplashscreen Content, and then location information corresponding to each element is obtained by reading a corresponding splash_screen_view.xml file, to draw the first page based on the related information of the application.

Case 3: The application startup page is a main page screenshot that is displayed by default when the application is started for the first time.

Some applications may not be preset with application startup page pictures in advance, or the related information of the application cannot be obtained to draw the application startup page. Therefore, after starting the application for the first time, the electronic device may save the main page screenshot that is displayed by default when the application is started for the first time, and use the main page screenshot as the first page. In this way, when the application is cold started next time, the startup page animation may be played based on the main page screenshot, and animation effect of gradually transitioning from an application icon to a main page of the application is displayed.

In this embodiment of this application, the main page screenshot may be consistent with the first frame picture displayed after the application is started.

Case 4: The application startup page is a page screenshot of the application before the application is backgrounded last time.

When the application is running in a background, if an operation of starting the application by the user is detected, after the electronic device hot starts the application, the electronic device displays a page displayed before the application is backgrounded last time. Therefore, the application startup page may also be the page screenshot before the application is backgrounded last time. After detecting the operation of starting the application by the user, the electronic device may gradually display a page that is displayed before the application is backgrounded last time and that transitions from the application icon.

For example, each time the application exits, a screenshot of the application interface may be taken, and screenshot information is fixedly stored in a specified storage directory. In an application hot start scenario, if the first page needs to be obtained, a screenshot in the specified storage directory may be accessed by using an interface provided by PackageManagerService, and the screenshot is used as the first page, to implement drawing of the first page. A manner of obtaining the main page screenshot is not described subsequently.

In this embodiment of this application, the page screenshot may be consistent with the first frame picture displayed after the application is started.

In some implementations, the foregoing cases 1 to 3 may be application startup pages used when the application is cold started, and the case 4 may be an application startup page used when the application is hot started. It may be understood that the foregoing cases 1 to 3 may alternatively be application startup pages used when the application is hot started, and the foregoing case 4 may alternatively be an application startup page used when the application is cold started. This is not limited in this embodiment of this application.

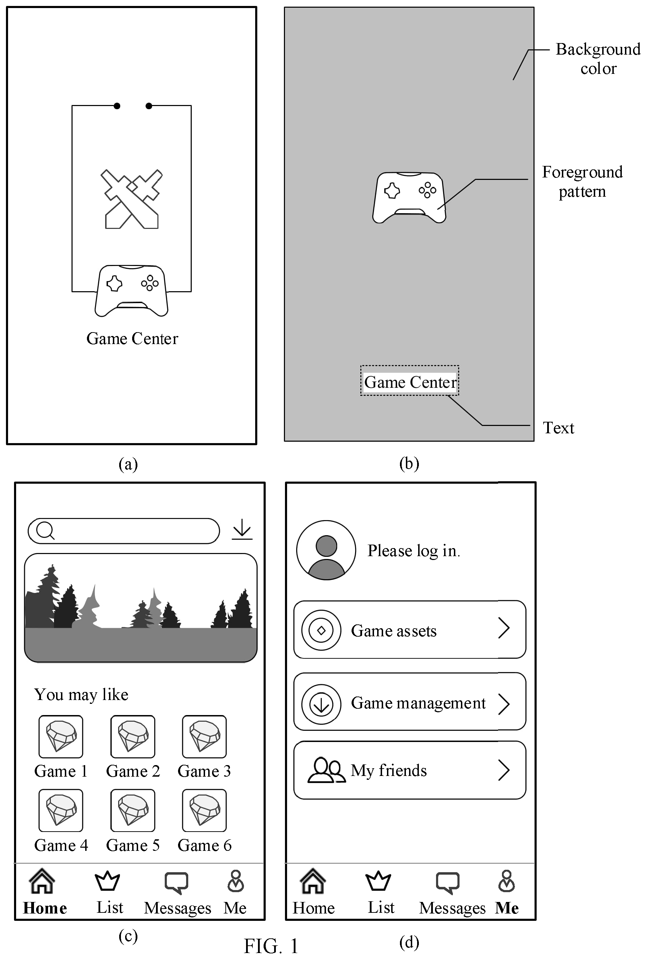

**For example, in** **FIG. 1****, an example in which a started application is "Game Center" is used to show diagrams of application startup pages in the foregoing plurality of cases.** Specifically:
An application startup page shown in (a) in FIG. 1 may be an implementation of the application startup page picture preset for the application in the foregoing case 1.

An application startup page shown in (b) in FIG. 1 may be an implementation of the application startup page drawn by the electronic device based on the related information of the application in the foregoing case 2. For example, a background color of the application startup page may be determined based on a color of the application icon, a foreground pattern of the application startup page may be determined based on a pattern of the application icon, and a text displayed at a bottom of the application startup page may be determined based on a name of the application.

An application startup page shown in (c) in FIG. 1 may be an implementation of the main page screenshot that is displayed by default when the application is started for the first time in the foregoing case 3.

An application startup page shown in (d) in FIG. 1 may be an implementation of the page screenshot before the application is backgrounded last time in the foregoing case 4.

It may be understood that FIG. 1 is merely an example, and does not constitute a limitation on this embodiment of this application. In addition, in another embodiment of this application, the application startup page may further have another case. The application startup page is not limited in this embodiment of this application.

It can be learned that, because the window startup animation is displayed after the application window is drawn, in the method, before the window startup animation is displayed, the icon startup animation may be enabled for transition, to avoid a case in which the user needs to waiting for excessively long time after starting the application to view a response made by the electronic device. In addition, to avoid that switching between the icon startup animation and the window startup animation is excessively abrupt, before the window startup animation is displayed, the first page whose content is the same as that of the application startup page may be first drawn, and a process in which the first page gradually appears and is gradually scaled up is displayed. In this way, animation effect of gradually transitioning from the interface element to the application startup page is achieved, and visual experience of the user is improved.

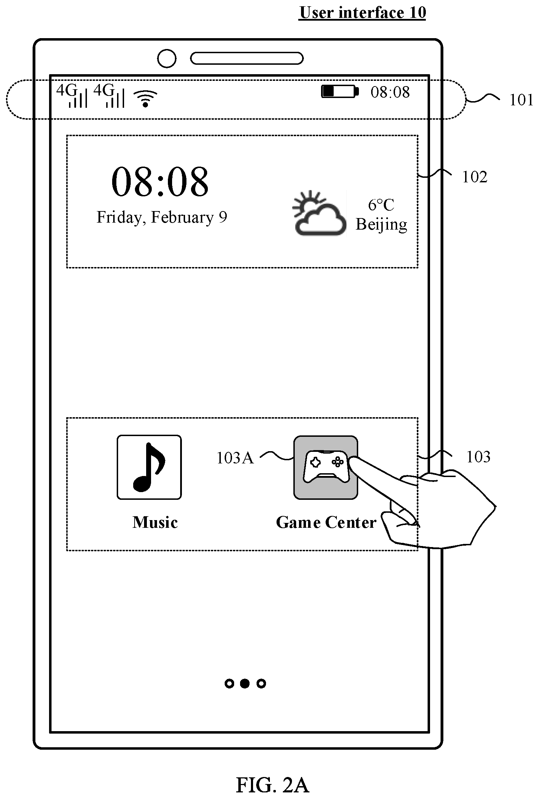

The following uses an example in which the application is a game center application, the first interface element is an application icon, and the application startup page is a main page screenshot that is displayed by default when an application is started for the first time, to describe some user interfaces related to displaying a startup animation when an electronic device 100 starts the application with reference to FIG. 2A to FIG. 2G. The startup animation includes an icon startup animation, a startup page animation, and a window startup animation.

FIG. 2A shows an example user interface 10 used for an application menu on the electronic device 100.

As shown in FIG. 2A, the user interface 10 may include a status bar 101, a time and weather indicator 102, and one or more application icons 103. The status bar 101 may include one or more signal strength indicators of a mobile communication signal, one or more signal strength indicators of a wireless fidelity (wireless fidelity, Wi-Fi) signal, a battery status indicator, and a time indicator. The time and weather indicator 102 may indicate current time and a weather type. The one or more application icons 103 may be used to display one or more application icons. The one or more application icons 103 may include an application icon 103A. The application icon 103A may be used to trigger startup of the game center application.

For example, when the electronic device 100 detects a user operation performed on the application icon 103A, for example, a tap operation, in response to the operation, the electronic device 100 may start the game center application, and display the startup animation in FIG. 2A to FIG. 2G.

It may be understood that, in FIG. 2A to FIG. 2G, the game center application is used as an example to show a related user interface displayed by the electronic device 100 when the application is started. In another embodiment of this application, any other application may be used as an example, and an animation displayed when the application is started is similar. The application started by the user is not limited in this embodiment of this application.

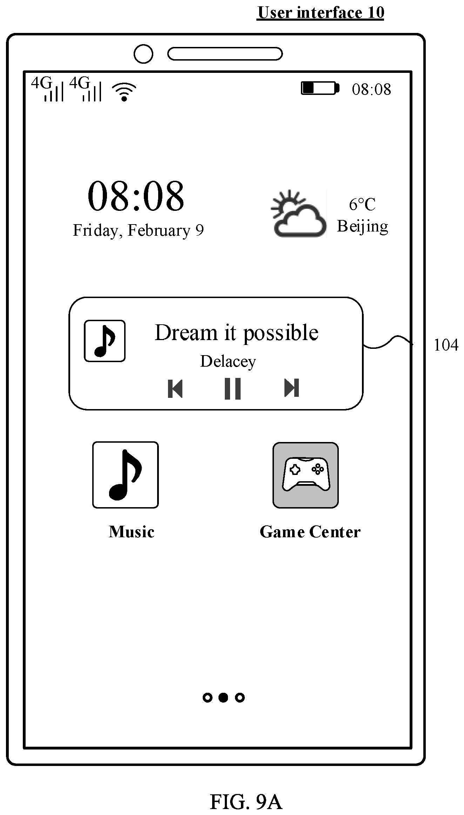

For example, in addition to starting the application through the detected operation performed on the application icon, the electronic device 100 may further detect an operation performed on another interface element, and trigger to start the application. For descriptions of the another interface element, refer to related content in FIG. 9A to FIG. 9D below. Details are not described herein.

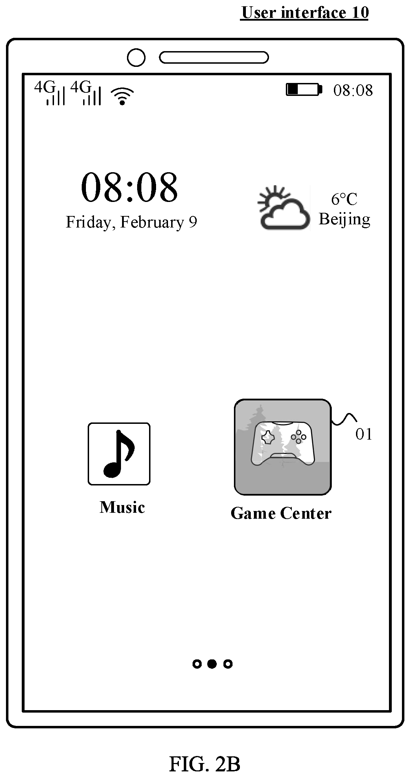

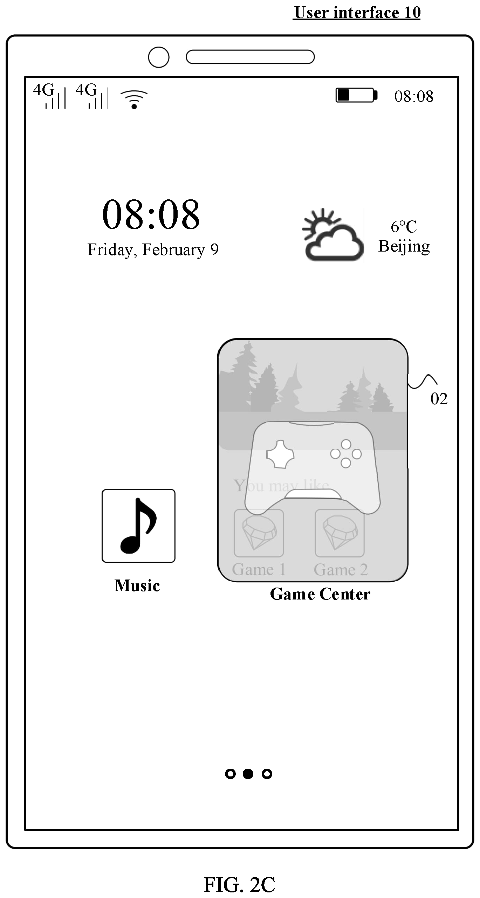

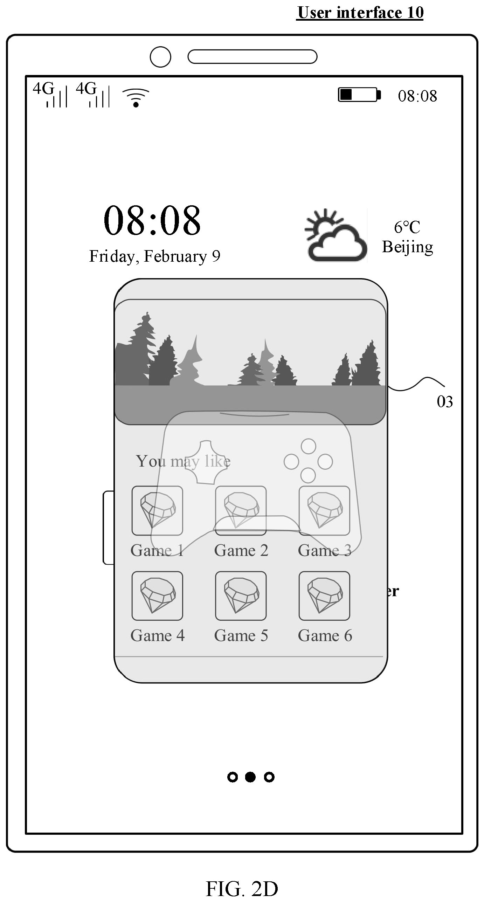

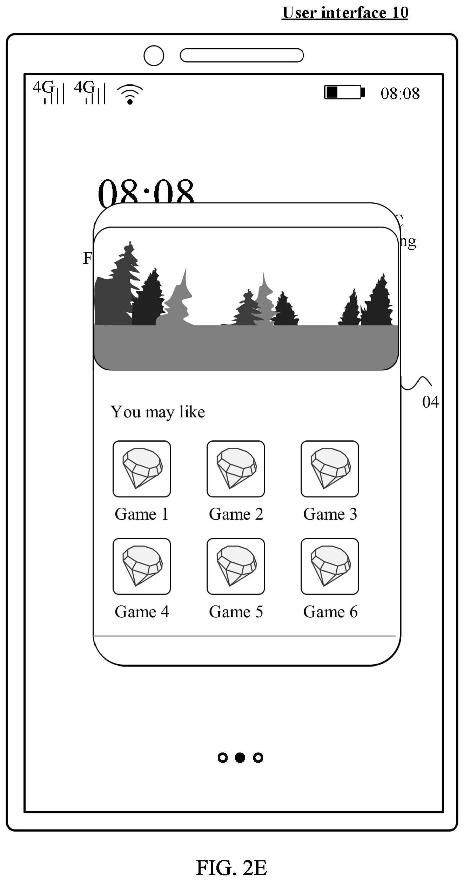

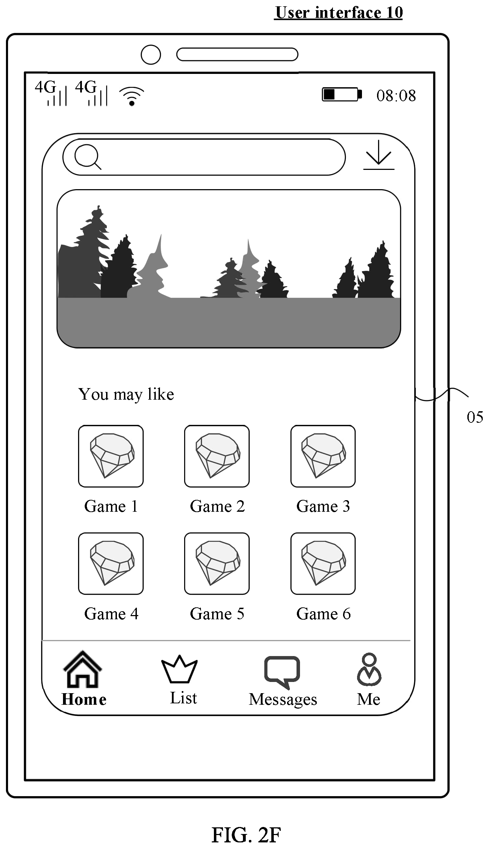

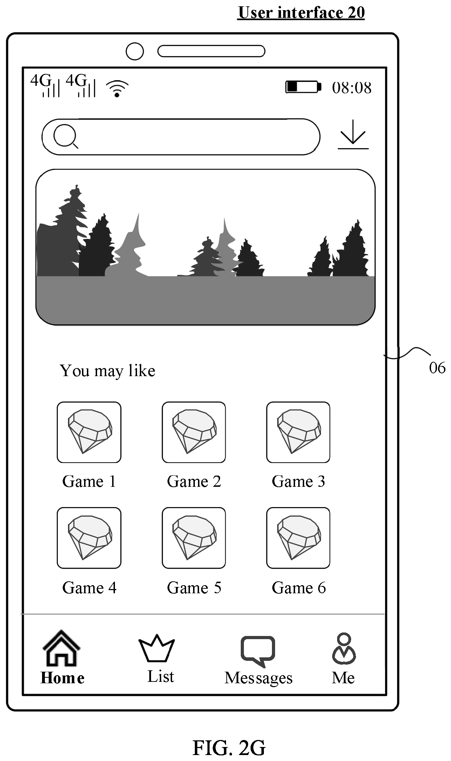

As shown in FIG. 2A to FIG. 2G, the startup animation may be displayed as a switching process from the application icon 103A shown in FIG. 2A to an image 01 shown in FIG. 2B, to an image 02 shown in FIG. 2C, to an image 03 shown in FIG. 2D, to an image 04 shown in FIG. 2E, to an image 05 shown in FIG. 2F, and to an image 06 shown in FIG. 2G.

It can be learned from the startup animation shown in FIG. 2A to FIG. 2G that, the startup animation shows a process in which the application icon is scaled up from a size of an icon to a size of an application page. In addition, in the process of scaling up the application icon, the content of the first page is further scaled up in parallel with scaling up of the application icon, and in the process of scaling up the application icon and the first page, the content of the application startup page gradually appears. This implements smooth transition from the application icon to the application startup page, followed by final transition in which the application startup page continues to be scaled up to the size of the application page, to complete application startup.

For example, in internal implementation, after the electronic device 100 detects the user operation of starting the application shown in FIG. 2A, the electronic device 100 may trigger startup of the application, start to prepare an application window, draw the application startup page, and then display animation effect of parallel scaling up the application icon and the application startup page, that is, the icon startup animation and the startup page animation. Then, after preparing the application window, the electronic device 100 displays a window startup animation of gradual scaling up of the application window, and a scaling-up trend of the application window continues to increase with a scaling-up trend of the icon startup animation or the startup page animation, to ensure transition from the icon startup animation or the startup page animation to the window startup animation.

In a process in which the electronic device 100 displays the startup animation, the icon startup animation and the startup page animation may be superimposed and displayed. In addition, in a process of playing the startup animation, picture transparency of the icon startup animation may gradually increase, and/or in a process of gradually scaling up the first page, picture transparency of the startup page animation may gradually decrease.

Further, if the application window is prepared after the image 04 shown in FIG. 2E is displayed, images shown in FIG. 2F to FIG. 2G may include the window startup animation corresponding to the application window. The window startup animation may include a process in which the content of the application startup page continues to be scaled up. Picture content of the startup page animation may be consistent with that of the window startup animation.

Because the picture content of the window startup animation is consistent with that of the startup page animation, after the window startup animation is displayed, smooth transition from the startup page animation to the window startup animation can be implemented, and an animation process in which a part or all of content of the application startup page is gradually scaled up to the size of the application page is displayed.

After the application window is prepared, the electronic device 100 may directly switch the startup page animation to the window startup animation, or the electronic device 100 may continue to superimpose and display the window startup animation above the icon startup animation and the startup page animation.

In other words, the icon startup animation is a transition animation displayed in a process in which the electronic device 100 prepares the application window, to avoid that the user waits for the electronic device 100 to prepare the application window after starting the application. In this way, a visual experience of "tap to respond" can be created for the user, thereby visually speeding up application startup for the user. In addition, the first page may alternatively be drawn by the electronic device 100 in advance before the application window is prepared, so that the electronic device can display the startup page animation in parallel with the icon startup animation. This avoids sudden switching from the application icon to the application startup page after the application window is prepared, alleviates a visual jump of a picture, and implements smooth transition from the application icon to the application startup page.

It may be understood that the startup animation displayed by the electronic device 100 is not limited to the plurality of frames of images shown in FIG. 2A to FIG. 2G. When the electronic device 100 starts the application, the startup animation displayed by the electronic device 100 may further include more or fewer frames of images.

In this embodiment of this application, when the electronic device 100 displays the window startup animation, a page displayed at the beginning may be different from a page displayed when the application is started, that is, a full-screen page is displayed. For example, if a game-related promotion animation is first displayed when the "Game Center" application is started, and then a home page is displayed, in the window startup animation in which the application window is gradually scaled up, a related picture of the promotion animation may be first displayed in the application window. After the promotion animation is played, the home page is displayed in the application window. In this case, the application startup page may be a first frame picture of the promotion animation.

In addition, it should be noted that the electronic device 100 displays the window startup animation after the application window is prepared. Therefore, an occasion in which the electronic device 100 displays the window startup animation is not limited to the foregoing example in which the electronic device 100 displays the window startup animation after the electronic device 100 displays the image 04 shown in FIG. 2E. For example, if the electronic device 100 completes drawing of the application window after displaying the image 03 shown in FIG. 2D, the image 04 shown in FIG. 2E may be drawn by using a first frame of image in the window startup animation, the image 05 shown in FIG. 2F may be drawn by using a second frame of image in the window startup animation, and the image 06 shown in FIG. 2G may be drawn by using a third frame of image in the window startup animation.

In this embodiment of this application, it can be learned from FIG. 2A to FIG. 2D that, the icon startup animation displays a process in which a foreground layer and a background layer of the application icon 103A shown in FIG. 2A are separately scaled up. The foreground layer of the application icon 103A is scaled up proportionally, and the background layer of the application icon 103A is gradually scaled up from a quadrilateral whose width is equal to a height to a quadrilateral whose width is less than a height.

It can be learned that the icon startup animation shown in FIG. 2A to FIG. 2G is applicable to a layered icon whose application icon can be split into a foreground layer and a background layer.

In another possible implementation, in the icon startup animation displayed by the electronic device 100, the foreground layer and the background layer of the application icon may alternatively be kept as a whole for proportional scaling up.

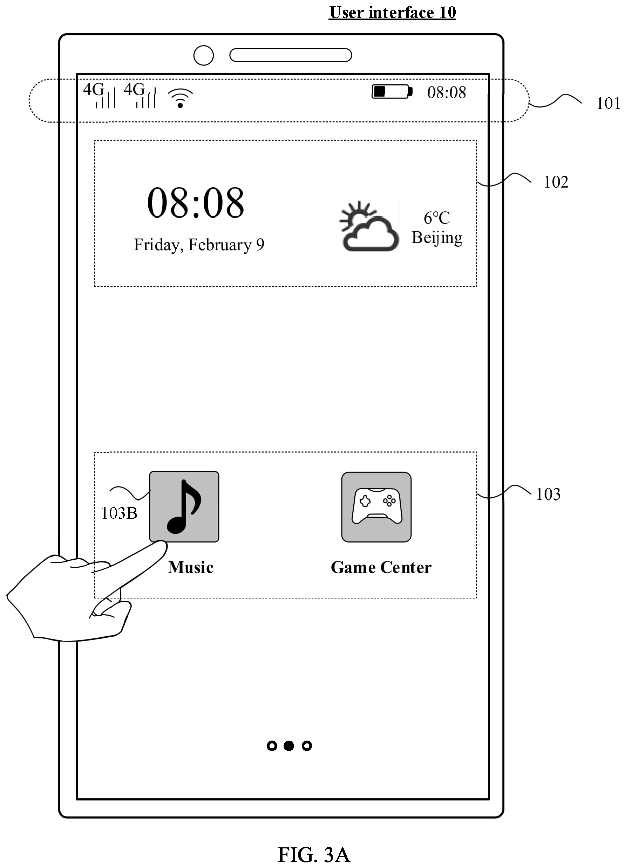

The following uses an example in which the application is a music application, the first interface element is an application icon, and the application startup page is an application startup page picture preset by the application, to describe some other user interfaces related to displaying a startup animation when the electronic device 100 starts the application with reference to FIG. 3A to FIG. 3I.

FIG. 3A shows an example user interface 10 used for an application menu on the electronic device 100. For specific descriptions of the user interface 10, refer to related content in FIG. 2A. Details are not described herein again.

As shown in FIG. 3A, one or more application icons 103 in the user interface 10 may further include an application icon 103B. The application icon 103B may be used to trigger startup of the music application.

For example, when the electronic device 100 detects a user operation performed on the application icon 103B, for example, a tap operation, in response to the operation, the electronic device 100 may start the music application, and display the startup animation in FIG. 3A to FIG. 3G.

It may be understood that, in FIG. 3A to FIG. 3G, the music application is used as an example to show a related user interface displayed by the electronic device 100 when the application is started. In another embodiment of this application, any other application may be used as an example, and an animation displayed when the application is started is similar. The application started by the user is not limited in this embodiment of this application.

For example, in addition to starting the application through the detected operation performed on the application icon, the electronic device 100 may further detect an operation performed on another interface element, and trigger to start the application. For descriptions of the another interface element, refer to related content in FIG. 9A to FIG. 9D below. Details are not described herein.

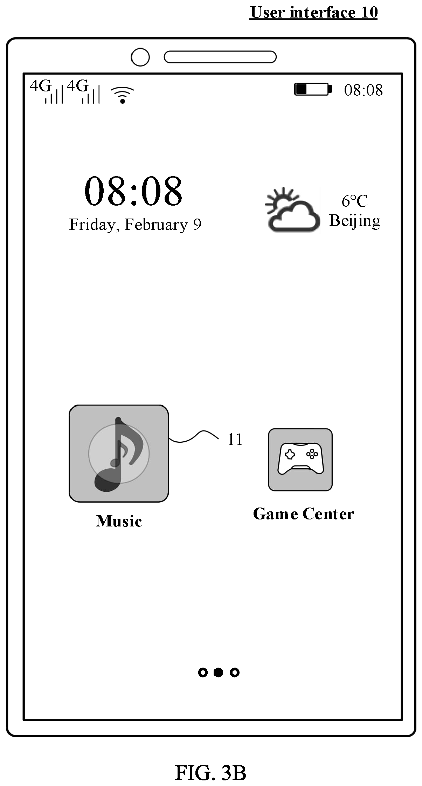

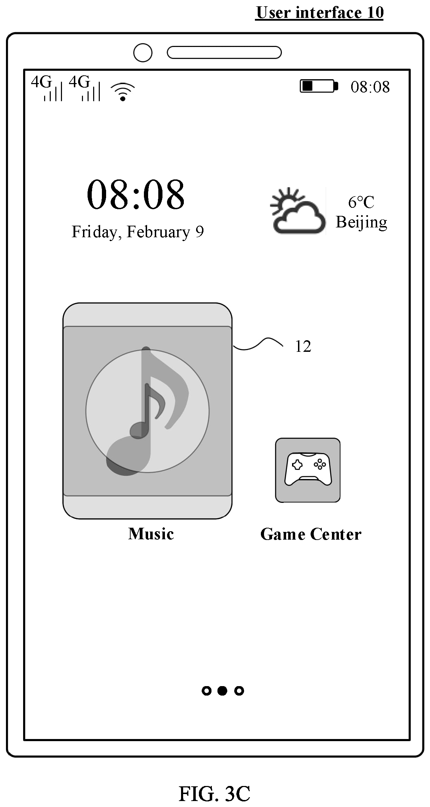

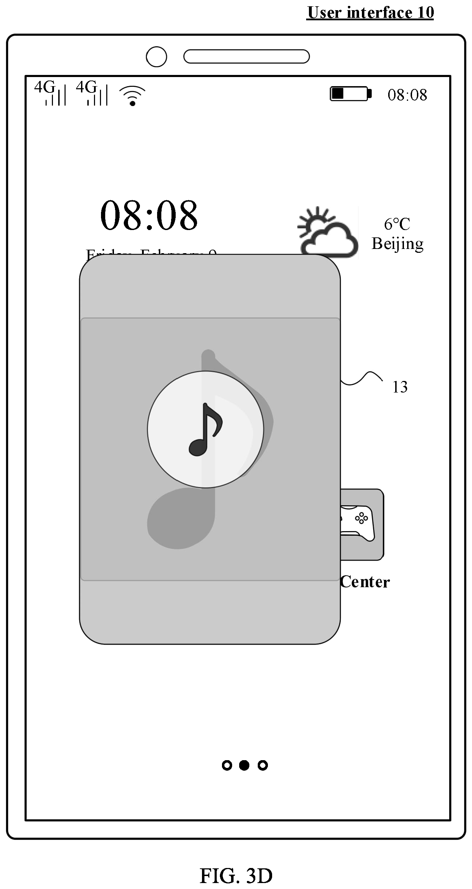

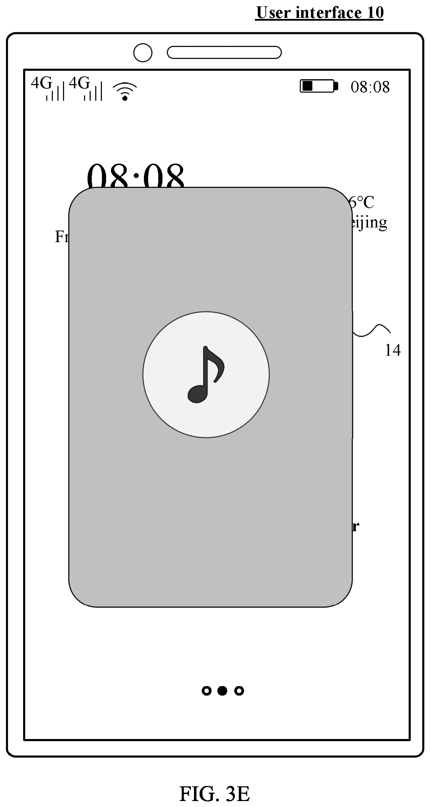

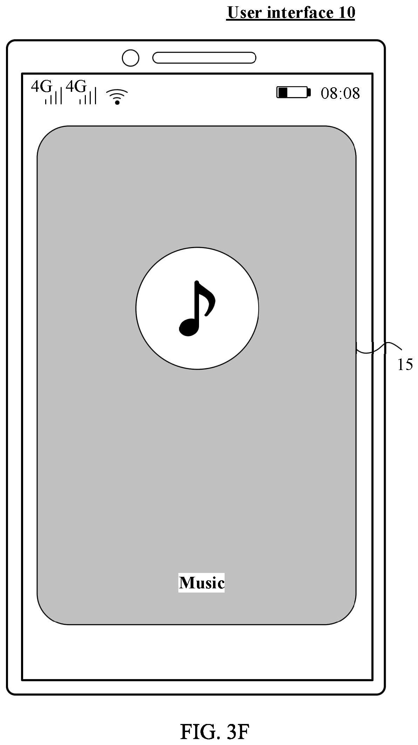

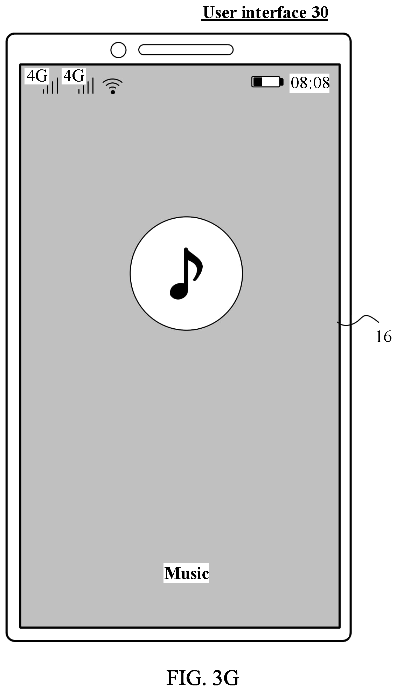

As shown in FIG. 3A to FIG. 3G, the startup animation may be displayed as a switching process from the application icon 103B shown in FIG. 3A to an image 11 shown in FIG. 3B, to an image 12 shown in FIG. 3C, to an image 13 shown in FIG. 3D, to an image 14 shown in FIG. 3E, to an image 15 shown in FIG. 3F, and to an image 16 shown in FIG. 3G.

It can be learned from the startup animation shown in FIG. 3A to FIG. 3G that, the startup animation shows a process in which the application icon is gradually scaled up from a size of an icon to a size of an application page. In addition, in the process of scaling up the application icon, a part or all of content of a first page is further scaled up in parallel with scaling up of the application icon, and in the process of scaling up the application icon and the first page, an application icon gradually disappears, and an application startup page gradually appears. This implements smooth transition from the application icon to the application startup page, followed by final transition in which the application startup page continues to be scaled up to the size of the application page, to complete application startup.

In internal implementation, after the electronic device 100 detects the user operation of starting the application shown in FIG. 3A, the electronic device 100 may trigger startup of the application, start to prepare an application window, draw the application startup page, and then display animation effect of parallel scaling up the application icon and the application startup page, that is, the icon startup animation and the startup page animation. Then, after preparing the application window, the electronic device 100 displays a window startup animation of gradual scaling up of the application window, and a scaling-up trend of the application window continues to increase with a scaling-up trend of the icon startup animation or the startup page animation, to ensure transition from the icon startup animation or the startup page animation to the window startup animation.

For example, in a process in which the electronic device 100 displays the startup animation, the icon startup animation and the startup page animation may be superimposed and displayed. In addition, in a process of playing the startup animation, picture transparency of the icon startup animation may gradually increase, and/or picture transparency of the startup page animation may gradually decrease.

Further, if the application window is prepared after the image 13 shown in FIG. 3D is displayed, images shown in FIG. 3E to FIG. 3G may include the window startup animation corresponding to the application window. The window startup animation may include a process in which the application startup page continues to be scaled up. Picture content of the startup page animation may be consistent with that of the window startup animation.

Because the picture content of the window startup animation is consistent with that of the startup page animation, after the window startup animation is displayed, smooth transition from the startup page animation to the window startup animation can be implemented, and an animation process in which the application startup page is gradually scaled up to the size of the application page is displayed.

For example, after the application window is prepared, the electronic device 100 may directly switch the startup page animation to the window startup animation, or the electronic device 100 may continue to superimpose and display the window startup animation above the icon startup animation and the startup page animation.

It may be understood that the startup animation displayed by the electronic device 100 is not limited to the plurality of frames of images shown in FIG. 3A to FIG. 3G. When the electronic device 100 starts the application, the startup animation displayed by the electronic device 100 may further include more or fewer frames of images.

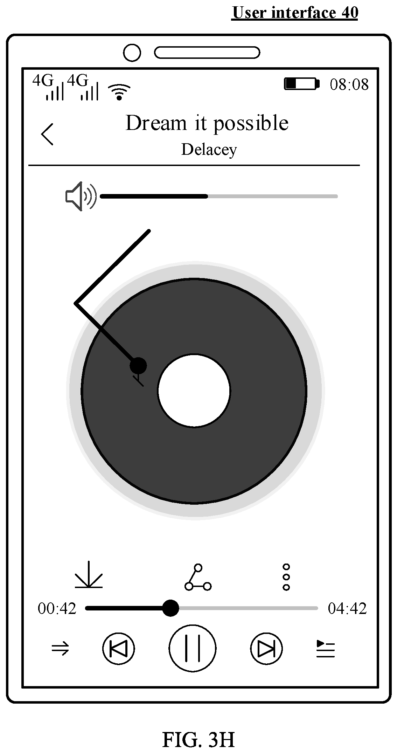

Further, because the image 16 shown in FIG. 3G is not a main page of the application, after the electronic device 100 displays FIG. 3G, the electronic device 100 may display a user interface 40 shown in FIG. 3H. The user interface 40 may be used to display the main page of the music application, for example, a music playback page.

It may be understood that, in the startup page animation shown in FIG. 3A to FIG. 3G, the application startup page is not the main page of the music application. Therefore, after the application window is drawn, content of the application window is switched from the application startup page to the main page, and the application is finally started. In this case, in a process of displaying the window startup animation, if the electronic device 100 has drawn the main page of the music application, that is, the user interface 40 shown in FIG. 3H, in the process of displaying the window startup animation, that is, in a process of scaling up the application window, the electronic device 100 may update the application startup page displayed in the application window to the main page, and display a process in which the main page continues to be scaled up to the size of the application page.

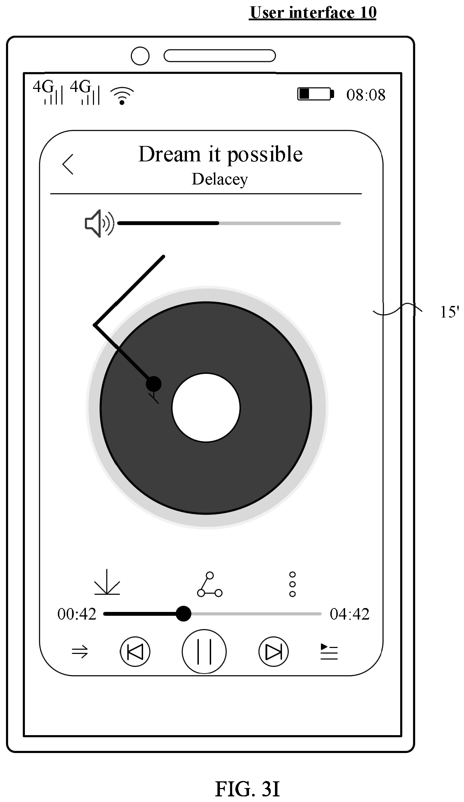

For example, it is assumed that the image 14 shown in FIG. 3E is one frame of image in the window startup animation. If the electronic device 100 draws the main page of the application after displaying the image 14 shown in FIG. 3E, the electronic device 100 may switch display content of a currently scaled up application window to the main page of the application. In other words, the electronic device 100 may display an image 15' shown in FIG. 3I, and continue to display a process of scaling up the main page until the size of the application window is scaled up to a size of a display region of the electronic device 100, for example, display the user interface 40 shown in FIG. 3H.

In addition, it can be learned from FIG. 3A to FIG. 3D that the icon startup animation displays a scaling-up process of the application icon 103B shown in FIG. 3A, and a process in which a background layer below a layer in which the application icon 103B is located emerges from nothing and is gradually scaled up.

It can be learned that the icon startup animation shown in FIG. 3A to FIG. 3G is applicable to a non-layered icon whose application icon cannot be split into a foreground layer and a background layer.

In some implementations, in the icon startup animation shown in FIG. 3A to FIG. 3D, a transparency transition animation may further exist at the background layer that emerges from nothing. For example, in a switching process from the image 12 shown in FIG. 3C to the image 13 shown in FIG. 3D, transparency of the background layer in the icon startup animation gradually decreases. In this way, after the user taps the icon to start the application, the user can not only see the startup page animation that gradually emerges from nothing, but also see that the icon is gradually scaled up, a background board that is gradually scaled up is gradually displayed on the background layer of the icon, and the background board gradually transitions to a shape of the application window. This can avoid a sudden change of the background layer during playback of the icon startup animation, and improve visual effect.

For example, when the electronic device 100 starts the application, if the application icon on which the user performs an operation, for example, the application icon 103A shown in FIG. 2A, may be split into a foreground layer and a background layer, and the icon startup animation displayed by the electronic device 100 may be an animation process in which the foreground layer and the background layer of the icon shown in FIG. 2A to FIG. 2D are separately scaled up. When the electronic device 100 starts the application, if the application icon on which the user performs an operation, for example, the application icon 103B shown in FIG. 3A, may not be split into a foreground layer and a background layer, and the icon startup animation displayed by the electronic device 100 may be an animation process in which the icon shown in FIG. 3A to FIG. 3D and a newly added background layer are separately scaled up.

It may be understood that when the electronic device 1000 starts the application, if the application icon on which the user performs an operation may be split into the foreground layer and the foreground layer, the electronic device 100 may alternatively display the icon startup animation in which the icon and the newly added background layer are separately scaled up. This is not limited in this embodiment of this application.

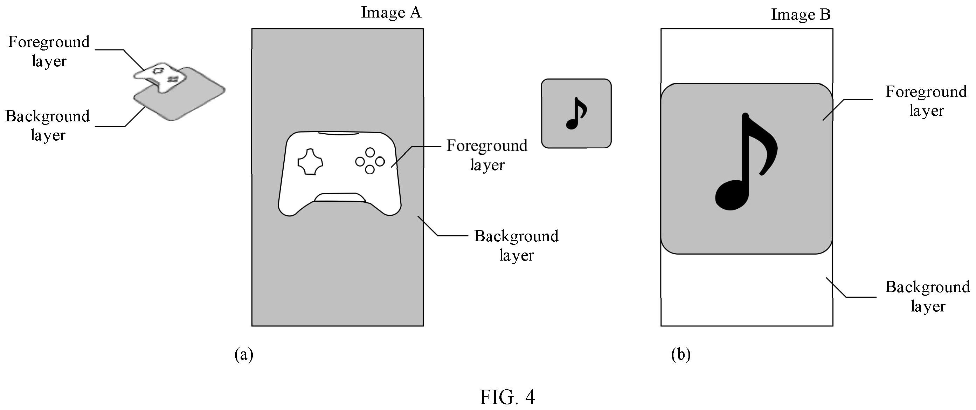

For ease of understanding the icon startup animation, the startup page animation, and the window startup animation, the following describes related principles related to the icon startup animation, the startup page animation, and the window startup animation with reference to FIG. 4, FIG. 5, FIG. 6, FIG. 7, and FIG. 8.

In short, an implementation principle of the icon startup animation is: creating an icon startup page based on an application icon, and creating a plurality of frames of images of the icon startup animation by setting an animation attribute (translating, scaling, transparency, round corner, cropping, and the like) of the icon startup page.

Similarly, an implementation principle of the startup page animation is: obtaining a first page, and creating a plurality of frames of images of the startup page animation by setting an animation attribute of the first page.

FIG. 4 is a diagram of an icon startup page generated by the electronic device 100.

For example, if the application icon is a layered icon, that is, the application icon may be split into a foreground layer and a background layer, the icon startup page created by the electronic device 100 may be an image A shown in (a) in FIG. 4. A foreground layer of the image A is obtained based on the foreground layer of the application icon, where the foreground layer of the application icon may be scaled up to obtain the foreground layer of the image A. A background layer of the image A is obtained based on the background layer of the application icon, where the background layer of the application icon may be scaled up and cropped to obtain the background layer of the image A. A size of the image A is the same as a size of an application page displayed after the electronic device 100 completes application startup.

For example, a scaling-up multiple of the foreground layer of the application icon may be determined in the following manner: The scaling-up multiple may enable a width of the application icon to be the same as a width of the background layer of the image A or a length of the application icon to be the same as a length of the background layer of the image A after the application icon is scaled up by using the scaling-up multiple.

In this embodiment of this application, the width of the foreground layer of the image A may be less than or equal to the width of the background layer of the image A.

In this way, in a process in which the electronic device 100 displays the icon startup animation, the foreground layer of the application icon can keep a large size, and better visual experience can be provided for the user.

For example, if the application icon is a non-layered image, that is, the application icon cannot be split, the icon startup page created by the electronic device 100 may be an image B shown in (b) in FIG. 4. A foreground layer of the image B is the application icon that is scaled up by using a specific multiple, and a background layer of the image B is a preset image. A size of the image B is the same as a size of the application page displayed after the electronic device 100 completes application startup.

For example, in the foreground layer of the image B, the scaling-up multiple of the application icon may be determined based on a width of the background layer of the image B. The scaling-up multiple may enable the width of the application icon to be the same as the width of the background layer of the image B after the application icon is scaled up by using the scaling-up multiple. In this way, in a process in which the electronic device 100 displays the icon startup animation, the foreground layer of the application icon can keep a large size, and better visual experience can be provided for the user.

In some implementations, the foreground layer of the image A or the image B may be placed in the middle of the background layer.

In addition, it should be noted that, if the image A or the image B is a rectangle whose width is greater than a height, the scaling-up multiple of the foreground layer of the application icon in the image A should enable the height of the application icon is the same as the height of the background layer of the image A after the application icon is scaled up by using the scaling-up multiple, and the scaling-up multiple of the application icon in the image B should enable the height of the application icon is the same as the height of the background layer of the image B after the application icon is scaled up by using the scaling-up multiple.

It may be understood that, if the application icon is the layered icon, the icon startup page created by the electronic device 100 may alternatively be the image B shown in (b) in FIG. 4.

It can be learned that, in internal implementation, after the electronic device 100 detects a startup operation performed by the user on the application icon, the electronic device 100 may generate the icon startup page based on the application icon, and obtain a plurality of images by setting an animation attribute of the icon startup page, where the plurality of images are a plurality of frames of images in the image startup animation.

Similarly, for the startup page animation, after the electronic device 100 detects the startup operation performed by the user on the application icon, the electronic device 100 may draw the first page, where display content of the first page is the same as display content of the application startup page. For example, the application startup page may be the application startup page shown in (a), (b), (c), or (d) in FIG. 1. Then, the electronic device 100 obtains a plurality of images by setting an animation attribute of the first page, where the plurality of images are a plurality of frames of images in the startup page animation.

In addition, in a process in which the electronic device 100 displays the icon startup animation and the startup page animation, if the application window is prepared, the electronic device 100 may display the window startup animation corresponding to the application window.

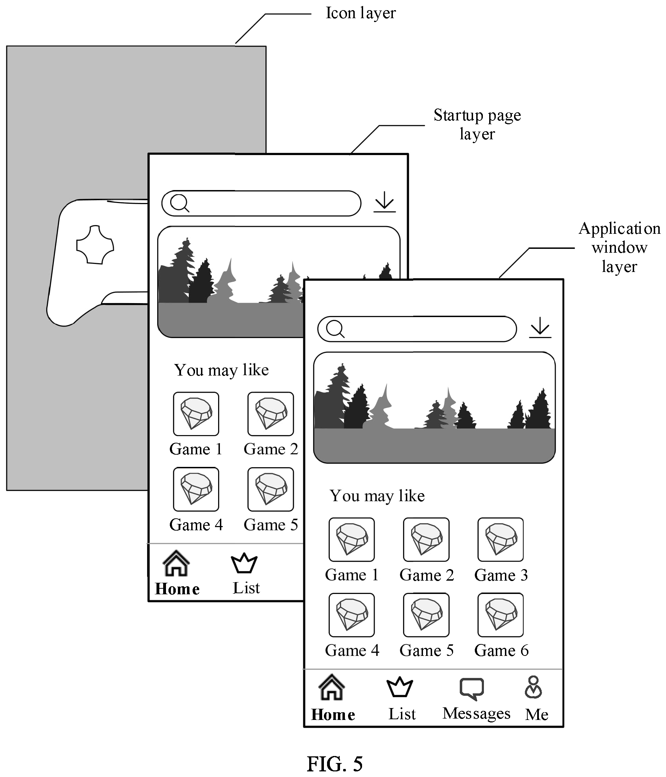

For example, FIG. 5 is a diagram of a layer relationship between an icon layer, a startup page layer, and an application window layer according to an embodiment of this application.

As shown in FIG. 5, the electronic device 100 may display an icon startup animation at the icon layer, the electronic device 100 may display a startup page animation at the startup page layer, and the electronic device 100 may display a window startup animation at the application window layer.

It can be learned from FIG. 5 that the icon layer may be located below the startup page layer, and the startup page layer may be located below the application window layer. The application window layer may be located above the icon layer and the startup page layer, so that after the electronic device 100 prepares the application window, the electronic device 100 may display the application window above the icon layer and the startup page layer, and play the window startup animation corresponding to the application window, so that the window startup animation is visible.

In addition, with reference to the images shown in FIG. 2A to FIG. 2D or FIG. 3A to FIG. 3D, it can be learned that, in a process in which the electronic device 100 displays the icon startup animation and the startup page animation, an animation in which transparency of the icon layer gradually increases may exist, and/or an animation in which transparency of the startup page layer gradually decreases may exist. In this way, from a perspective of the user, the transparency of the icon layer gradually increases, so that an image of the icon startup animation gradually fades out until the image disappears. The transparency of the startup page layer gradually decreases, so that an image of the startup page animation gradually appears until the image is completely displayed.

It may be understood that the startup page layer may alternatively be located below the icon layer. Further, in this case, the startup page layer may always be in a display state in which the transparency is 0, and an animation in which the transparency of the icon layer gradually increases may exist. In this way, from the perspective of the user, transition effect that the icon startup animation gradually disappears and the startup page animation gradually appears can still be presented. Alternatively, the application window layer may be located below the startup page layer. Alternatively, the icon layer may be located above the application window layer. It can be learned that the layer relationship shown in FIG. 5 is merely an example. The layer relationship between the icon layer, the startup page layer, and the application window layer is not limited in this embodiment of this application.

To ensure that the startup animation shows smooth transition from the application icon to the application page, attribute animations such as a scaling attribute animation, a translating attribute animation, a cropping attribute animation, and a rounded corner attribute animation of the icon layer, the startup page layer, and the application window layer should be consistent at a same moment.

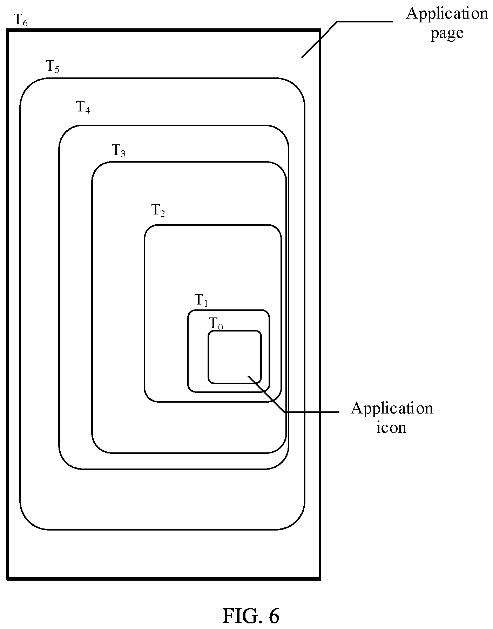

For example, FIG. 6 is a diagram of boundaries of a plurality of frames of images in a startup animation.

FIG. 6 shows an example of a diagram of boundaries of seven frames of images in a startup animation from a moment T0 to a moment T6. The moment T0 corresponds to a moment at which the electronic device 100 detects a startup operation performed by the user on an application icon. A boundary corresponding to the moment T0 is a boundary of the application icon on which the user performs an operation and that is on a desktop. The moment T6 and moments after the moment T6 correspond to moments at which the electronic device 100 completely starts the application and displays an application page in full screen. A boundary corresponding to the moment T6 is a boundary of the application page.

In internal implementation, the electronic device 100 may obtain a plurality of frames of images by setting attributes such as a size, a location, a rounded corner, and cropping of an icon startup page at an icon layer, so that boundaries of the plurality of frames of images are boundaries of the plurality of frames of images in T0 to T6. Similarly, the electronic device 100 may obtain a plurality of frames of images by setting attributes such as a size, a location, a rounded corner, and cropping of a first page, so that boundaries of the plurality of frames of images are the boundaries of the plurality of frames of images in T0 to T6. In addition, after drawing the application window at a time node in the moments T0 to T6, for example, between the moments T4 and T5, the electronic device 100 may set attributes such as a size, a location, a rounded corner, and cropping of the application window based on boundaries corresponding to the moments T5 and T6, to obtain the plurality of frames of images.

For example, the electronic device 100 sequentially displays image frames corresponding to an icon startup animation and a startup page animation at T0 to Tx (x=0, 1, 2, 3, 4, 5). At a current moment Tx+1, if the application window is prepared, the electronic device 100 may start to display, at the moment Tx+1, image frames corresponding to the window startup animation at Tx+1 to T6.

It may be understood that, in a process of displaying the startup animation, the electronic device 100 may display one frame of image in the startup animation, and draw an image corresponding to a subsequent moment at the same time. Alternatively, the electronic device 100 may first complete drawing of a plurality of frames of images in the startup animation, and then directly display the plurality of frames of images in a time sequence in a process of displaying the startup animation.

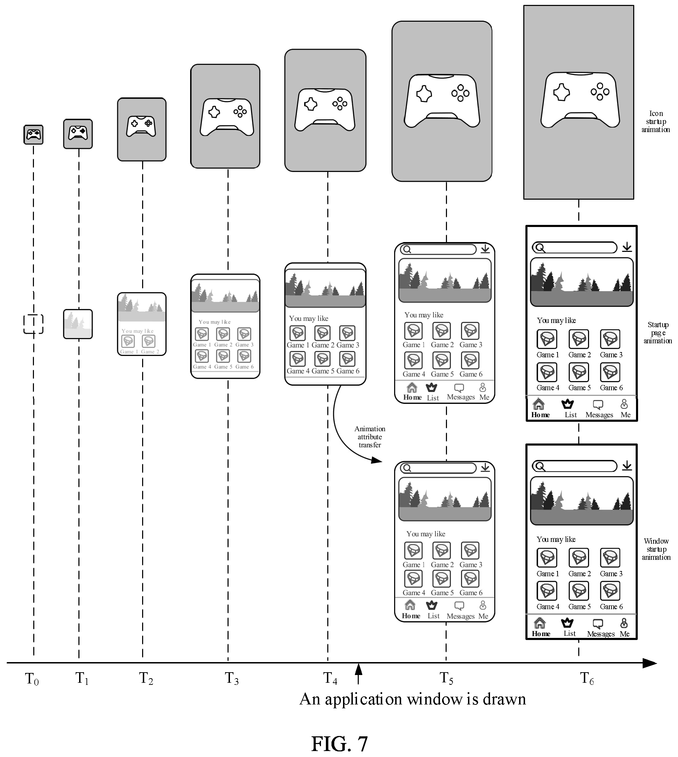

FIG. 7 is a diagram of a plurality of frames of images of an icon startup animation, a startup page animation, and a window startup animation according to an embodiment of this application.

FIG. 7 shows image frames that respectively correspond to the moments T0 to T6 and that are of the icon startup animation, the startup page animation, and the window startup animation generated by the electronic device 100. Positions and sizes of the plurality of frames of images respectively correspond to locations and sizes of borders shown at the plurality of moments shown in FIG. 7.

As shown in FIG. 7, it is assumed that the application window is drawn between the moments T4 and T5. The icon startup animation may include a plurality of frames of images from the moments T0 to T6. The startup page animation may include a plurality of frames of images from the moments T0 to T6. The window startup animation may include a plurality of frames of images from the moments T5 to T6.

For example, the plurality of frames of images of the icon startup animation may always keep minimum transparency (alpha=1). The plurality of frames of images of the startup page animation may have a process of gradually decreasing transparency from large to small, for example, alpha changes from 0 to 1. Transparency of an image frame corresponding to the startup page animation at the moment T0 is the largest, and may be in a completely invisible state. Transparency of an image frame corresponding to the startup page animation at the moment T6 is the smallest, and may be in a completely visible state. At a same moment, the image frame in the window startup animation and the image frame in the startup page animation may keep the same transparency.

In internal implementation, for example, the application window is drawn between the moments T4 and T5. The electronic device 100 may transfer, to the application window, an animation attribute of the startup page animation after the moment T4, including parameters such as translating, scaling, transparency, a rounded corner, and cropping, so that the window startup animation corresponding to the application window can keep the same animation effect as the startup page animation.

It can be learned that the image 01 in FIG. 2B may be an image obtained by superimposing the image frame in the icon startup animation and the image frame in the startup page animation at the moment T1 shown in FIG. 7 based on the layer relationship shown in FIG. 5. The image 02 in FIG. 2C may be an image obtained by superimposing the image frame in the icon startup animation and the image frame in the startup page animation at the moment T2 shown in FIG. 7 based on the layer relationship shown in FIG. 5. The image 03 in FIG. 2D is an image obtained by superimposing the image frame in the icon startup animation and the image frame in the startup page animation at the moment T3 shown in FIG. 7 based on the layer relationship shown in FIG. 5. The image 04 in FIG. 2E is an image obtained by superimposing the image frame in the icon startup animation and the image frame in the startup page animation at the moment T4 shown in FIG. 7 based on the layer relationship shown in FIG. 5. The image 05 in FIG. 2F is an image obtained by superimposing the image frame in the icon startup animation and the image frame in the startup page animation and the image frame in the window startup animation at the moment T5 shown in FIG. 7 based on the layer relationship shown in FIG. 5. The image 06 in FIG. 2G is an image obtained by superimposing the image frame in the icon startup animation and the image frame in the startup page animation and the image frame in the window startup animation at the moment T6 shown in FIG. 7 based on the layer relationship shown in FIG. 5.

It may be understood that, in a process of starting the application, only an image frame of the icon startup animation may be displayed in first several frames of images of the startup animation, and an image frame of the startup page animation is not included. In this case, in a plurality of moments before the startup animation starts to be played, the image frame of the startup page animation may not be drawn, or transparency of the image frame of the startup page animation is a maximum value, and the image frame of the startup page animation is in an invisible state.

Optionally, in a process of playing the startup animation, transparency of an image frame in the startup page animation gradually decreases, until the transparency of the image frame decreases to 0, and the image frame in the startup page animation is in a fully visible state. If at a moment in T0 to T6, for example, at a moment T3, the image frame of the startup page animation is in the fully visible state, the electronic device 100 may no longer draw or display an image frame in the icon startup page animation after the moment T3. Preferably, in the process of playing the startup animation, the image frame in the startup page animation is in a completely visible state, and an image frame in the icon startup animation is blocked. The electronic device 100 may still continue to display the image frame in the icon startup animation. In this way, when the electronic device 100 detects an operation of exiting the application by the user in the process of playing the startup animation, the electronic device 100 may not restart a process corresponding to the icon startup animation, thereby avoiding frame freezing of an icon exit animation.

Optionally, after the application window is drawn, the electronic device 100 may no longer draw or display an image frame in the startup page animation corresponding to a subsequent moment. In this way, power consumption of the electronic device 100 can be reduced, and workload of the electronic device 100 when displaying the startup animation can be reduced.

It should be noted that the plurality of frames of images of the startup animation shown in FIG. 7 are merely examples for description. In an actual application startup process, more or fewer image frames may be included. In addition, an occasion on which the application window is drawn is not limited to a moment between the moments T4 and T5 shown in FIG. 7. For example, if the application window is drawn between the moments T3 and T4, the window startup animation drawn by the electronic device 100 further includes an image frame corresponding to the moment T4, and an image of the image frame is the same as an image of an image frame in the startup page animation corresponding to the moment T4.

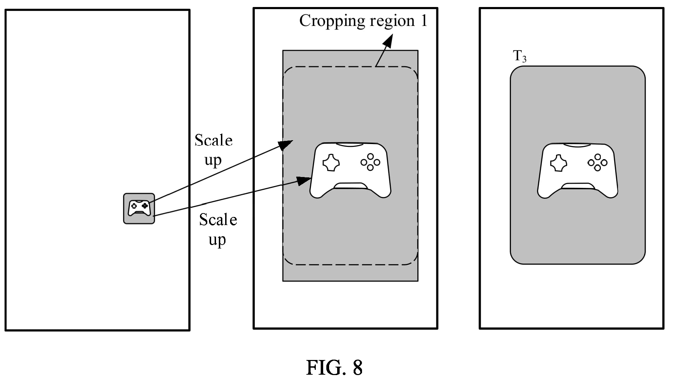

To facilitate understanding of a generation process of each frame of image in the icon startup animation, FIG. 8 is a diagram of an image frame corresponding to an icon startup animation generated by an electronic device 100 at a moment T4.

In this embodiment of this application, for an attribute animation, animation attributes that need to be calculated in one frame of image include but are not limited to an X-axis scaling ratio (scaleX) and a Y-axis scaling ratio (scaleY) in a scaling (scale) attribute, X-axis translate (translateX) and Y-axis translate (translateY) in a translating (translate) attribute, a cropping (crop) attribute, a cropping value (crop left) from a left border, a cropping value (crop top) from a top border, a cropping value (crop right) from a right border, a cropping value (crop bottom) from a bottom border, a transparency (alpha) attribute, and a rounded corner (cornerRadius) attribute.

It can be learned from the diagram shown in FIG. 8 that, the image frame corresponding to the icon startup animation at the moment T4 is equivalent to that a foreground layer and a background layer of the application icon are respectively scaled (scale) by a specific proportion.

For example, the foreground layer and the background layer may have a same scaling-up proportion or different scaling-up proportions. Preferably, the foreground layer and the background layer have different scaling-up proportions. In this way, more beautiful visual scaling effect can be implemented in an icon scaling process.

For example, if the foreground layer and the background layer have the different scaling-up proportion proportions, the scaling-up proportion of the foreground layer may meet that, after being scaled by using the scaling-up proportion, a width of the application icon after being scaled up is the same as a width of the background layer after being scaled up, or a length of the application icon after being scaled up is the same as a length of the background layer after being scaled up. In this way, it can be ensured that in the icon startup animation that is played, the foreground layer of the application icon can keep a large display size as much as possible.

It may be understood that, for an animation process in which the icon startup animation is that the application icon and a newly added background layer are separately scaled up, in any frame of image in the icon startup animation, a scaling up proportion of the application icon may enable the width of the application icon after being scaled up to be the same as the width of the background layer, or the length of the application icon after being scaled up to be the same as the length of the background layer after being scaled up. In this way, it can be ensured that in the icon startup animation played, the application icon can keep a large display size as much as possible.

Further, after the foreground layer and the background layer that are scaled up are obtained, a rounded corner attribute (cornerRadius) is set based on a cropping region 1, the scaled-up image is cropped (crop), and specific translation (translate) is performed on the scaled-up image, to obtain an image frame corresponding to the moment T4. The cropping region 1 is a boundary size of the startup animation corresponding to the moment T4.

In addition, it should be noted that, when the background layer of the image frame is obtained by using the background layer of the application icon, a region range of the background layer of the application icon after being scaled up should exceed a range of the cropping region 1, and the background layer of the image frame is obtained by cropping the scaled-up background layer by using the cropping region 1. In this way, no white border appears on an edge of the image frame of the icon startup animation generated by the electronic device 100, and a picture displayed in the icon startup animation is more beautiful.

It may be understood that FIG. 8 focuses only on generation details of the image frame corresponding to the icon startup animation at the moment T4. Generation details of image frames corresponding to other moments are similar. Details are not described herein again.

FIG. 2A to FIG. 2G, FIG. 3A to FIG. 3I, FIG. 4, FIG. 5, FIG. 6, FIG. 7, and FIG. 8 describe the icon startup animation, the startup page animation, and the window startup animation that are related to the electronic device 100 when the electronic device 100 detects the startup operation performed by the user on the application icon.

In another embodiment of this application, the electronic device 100 may further trigger, in another manner, application startup, and display the icon startup animation, the startup page animation, and the window startup animation. For example, the electronic device 100 may trigger application startup by detecting an operation performed on an interface element such as a service widget, a widget, a notification bar, or a historical task in a multi-task interface, and display the icon startup animation, the startup page animation, and the window startup animation.

The icon startup animation varies with the interface element on which the operation is performed.

The service widget is an interface display form of an application. The service widget is displayed on a desktop, and is used to display important information of the application and provide some functions of the application. The electronic device 100 may detect a user operation performed on the service widget, for example, a tap operation, to trigger startup of an application corresponding to the service widget.

For example, when the electronic device 100 detects the user operation performed by the user on the service widget, and triggers application startup, the electronic device 100 may display the icon startup animation of the service widget that is gradually scaled up, and superimpose and display, on the icon startup animation, the startup page animation that is scaled up in parallel with the service widget. Transparency of the startup page animation gradually decreases in a display process. Then, after the application window is prepared, the window startup animation continues to be displayed with the scaling-up process of the startup page animation, and the animation display in the application startup process is completed.

The widget may be considered as an application plug-in, is a small tool that can be made or freely downloaded by a user, and includes various practical functions such as entertainment, work, and learning. For example, refer to FIG. 2A. The time and weather indicator 102 is a widget. The electronic device 100 may detect a user operation performed on the widget, for example, a tap operation, to trigger startup of an application corresponding to the widget.

For example, when the electronic device 100 detects the user operation performed by the user on the widget, and triggers application startup, the electronic device 100 may display an icon startup animation of the widget that is gradually scaled up, and superimpose and display, on the icon startup animation, a startup page animation that is scaled up in parallel with the widget. Transparency of the startup page animation gradually decreases in a display process. Then, after the application window is prepared, the window startup animation continues to be displayed with a scaling-up process of the startup page animation, and animation display in the application startup process is completed.

The notification bar is used to push a message of an application. The notification bar may be displayed in a drop-down menu, a lock screen, or the like. The electronic device 100 may detect a user operation performed on the notification bar, for example, a tap operation, to trigger startup of an application corresponding to the notification bar.

For example, when the electronic device 100 detects the user operation performed by the user on the notification bar, and triggers application startup, the electronic device 100 may display an icon startup animation of the notification bar that is gradually scaled up, and superimpose and display, on the icon startup animation, a startup page animation that is scaled up in parallel with the notification bar. Transparency of the startup page animation gradually decreases in a display process. Then, after the application window is prepared, the window startup animation continues to be displayed with a scaling-up process of the startup page animation, and animation display in the application startup process is completed.

The multi-task interface may be used to display one or more historical tasks of an application, and the historical task may be displayed as a screenshot of an application page that is historically started by a user. The electronic device 100 may detect a user operation performed on one of the historical tasks in the multi-task interface, for example, a tap operation, to trigger startup of an application corresponding to the screenshot.

For example, when the electronic device 100 detects a user operation performed by the user on a historical task of an application in the multi-task interface, and triggers application startup, the electronic device 100 may display an icon startup animation in which a screenshot of an application page is gradually scaled up, and superimpose and display, on the icon startup animation, a startup page animation that is scaled up in parallel with the screenshot. Transparency of the startup page animation gradually decreases in a display process. Then, after the application window is prepared, the window startup animation continues to be displayed with a scaling-up process of the startup page animation, and animation display in the application startup process is completed.

For example, a service widget is used as an example. FIG. 9A to FIG. 9D show related user interfaces when the electronic device 100 starts an application by using the service widget.

As shown in FIG. 9A, the user interface 10 may include a service widget 104. The service widget 104 may be used to display a song played in a music application. In addition, the electronic device 100 may detect a user operation performed by the user on the service widget 104, and switch a played song, pause playing of a song, start playing of a song, or the like.

When the electronic device 100 detects the user operation performed on the service widget 104, for example, a tap operation, in response to the operation, the electronic device 100 triggers startup of the music application, and displays a startup animation shown in FIG. 9A to FIG. 9D.

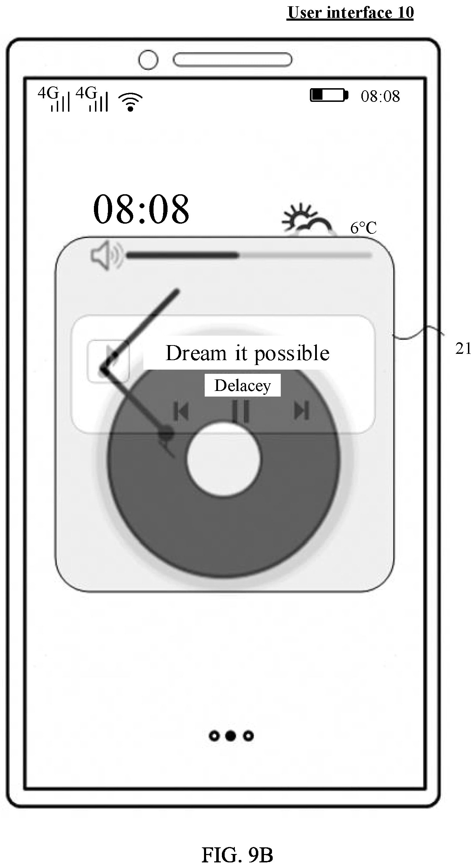

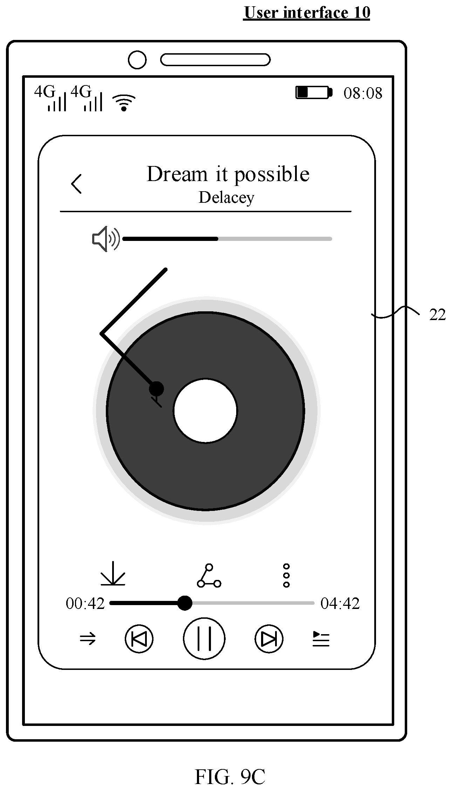

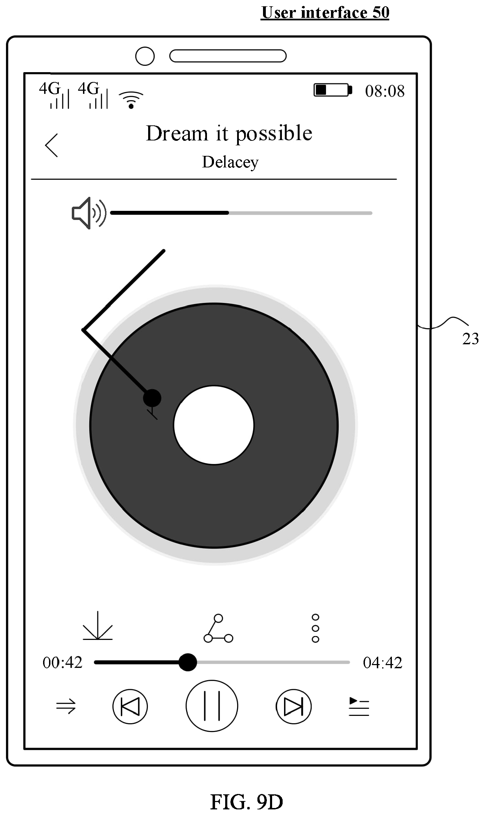

As shown in FIG. 9A to FIG. 9D, the startup animation may be displayed as a switching process from the service widget 104 shown in FIG. 9A to an image 21 shown in FIG. 9B, to an image 22 shown in FIG. 9C, to an image 23 shown in FIG. 9D.

It can be learned from the startup animation shown in FIG. 9A to FIG. 9D that, the startup animation shows a process in which the service widget is scaled up from a size of the service widget to a size of an application page. In addition, in a process of scaling up the service widget, a first page whose content is the same as content of an application startup page is scaled up in parallel with scaling up of the service widget, and in the process of scaling up the service widget and the first page, the application startup page gradually appears. This implements smooth transition from the service widget to the application startup page, followed by final transition in which the application startup page continues to be scaled up to the size of the application page, to complete application startup.

In internal implementation, after the electronic device 100 detects the user operation of starting the application shown in FIG. 9A, the electronic device 100 may trigger startup of the application, start to prepare the application window, draw the first page, and then display animation effect of scaling up the service widget and the first page in parallel, that is, the icon startup animation and the startup page animation. For example, the image 21 shown in FIG. 9B is an image obtained by superimposing image frames of the icon startup animation and the startup page animation at a same moment. Then, after the application window is prepared, the window startup animation of the application window is gradually displayed, and a scaling-up trend of the application window continues to increase with a scaling-up trend of the icon startup animation or the startup page animation. It is assumed that the electronic device 100 completes drawing of the application window after displaying the image 21 shown in FIG. 9B. In this case, the image 22 shown in FIG. 9C and the image 23 shown in FIG. 9D may be image frames of the window startup animation.

In addition, it can be learned from the image 21 shown in FIG. 9B that, the image frame of the icon startup animation includes a foreground layer in which the service widget is located and a newly added solid-color background layer. It can be learned that, the icon startup animation displays a scaling-up process of the service widget 104, and a process in which a newly added background layer is scaled up from a size approximately equal to a size of the service widget to a size of the application page.

It should be noted that, in a process of scaling up the service widget, the image frame of the icon startup animation may be drawn by using a color of a pixel without an edge.

It may be understood that the startup animation displayed by the electronic device 100 is not limited to the plurality of frames of images shown in FIG. 9A to FIG. 9D, and the icon startup animation, the startup page animation, and the window startup animation each may include more or fewer image frames.

It can be learned from FIG. 9A to FIG. 9D that, the user may trigger, by using the service widget, to start the application, and display a transition animation from the service widget to the application page. In this way, after the user starts the application, the user can view, without waiting for long time, a response made by the electronic device 100 to an operation of starting the application by the user by using the service widget, thereby improving visual experience of the user.

In addition, it should be noted that, when the user triggers, by using the service widget, to start the application, the electronic device 100 may generate the icon startup page based on the service widget, to generate a plurality of frames of images of the icon startup animation. If the service widget may be split into a foreground layer and a background layer, an icon startup page similar to the image A shown in (a) in FIG. 4 may be created, and the icon startup animation is generated by using the icon startup page. If the service widget cannot be divided, an icon startup page similar to the image B shown in (b) in FIG. 4 may be created, and the icon startup animation is generated by using the icon startup page. For display effect of the icon startup animation, refer to FIG. 9A to FIG. 9D.

It may be understood that, if the service widget may be split into the foreground layer and the background layer, an icon startup page similar to the image B shown in (b) in FIG. 4 may also be created, and an icon startup animation is generated by using the icon startup page. In addition, a principle of starting an application by acting on another interface element and displaying an icon startup animation is similar, and details are not described herein again.

The electronic device 100 may detect the operation of exiting the application by the user, and trigger exiting the application. The electronic device 100 may display an exit animation when exiting the application. In addition, with reference to an occasion on which the user initiates the operation, the electronic device 100 may display different exit animations.

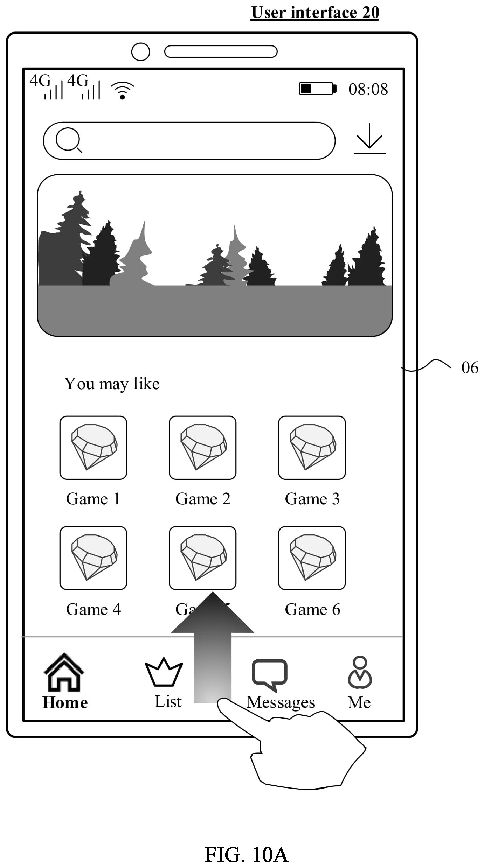

The following describes, with reference to FIG. 10A to FIG. 10G, FIG. 11, FIG. 12A to FIG. 12E, and FIG. 13A to FIG. 13E, related user interfaces involved when the electronic device 100 exits the application.

FIG. 10A to FIG. 10G show user interfaces displayed by the electronic device 100 when the electronic device 100 detects an operation of exiting an application by a user after completing starting the application.

FIG. 10A shows a user interface 20 displayed by the electronic device 100 after the electronic device 100 completes starting the application. For example, the user interface 20 may be a home page that is displayed by default after a game center application is started.

As shown in FIG. 10A, when the electronic device 100 detects the operation of exiting the application by the user, for example, an operation of sliding upward on a bottom end of the user interface 20, in response to the operation, the electronic device 100 may exit the game center application, and display an exit animation shown in FIG. 10A to FIG. 10G in a process of exiting the application. The exit animation may include a window exit animation, a startup page exit animation, and an icon exit animation.

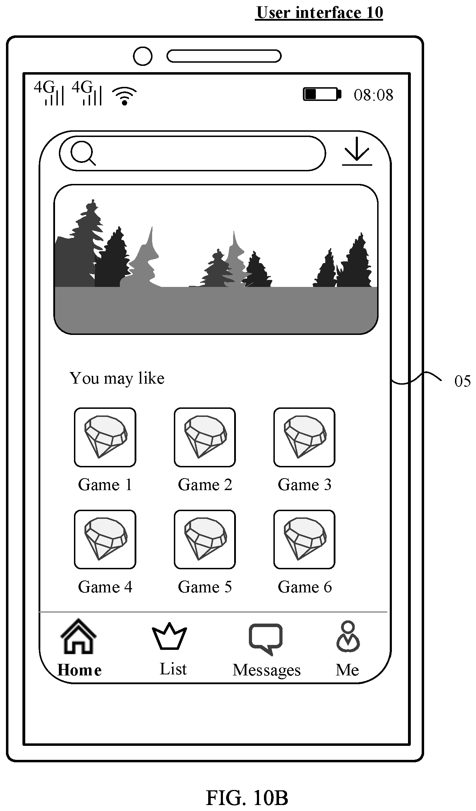

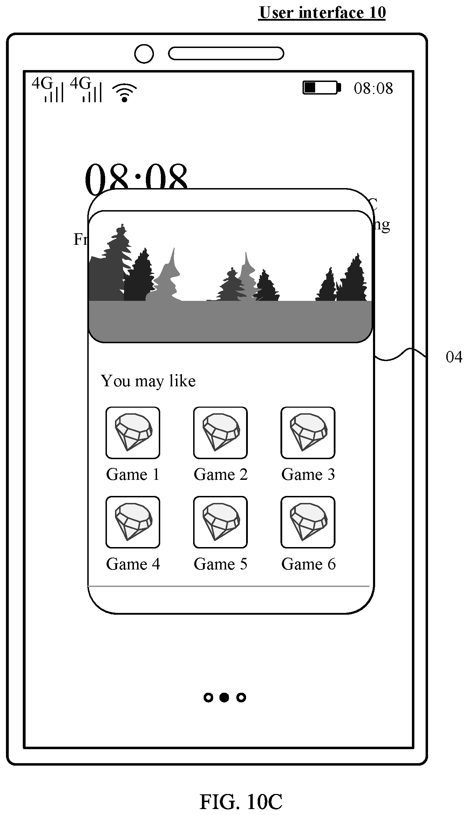

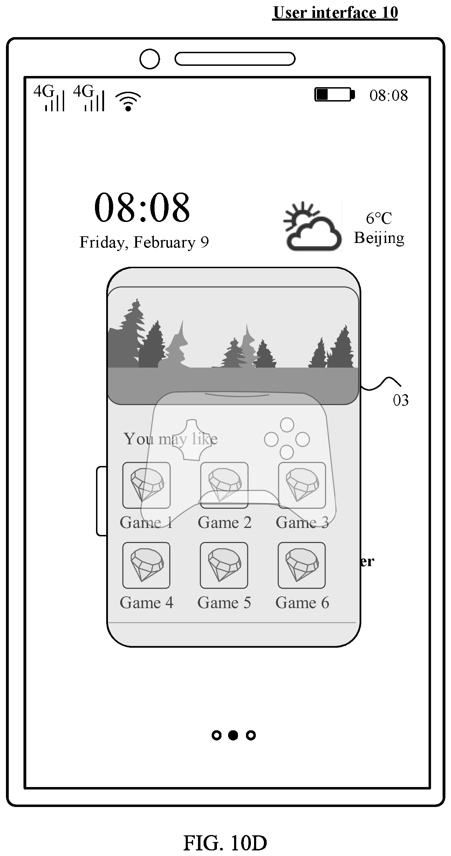

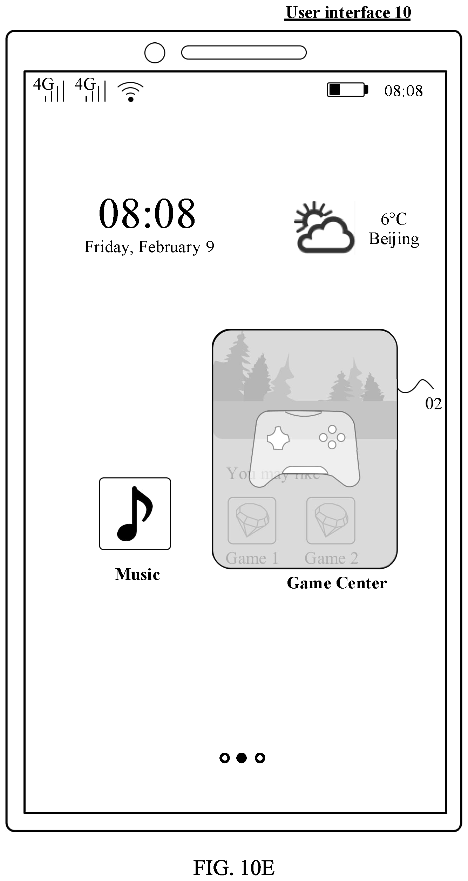

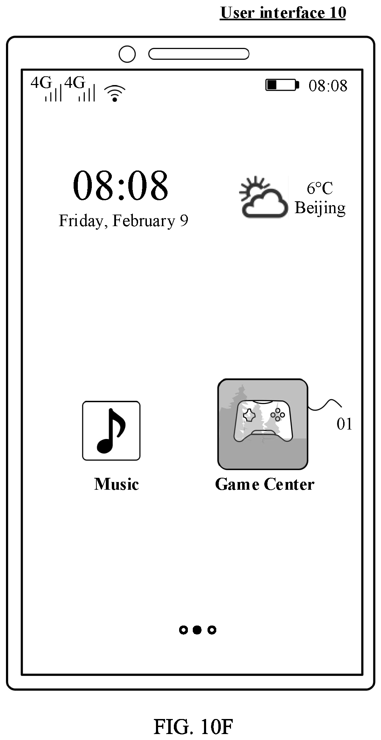

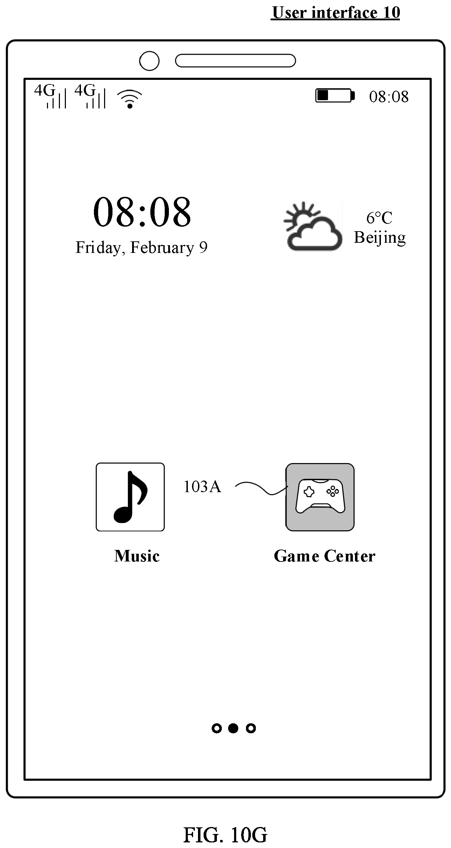

As shown in FIG. 10A to FIG. 10G, the exit animation may be displayed as transition from a user interface 20 (image 06) shown in FIG. 10A, to an image 05 shown in FIG. 10B, to an image 04 shown in FIG. 10C, to an image 03 shown in FIG. 10D, to an image 02 shown in FIG. 10E, to an image 01 shown in FIG. 10F, and to an application icon 103A shown in FIG. 10G.

It can be learned from the exit animation shown in FIG. 10A to FIG. 10G that the exit animation shows a transition process from the application page to the application icon on the desktop.

It can be learned from FIG. 2A to FIG. 2G that, when the electronic device 100 starts the game center application, the electronic device 100 displays the images 01 to 06 in sequence in chronological order from the application icon 103A shown in FIG. 2A.

In other words, if the electronic device 100 has completed application startup, and detects an application exit operation when displaying the home page of the application, the electronic device 100 may reversely display a plurality of frames of images in the startup animation displayed during startup.

In some implementations, the electronic device 100 may further detect, in a process of displaying the startup animation, the operation of exiting the application by the user. In this case, the electronic device 100 may reversely display a plurality of frames of images in a currently displayed startup animation, to complete display of the exit animation of the application.

Further, if the electronic device 100 detects, in the process of displaying the startup animation, the operation of exiting the application by the user, the operation in this case is equivalent to triggering interruption of the exit animation. To ensure that the electronic device 100 can smoothly transition from the startup animation to the exit animation, after detecting the operation of exiting the application by the user, the electronic device 100 may continue to play several frames of images of the startup animation, and then switch to the exit animation. In addition, optionally, in a process in which the electronic device 100 continues to play the several frames of images of the startup animation, as time goes by, a speed of the several frames of images that are of the startup animation and that continue to be played may gradually decrease. In this way, a sudden change of an animation may be avoided after the user interrupts the animation, so that the animation can be smoothly transited, thereby improving animation smoothness.

In some implementations, if the electronic device 100 detects, when displaying another page of the application, the operation of exiting the application by the user, that is, after the electronic device 100 starts the application, the user may switch a page. When the home page of the application is switched to the another page, and the electronic device 100 detects the operation of exiting the application by the user, in response to the operation, the electronic device 100 may display an exit animation of gradually scaling down to disappear from the currently displayed page and then switching to the desktop.

Further, if the application icon of the application is displayed on the desktop switched by the electronic device 100, in addition to displaying an animation in which the current displayed page is gradually scaled down to disappear, the electronic device 100 may further display an icon return desktop animation of the application icon that is gradually switched to the desktop in a page scaling-down process.

Optionally, the exit animation displayed by the electronic device 100 may further include a hand-following animation. In other words, first plurality of frames of images in the exit animation displayed by the electronic device 100 may further perform hand-following movement with reference to a sliding track when the user triggers exit of the application. The exit animation shown in FIG. 10A to FIG. 10G is used as an example. If a sliding operation shown in FIG. 10A is sliding to the upper left, the image 05 shown in FIG. 10B and the image 04 shown in FIG. 10C may be closer to a left side of the display screen than a current display location. In this way, from an overall perspective, an image frame in the exit animation first moves leftwards with the hand, and then moves rightwards toward a location of the application icon 103A shown in FIG. 10G. In this way, operation interest when the user exits the application can be improved, and visual experience of the user can be improved.

It can be learned from FIG. 10A to FIG. 10G that, regardless of whether the startup animation ends or the startup animation is played, if the electronic device 100 detects the operation of exiting the application by the user, the electronic device 100 may directly reversely display the plurality of frames of images of the currently played startup animation.

In some implementations, if the electronic device 100 detects that the operation of exiting the application is performed when the application window has been drawn, the electronic device 100 may directly display the exit animation from the application window to the application icon, that is, the window exit animation and the icon exit animation, and does not need to display the animation related to the first page.

For example, the exit animation may have the following two cases.

Case 1: First several frames of images of the exit animation may be image frames in the window exit animation in which the application window is gradually scaled down, and last several frames of images may be image frames in the icon exit animation in which the application icon is gradually scaled down.

In this way, the exit animation may display a process in which the application page in the application window is gradually scaled down to a size of the application icon, and after the application page is scaled down to a specific degree, the application page is switched to a related picture of the application icon and continues to scale down to the size of the application icon.

Case 2: Each frame of image or a plurality of intermediate frames of image of the exit animation may be obtained by superimposing image frames at a same moment in the window exit animation and the icon exit animation.

For example, transparency of a previous frame of image in the window exit animation may be lower than transparency of a next frame of image, and/or transparency of a previous frame of image in the icon exit animation may be higher than transparency of a next frame of image.

In this way, the exit animation may display an animation in which the application page gradually transitions to the application icon. In a transition process, the application page gradually disappears, and the application icon gradually appears.

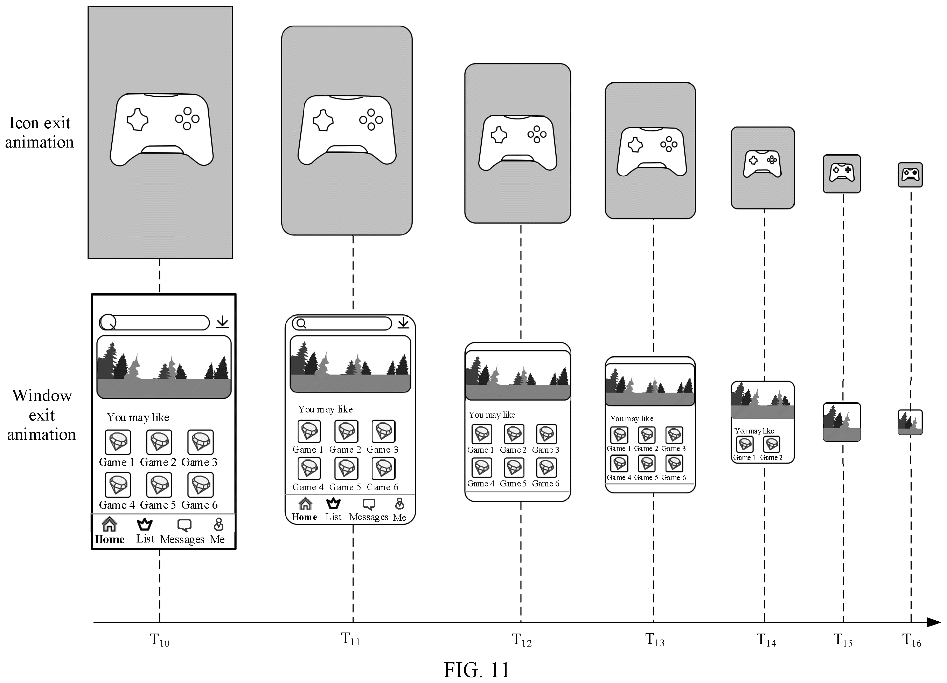

For example, FIG. 11 shows image frames that respectively correspond to moments T10 to T16 and that are of the icon exit animation and the window exit animation generated by the electronic device 100.

In the foregoing case 1, the exit animation may be displayed as an image frame corresponding to the window exit animation at T10 to Ty (y=10,11,12,12,14,15), and an image frame corresponding to the icon exit animation at Ty+1 to T16.

In the foregoing case 2, the plurality of frames of images in FIG. 11 may have different transparency. For example, at moments T10 to T16, transparency of image frames of the icon exit animation sequentially decreases, and transparency of image frames of the window exit animation sequentially increases. In this case, the image frames of the exit animation at the moments T10 to T16 are respectively images obtained after the image frames of the icon exit animation and the window exit animation at the moments T10 to T16 are superimposed.

It may be understood that, if the electronic device 100 detects, when the electronic device 100 displays the application window of a size shown at the moment Tm (m=11,12,13,14,15), the operation of exiting the application by the user, and the application window has been drawn at the moment Tm, the electronic device 100 may display an exit animation drawn by an image frame after the moment Tm.

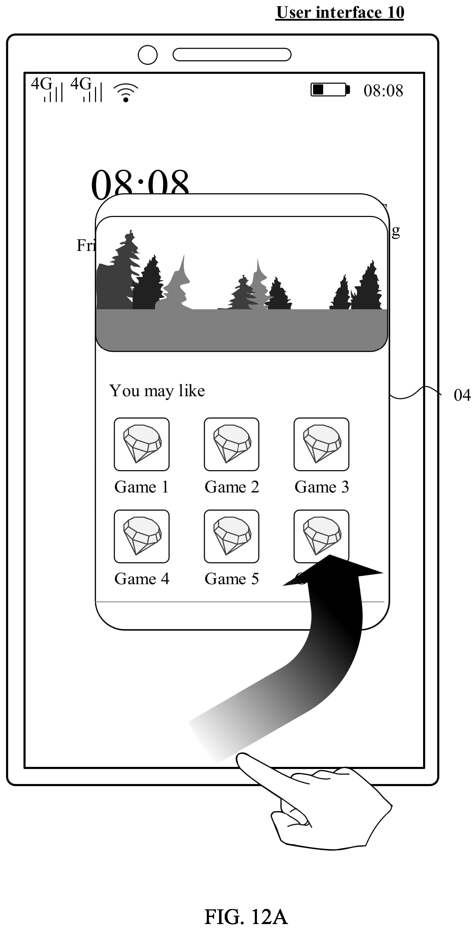

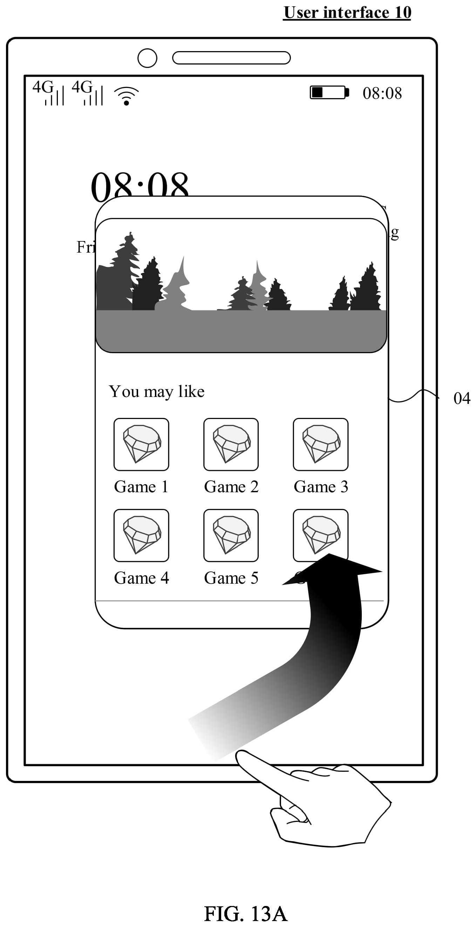

FIG. 12A to FIG. 12E and FIG. 13A to FIG. 13E show related user interfaces involved when the electronic device 100 detects the operation of exiting the application by the user in the process of displaying the startup animation.

FIG. 12A to FIG. 12E show related user interfaces involved when the electronic device 100 detects the operation of exiting the application by the user and the application window is prepared. FIG. 13A to FIG. 13E show related user interfaces involved when the electronic device 100 detects the operation of exiting the application by the user and the application window is not prepared.

It should be understood that FIG. 12A to FIG. 12E and FIG. 13A to FIG. 13E are described by using an example in which the electronic device 100 displays the image 04 shown in FIG. 2E in a process of displaying the startup animation, to describe the related user interface displayed by the electronic device 100 when the electronic device 100 detects, at this time, the operation of exiting the application by the user. In another embodiment of this application, the electronic device 100 may further detect, when displaying another image frame of the startup animation, the operation of exiting the application by the user, trigger exiting the application, and display the exit animation. This is not limited in this embodiment of this application.

As shown in FIG. 12A, when the electronic device 100 detects the operation of exiting the application by the user, for example, the operation of sliding upward from the bottom of the user interface 10, in response to the operation, the electronic device 100 suppresses startup of the game center application, and displays the exit animation shown in FIG. 12A to FIG. 12E.

In internal implementation, when the electronic device 100 detects the operation of exiting the application by the user, the electronic device 100 may determine whether the current application window is prepared.

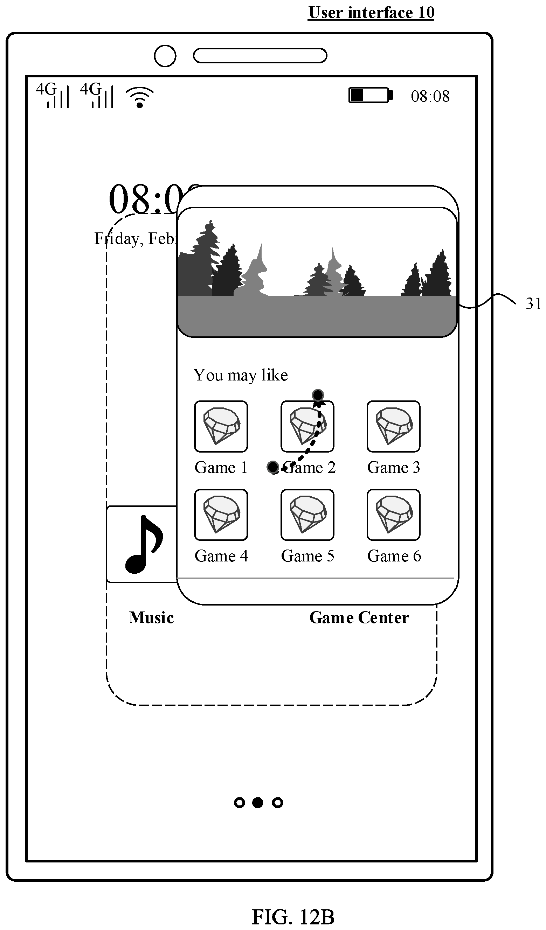

When the application window is prepared, the electronic device 100 may switch from displaying the current image frame to displaying a return animation in which application content of the application window transitions to an icon, that is, switch from the image 04 shown in FIG. 12A to the image 31 shown in FIG. 12B. Content of the application startup page is displayed in the image 31, and a size of the image 31 is less than a size of the image 04.

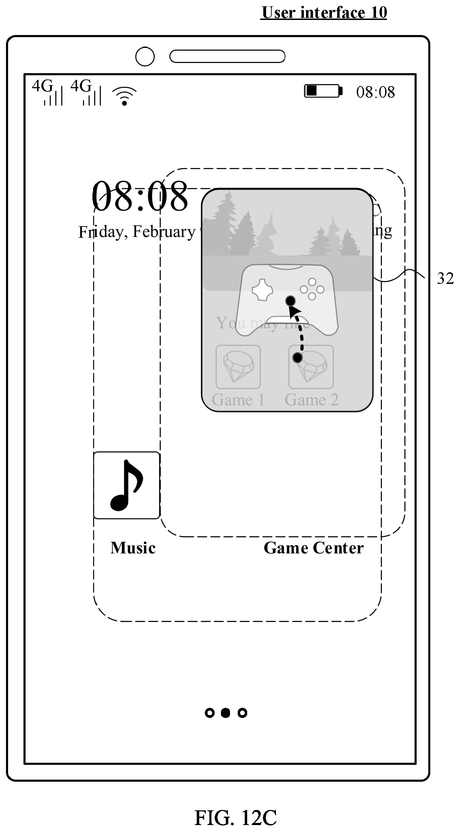

Then, the electronic device 100 displays an icon return desktop animation in which the content of the application startup page transitions to the application icon. In other words, the electronic device 100 may switch from the image 31 shown in FIG. 12B to the image 32 shown in FIG. 12C. The image 32 displays at least a part of the content of the application startup page, and displays at least a part of the icon startup page. In addition, compared with the image 31, the image 32 displays higher transparency of the content of the application startup page, and a size of the image 32 is smaller than a size of the image 31.

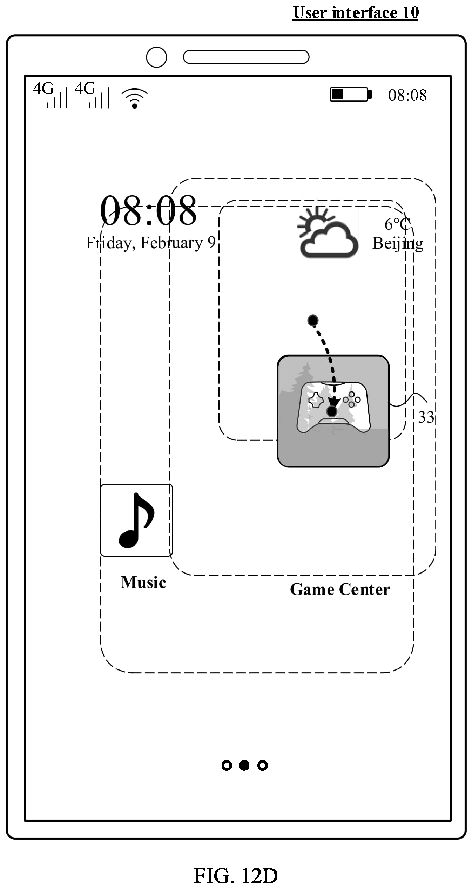

Further, the electronic device 100 switches from the image 32 shown in FIG. 12C to the image 33 shown in FIG. 12D. The image 33 displays both the content of the application startup page and at least a part of the content of the icon startup page. In addition, compared with the image 32, the image 33 displays higher transparency of the content of the application startup page, and a size of the image 33 is smaller than the size of the image 32.

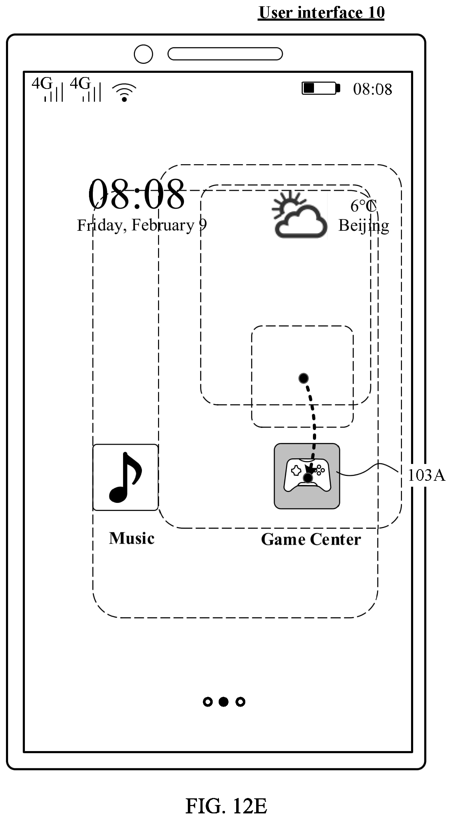

Further, the electronic device 100 may switch from the image 33 shown in FIG. 12D to the application icon 103A located on the desktop shown in FIG. 12E.

It can be learned from FIG. 12A to FIG. 12D that, when the electronic device 100 displays the startup animation and does not display the window startup animation, if the electronic device 100 detects the operation of exiting the application by the user, and the electronic device 100 has prepared the application window, the electronic device 100 may switch to display an icon return desktop animation in which the content of the application window transitions to the application icon.

Optionally, the exit animation displayed by the electronic device 100 may further include a hand-following animation. In other words, first plurality of frames of images in the exit animation displayed by the electronic device 100 may further perform hand-following movement with reference to a sliding track when the user triggers exit of the application. Refer to FIG. 12A. The operation of exiting the application by the user is sliding rightwards and upwards on the bottom end of the user interface 10. In the user interface 10 shown in FIG. 12A to FIG. 12C, when the image 04 is switched to the image 31, and the image 31 is switched to the image 32, there is still a track of moving upward right (refer to a dashed line with an arrow shown in FIG. 12B and FIG. 12C). Then, the electronic device 100 displays a moving process from the image 32 to the image 33 and then to the application icon 103A shown in FIG. 12C to FIG. 12E (refer to dashed lines with arrows shown in FIG. 12D and FIG. 12E).

In some implementations, to ensure that the electronic device 100 can smoothly transition from the startup animation to the exit animation, after detecting the operation of exiting the application by the user, the electronic device 100 may further continue to play several frames of images of the startup animation, and then switch to the exit animation. As time goes by, a speed of the several frames of images that continue to be played may gradually decrease. In this way, a sudden change of an animation may be avoided after the user interrupts the animation, so that the animation can be smoothly transited, thereby improving animation smoothness. Scenarios shown in FIG. 13A to FIG. 13E are similar, and details are not described below again.

As shown in FIG. 13A, when the electronic device 100 detects the operation of exiting the application by the user, for example, the operation of sliding upward from the bottom of the user interface 10, in response to the operation, the electronic device 100 suppresses startup of the game center application, and displays the exit animation of the application.

In internal implementation, when the electronic device 100 detects the operation of exiting the application by the user, the electronic device 100 may determine whether a current application window is prepared. When the application window is not prepared, the electronic device 100 may directly reversely display a plurality of frames of images in a currently displayed icon startup animation.

Further, optionally, the exit animation displayed by the electronic device 100 may further include a hand-following animation. In other words, first several frames of images in the exit animation displayed by the electronic device 100 may further perform hand-following movement with reference to a sliding track when the user triggers exit of the application. In this case, for the exit animation displayed by the electronic device 100, refer to the user interfaces shown in FIG. 13A to FIG. 13E.

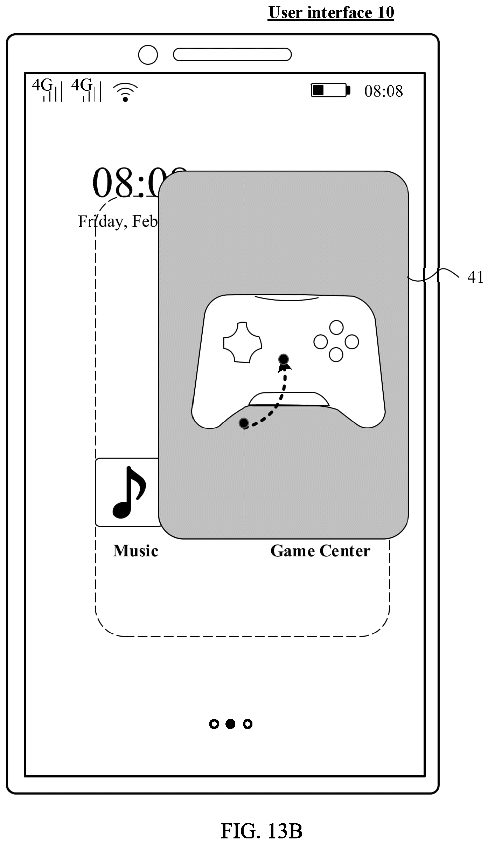

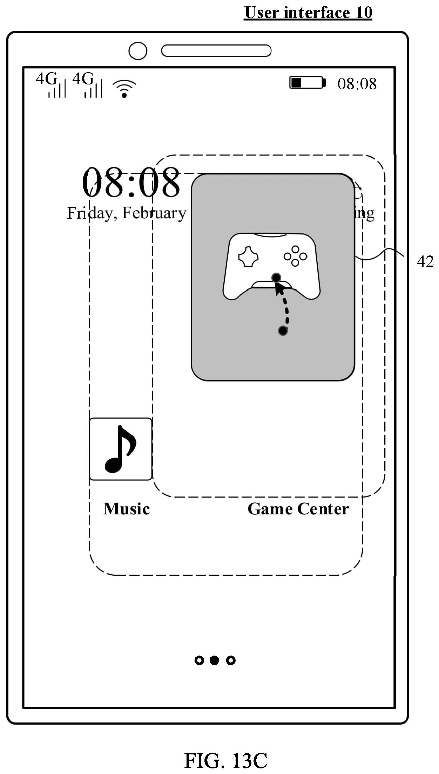

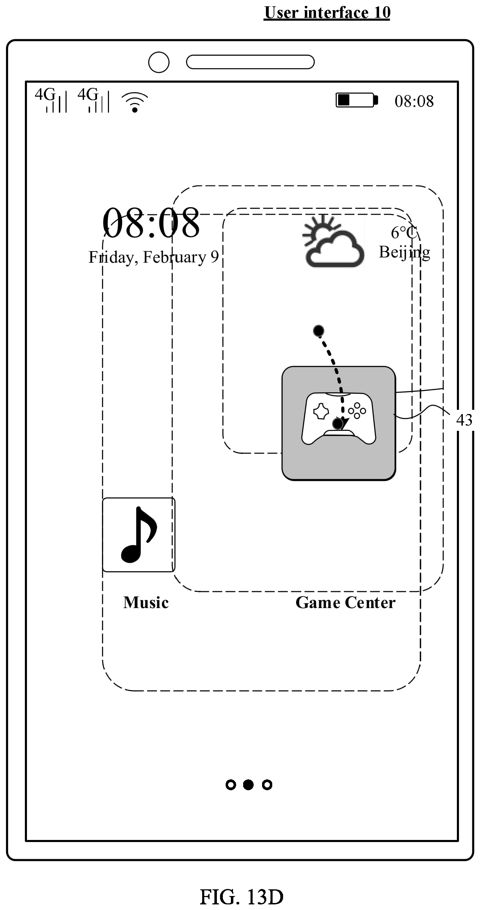

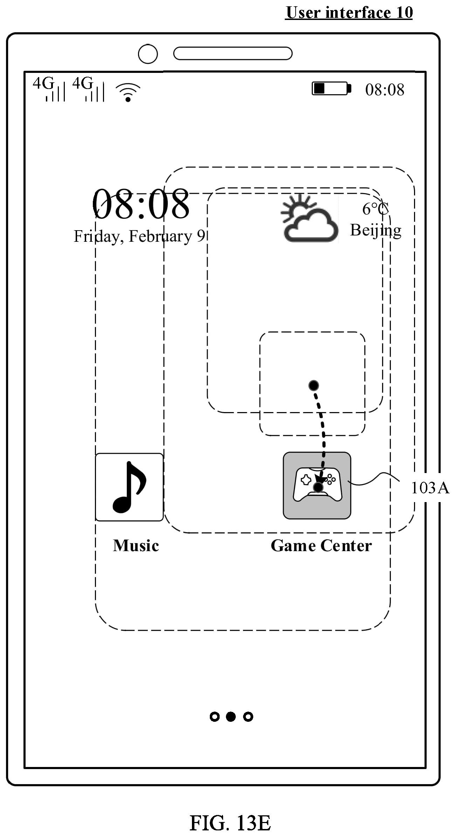

Specifically, after the electronic device 100 detects the operation of exiting the application by the user, the electronic device 100 may switch from the image 04 shown in FIG. 13A to the image 41 shown in FIG. 13B. When the image 04 is switched to the image 41, there is a track moving to an upper right corner (refer to a dashed line with an arrow shown in FIG. 13B). Then, the electronic device 100 switches to the image 42 shown in FIG. 13C. When the image 41 is switched to the image 42, there is a track moving upward (refer to a dashed line with an arrow shown in FIG. 13C). Then, the electronic device 100 switches to the image 43 shown in FIG. 13D. When the image 42 is switched to the image 43, there is a track moving downward (refer to a dashed line with an arrow shown in FIG. 13D). Then, the electronic device 100 switches to the application icon 103A shown in FIG. 13E. When the image 43 is switched to the application icon 103A, there is a track moving downward (refer to a dashed line with an arrow shown in FIG. 13E).

It can be learned that the electronic device 100 displays a hand-following animation with an image frame in the user interface 10 shown in FIG. 13A to FIG. 13C, and then displays an icon return desktop animation in which image frames shown in FIG. 13C to FIG. 13E transition to an application icon on the desktop.

Further, optionally, on a premise that the exit animation displayed by the electronic device 100 includes the hand-following animation, the electronic device 100 may determine, after the hand-following animation ends, whether the application window is prepared. If the application window is not prepared, the electronic device 100 may continue to display the icon return desktop animation in which the image frame transitions to the application icon on the desktop shown in FIG. 13C to FIG. 13E. If the application window is prepared, the electronic device 100 may switch to the icon return desktop animation in which content of the application window transitions to the application icon. For example, after displaying the user interface 10 shown in FIG. 13C, the electronic device 100 displays the user interface 10 shown in FIG. 12D and FIG. 12E.

It can be learned from FIG. 13A to FIG. 13E that, in a process in which the electronic device 100 displays the startup animation, if the electronic device 100 detects the operation of exiting the application by the user, and if the electronic device 100 is not prepared for the application window currently, the electronic device 100 may directly reversely display a plurality of frames of images in the currently displayed icon startup animation.

It may be understood that, in FIG. 10A to FIG. 10G, FIG. 12A to FIG. 12E, and FIG. 13A to FIG. 13E, exit animations displayed when the electronic device 100 exits the application are listed in a plurality of scenarios. The exit animations of the electronic device 100 in different scenarios are not limited in this embodiment of this application.

In addition, in FIG. 10A to FIG. 10G, FIG. 12A to FIG. 12E, and FIG. 13A to FIG. 13E, an exit animation described by using an example in which an application icon is split into a foreground layer and a background layer to draw an icon startup animation is used. In this case, the icon exit animation includes a process in which the foreground layer and the background layer of the icon are separately scaled down. In addition, the icon exit animation may also include a process in which the icon located at the foreground layer is gradually scaled down and a newly added background layer is gradually scaled down to disappear. In this case, the exit animation of the application may be a process of reversely displaying the image frames shown in FIG. 3A to FIG. 3G.

When the icon exit animation includes the animation in which the icon located at the foreground layer is gradually scaled down and a newly added picture located at the background layer is gradually scaled down to disappear, the newly added picture located at the background layer may further include a transparency transition animation. For example, with playback of the icon exit animation, transparency of the background layer gradually increases. In this way, the icon exit animation viewed by the user may include an animation process in which the icon located at the foreground layer is gradually scaled down, and an animation process in which the background layer is scaled down and fades out.

It should be noted that, the icon exit animation is designed as an animation process in which the icon located at the foreground layer is gradually scaled down and the newly added picture located at the background layer is gradually scaled down to disappear, to avoid a problem that a picture is distorted due to vertical stretching of an icon displayed in the icon exit animation.

In another embodiment of this application, the icon exit animation displayed by the electronic device 100 may include only one layer in which the icon is located, and there is no need to consider a problem of distortion of an icon picture. After detecting the operation of exiting the application by the user, the electronic device 100 directly displays the icon exit animation in which an icon whose size corresponds to a size of the application window and that is stretched vertically is gradually scaled down to an icon on the desktop. In this case, when the electronic device 100 detects the operation of exiting the application by the user, the electronic device 100 triggers the currently displayed application window to gradually scale down to a size of the icon on the desktop, and displays, in a process of scaling down the application window, an icon that is aligned with the size of the application window. In this way, the user may view an animation process in which an icon that is vertically stretched is gradually scaled down and transitions to the icon on the desktop, and does not view an extra redundant layer. For an icon with an irregular shape, that is, an icon whose boundary is in a polygon shape, an icon exit animation displayed when an icon is stretched to align with a window may further avoid a sudden change of a picture that occurs when an application window whose boundary shape is a rectangle transitions to an icon whose boundary shape is a polygon during application exit, to ensure smooth transition of the picture.

Further, in some implementations, in a process in which the electronic device 100 displays the exit animation, the electronic device 100 may further detect an operation of starting the application by the user, and start the application again. In this case, the electronic device 100 may interrupt the exit animation, and continue to display the icon startup animation or the window startup animation. FIG. 10D is used as an example. If the electronic device 100 displays the exit animation, and detects, when displaying the image 03 shown in FIG. 10D, the operation of starting the application by the user, for example, a tap operation performed on the image 03, in response to the operation, the electronic device 100 switches from the user interface 10 shown in FIG. 10D to sequentially display the user interfaces shown in FIG. 2E to FIG. 2G.

Further, optionally, when the electronic device 100 detects an operation of interrupting the exit animation by the user, to ensure that the exit animation smoothly transitions to the startup animation, after detecting the operation of interrupting the exit animation by the user, the electronic device 100 may continue to play several frames of images of the exit animation, and then switch to the startup animation. As time goes by, a speed of the several frames of images that continue to be played may gradually decrease. In this way, a sudden change of an animation may be avoided after the user interrupts the animation, so that the animation can be smoothly transited, thereby improving animation smoothness.

In addition, it should be noted that the exit animations shown in FIG. 10A to FIG. 10G, FIG. 12A to FIG. 12E, and FIG. 13A to FIG. 13E are described by using an example in which an icon startup animation is displayed when a user acts on an application icon to start an application. In another embodiment of this application, when an application is started by using an interface element such as a service widget, a widget, a notification bar, or a multi-task interface, the exit animation may include an animation in which content of the application window transitions to the interface element, or an animation in which an image frame that is in an icon startup animation and that is generated based on the interface element transitions to the interface element, and the like. For example, if the electronic device 100 starts a music application by using a user operation performed on the service widget 104 shown in FIG. 9A to FIG. 9D, and the electronic device 100 detects, when displaying the image 22 shown in FIG. 9C, the operation of exiting the application by the user, the electronic device 100 may sequentially display the user interfaces 10 shown in FIG. 9C to FIG. 9B to FIG. 9A.

The electronic device may be a portable terminal device carrying iOS, Android, Microsoft, or another operating system, for example, a mobile phone, a tablet computer, or a wearable device; or may be a non-portable terminal device like a laptop (Laptop) having a touch-sensitive surface or a touch panel, or a desktop computer having a touch-sensitive surface or a touch panel. A software system of the electronic device 100 may use a layered architecture, an event-driven architecture, a microkernel architecture, a micro service architecture, or a cloud architecture. In this embodiment of the present invention, an Android^{®} system of a layered architecture is used as an example to illustrate the software structure of the electronic device 100.

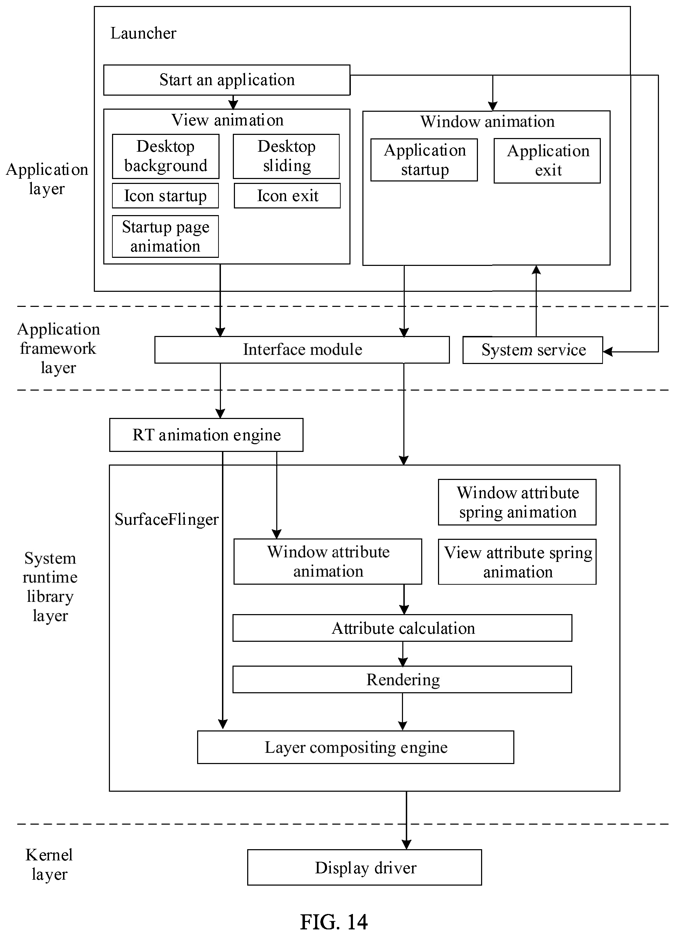

FIG. **14** is a block diagram of a software structure of an electronic device 100 according to an embodiment of this application.

In a layered architecture, software is divided into several layers, and each layer has a clear role and task. The layers communicate with each other through a software interface. In some embodiments, the Android^{®} system is divided into four layers: an application layer, an application framework layer, a system runtime library layer, and a kernel layer from top to bottom.

As shown in FIG. 14, the application layer may include a desktop launcher (Launcher).

The Launcher is usually referred to as a desktop of the Android^{®} system, and mainly includes the following functions.
(1) As a launcher of the Android^{®} system, the Launcher may start an application.
(2) As an application manager, the Launcher may be configured to manage an application, for example, delete or display an application.
(3) As a desktop UI of a device, the Launcher may be configured to display an application icon, widget, change a wallpaper, and the like.

The Launcher may include but is not limited to three modules: an application startup module, a window animation module, and a view (View) animation module.

The application startup module may be configured to detect an operation of starting an application by a user, and start the application.

The window animation may be used to create an animation for starting an application and an animation for exiting an application, that is, an animation task such as the window startup animation and the window exit animation of the application mentioned above.

A View animation may be used to create animation tasks such as a desktop background, a desktop sliding animation, an icon startup animation when an application is started, an icon exit animation, and a startup page animation. In addition, the View animation may be used to create an icon view in the icon startup animation and the icon exit animation, and a first page view involved in the startup page animation.

It should be noted that, for the animation task created in the window animation, a window needs to be created first, so that the animation can be played in the window. However, for an animation task created in the View animation, no window needs to be created, and the animation can be played by creating a view. In other words, when the application is started, the icon startup animation and the startup page animation are created by using the View animation, and the view is directly created without waiting for the application window to be prepared. After the operation of starting the application by the user is detected, the icon startup animation and the startup page animation can be quickly responded to.

In some implementations, the window animation may further include a SurfaceView module, and the SurfaceView module may be configured to create an application window used to play the window startup animation and the window exit animation. In addition, the window animation may also be used to create an animation task of the icon startup animation. In this case, the window animation may also include an icon startup module and an icon exit module. The electronic device 100 may create a window of the icon by using the SurfaceView module, and generate the icon startup animation by setting an attribute of the window of the icon. In this way, when drawing the icon startup animation corresponding to the icon, the electronic device 100 does not need to use the application window, does not need to wait for creation of the application window, and can quickly display the icon startup animation after detecting the operation of starting the application by the user.

It should be noted that, if the electronic device 100 creates the animation task of the icon startup animation by using the window animation, the electronic device 100 carries a cropping and round corner attribute animation. However, if the electronic device 100 creates the animation task of the icon startup animation by using the View animation, because the electronic device 100 does not carry the cropping and round corner attribute animation, the cropping and round corner attribute animation needs to be added, so that the electronic device 100 can generate a plurality of frames of images in the icon startup animation by using the cropping and round corner attribute animation.

The application framework layer may provide an application programming interface (application programming interface, API) and a programming framework for an application at the application layer. The application framework layer may include some predefined functions.

As shown in FIG. 14, the application framework layer may include an interface module and a system service.

The interface module may be configured to implement transfer of underlying capabilities between the application layer and the system runtime library layer. Specifically, the View animation may invoke a render thread (Render Thread, RT) animation engine by using the interface module, to implement work such as calculation, drawing, and rendering of the View animation. The window animation may invoke a graphics compositor (SurfaceFlinger) by using the interface module, to implement work such as calculation, drawing, and rendering of the window animation.

The system service may be configured to monitor a status of an application window when the application is started, that is, monitor whether the application window is drawn.

The RT animation engine and the SurfaceFlinger are located at the system runtime library layer (Native).

The RT animation engine may be configured to determine an animation attribute of a view, including a size, a location, cropping, a round corner, transparency, and the like, to generate a translating animation, a scaling animation, a cropping animation, a transparency animation, and the like for the view, to obtain a plurality of frames of images in the icon startup animation and the startup page animation. In addition, the RT animation engine may be further configured to: when the application window is drawn, transfer an animation attribute of an image frame in the startup page animation to a window attribute animation in the SurfaceFlinger, so that the animation attribute of the window startup animation is consistent with the animation attribute of the startup page animation.

The SurfaceFlinger may include a plurality of modules: a window attribute animation, a window attribute spring animation, a View attribute spring animation, attribute calculation and rendering, and a layer compositing engine.

The window attribute animation may be used to generate a translating animation, a scaling animation, a cropping animation, a transparency animation, and the like for the window based on the animation attribute of the window.

In some implementations, the window attribute animation may include modules such as a container animation driver and an updated window. The container animation driver may be configured to create a window container animation. The window container animation may be started synchronously when the icon startup animation is started, to ensure that when the window startup animation is switched to, the attribute of the window startup animation is consistent with that of the icon startup animation, thereby implementing smooth transition from the icon startup animation to the window startup animation in an application startup process. The window update may be used to update the application window to the container animation after the application window is prepared in the application start process, to display content (for example, an application startup page) in the application window, that is, display the window startup animation. In this case, the RT animation engine does not need to transfer the animation attribute of the startup animation to the window attribute animation after the application window is drawn.

The window attribute spring animation may be used to determine a spring curve of an animation when the animation is interrupted by a user in a process of playing the startup animation or the exit animation (for example, the window startup animation and the window exit animation) of the window. The spring curve may be used to avoid a sudden change of the animation and ensure smooth transition of the animation.

The View attribute spring animation may be used to determine a spring curve of an animation when the animation is interrupted by a user in a process of playing the startup animation and the exit animation (for example, the icon startup animation, the icon exit animation, and the startup page animation) of the view.

The spring curve may be used to adjust and optimize attribute values in the startup animation or the exit animation, including scaleX and scaleY in the scaling (scale) attribute, translateX and translateY in the translating (translate) attribute, crop left, crop top, crop right, and crop bottom in the crop (crop) attribute, and the transparency (alpha) attribute.

The spring curve is used to implement that in a process in which the electronic device 100 plays an animation, if an operation of interrupting the animation by the user is detected, the electronic device 100 continues to maintain playing of the animation for a period of time, and then interrupts playing of the animation, for example, reversely plays of the played animation. In addition, when the animation is maintained, as time goes by, a playback speed of the animation that is maintained may gradually decrease. When the played animation is reversely played, as time goes by, a playback speed of the reversed animation may gradually increase.

For ease of understanding, a scenario in which an application is started is used as an example. After the electronic device 100 detects an operation of starting the application by the user, the electronic device 100 starts to play a startup animation in response to the operation, that is, displays an animation in which an icon is gradually scaled up and transitions to an application startup page. If an operation of exiting the application by the user is detected in a process in which the electronic device 100 plays the startup animation, the electronic device 100 may continue to play several frames of images of the startup animation, that is, continue to play an animation in which the icon transitions to the application startup page, and then display an exit animation, that is, display an animation in which the application startup page transitions to the icon and is scaled down. In addition, as time goes by, a playback speed of the several frames of images of the startup animation that continues to be played gradually decreases, and a playback speed of the exit animation gradually increases.

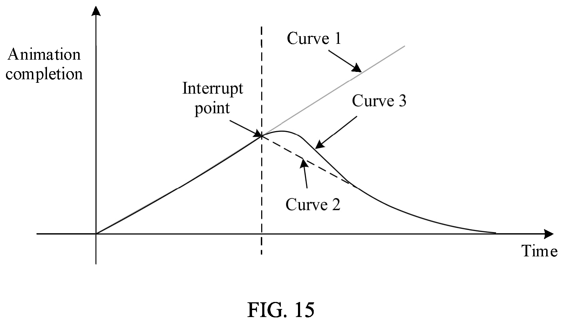

For example, FIG. 15 is an example of a diagram of a spring curve according to an embodiment of this application.

As shown in FIG. 15, a curve 1 is an original curve when there is no user interruption operation, a curve 2 is an animation curve in some animation interruption mechanisms when there is a user interruption operation, and a curve 3 is a spring curve in an interruption mechanism provided in this application.

If there is no user interruption operation in a process in which the electronic device 100 plays the animation, the animation may be played based on the curve 1, that is, the animation is gradually played as time goes by.

In some animation interrupt mechanisms, if the electronic device 100 detects the user interruption operation (refer to the interrupt point indicated in FIG. 15) in a process of playing the animation, the electronic device 100 plays the animation based on the curve 2, that is, immediately interrupts playing of the animation at the interrupt point, and reversely plays the played animation.

In the interruption mechanism provided in this embodiment of this application, if the electronic device 100 detects the user interruption operation (refer to the interrupt point indicated in FIG. 15) in a process of playing the animation, the electronic device 100 plays the animation according to the curve 3. To be specific, in a period of time after an interrupt point, the electronic device 100 continues to play the animation based on a trend of playing the animation by the electronic device 100, and reversely plays the played animation after the time period.

It can be learned from the spring curve shown in FIG. 15 that, based on the interruption mechanism provided in this embodiment of this application, after the user triggers interruption of the animation, the animation does not change suddenly immediately, so that the animation can be smoothly transited, thereby improving animation smoothness.

It may be understood that the spring curve shown in FIG. 15 is merely an example for description, and does not constitute a limitation on this embodiment of this application.

The attribute calculation module may be configured to calculate an animation attribute value of the window and/or the view, that is, scaleX and scaleY in the scaling (scale) attribute, translateX and translateY in the translating (translate) attribute, crop left, crop top, crop right, crop bottom, and crop bottom in the crop (crop) attribute, the transparency (alpha) attribute, and the like mentioned above.

The rendering module may be configured to draw and render each frame of image in the window animation.

The layer compositing engine may be configured to perform layer compositing on each layer corresponding to each rendered frame of image, to obtain each frame of image of a to-be-displayed animation, and buffer each frame of image.

The kernel layer is a layer between hardware and software. The kernel layer may include a display driver.

The display driver may be configured to drive the display screen to display each frame of image in the animation.

It may be understood that a plurality of modules such as the window attribute animation, the window attribute spring animation, the view attribute spring animation, and attribute calculation and rendering may also be located in the RT animation engine. Alternatively, the View animation may also invoke the SurfaceFlinger by using the interface module, and implement drawing and rendering of View animations such as the startup page animation, the icon startup animation, and the icon exit animation by using the SurfaceFlinger. That is, the icon startup animation, the icon exit animation, the startup page animation, the window startup animation, and the window exit animation may be implemented by the RT animation engine, or may be implemented by the SurfaceFlinger.

The following uses the application startup process shown in FIG. 2A to FIG. 2G as an example to describe a working process involved in the software architecture block diagram of the electronic device 100.

When the electronic device 100 detects a startup operation performed by the user on the application icon, in response to the operation, the electronic device 100 may trigger startup of the application by starting the application module, obtain a startup page of the application, notify the View animation to create an icon view and an animation task of the first page view, and notify the window animation to create an animation task of the application window. Before the application window is drawn, the View animation may invoke the RT animation engine by using the interface module, to obtain image frames of the icon startup animation and the startup page animation, composite the image frames of the icon startup animation and the startup page animation by using the layer compositing engine, to obtain an image frame of a to-be-displayed startup animation, and drive, by using a display driver module, a display screen to display the image frame.

After the system service detects that the application window is drawn, the window animation may invoke the SurfaceFlinger by using the interface module, and start to draw the window startup animation corresponding to the application window. In addition, the RT animation engine may transfer, to the SurfaceFlinger, an animation attribute of an image frame that is of the startup page animation and that is to be displayed at a next moment. The SurfaceFlinger draws a window startup animation with a same animation attribute as the startup page animation. Then, the layer compositing engine composites image frames of the icon startup animation, the startup page animation, and the window startup animation at a same moment, to obtain an image frame to be displayed in the startup animation, and drives the display screen to display the image frame by using the display driver module.

It should be noted that, because the animation task of the icon view created by the View animation does not need to create a window to quickly play the icon startup animation corresponding to the icon view, after the electronic device 100 detects the startup operation performed by the user on the application icon, the electronic device 100 may quickly respond to the operation, and start to play the icon startup animation.

In addition, after the electronic device 100 starts the application, before window drawing is completed, the electronic device 100 may first obtain content of the application startup page, obtain a first page that is the same as the content of the application startup page, and play the startup page animation. After application window drawing is completed, the electronic device 100 plays the window startup animation, so that a process of transitioning from the application icon to the application startup page is displayed in advance before application window drawing is completed, thereby removing a limitation that the electronic device 100 can display the application content of the application window only after application window drawing is completed, and implementing smoother transition from the application icon to the application startup page in the application startup process.

It can be learned from FIG. 14 that the icon startup animation is controlled by a launcher side, thereby avoiding cross-process overheads. Drawing of the icon startup animation is not limited by the application window, and the icon startup animation can be played without waiting until the application window is drawn, thereby ensuring that the electronic device 100 can quickly display the icon startup animation after detecting the operation of starting the application by the user. In addition, when an image frame in the icon startup animation is drawn, the SurfaceFlinger takes over, thereby eliminating dependency on an AT solution and expanding a scenario scope. In addition, drawing of the application startup page is extracted in advance. The first page that is the same as the application startup page is drawn in advance, and is controlled by the launcher side. This eliminates a limitation between the application startup page and the application window. Before the application window is prepared, a startup page animation corresponding to the first page is displayed in advance, thereby slowing down a picture change speed in the application startup process.

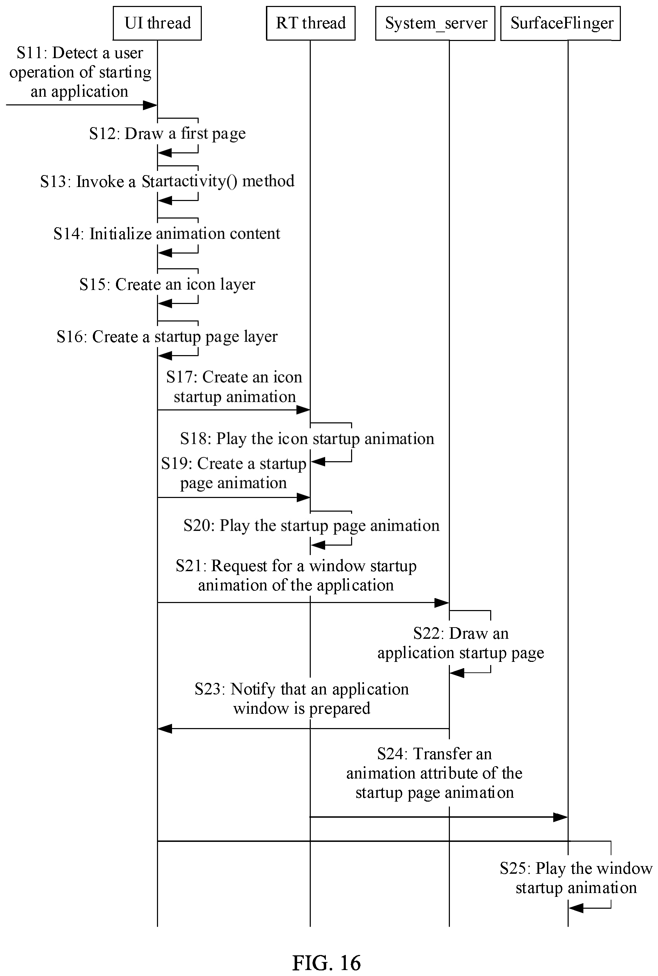

**FIG. 16** **is a diagram of interaction between internal modules of an electronic device 100 that displays a startup animation when an application is started according to an embodiment of this application.**

When the electronic device 100 displays a startup animation when an application is started, interaction between a UI thread, an RT thread, a System_server, and a SurfaceFlinger is mainly involved.

The UI thread, also referred to as a main thread, is a thread created by a system when the application is started. The UI thread is responsible for distributing an event (for example, a drawing event) to a UI component. The RT thread is used to draw an icon startup animation and a startup page animation. The System_server is configured to provide a system service. For example, when the application is started, the System_server draws a startup page of the application. The SurfaceFlinger is configured to calculate, draw, and render an animation.

As shown in FIG. 16, when the application is started, main internal implementation includes the following.

S11: The UI thread detects a user operation of starting the application.

The user operation may include a user operation performed on an interface element such as an application icon, a service widget, a widget, a notification bar, or a multi-task interface, for example, a tap operation.

S12: The UI thread draws a first page.

In this embodiment of this application, content of the first page is the same as content of the application startup page.

The application startup page may be an initial page displayed after the application is started. After detecting a user operation of starting the application in the UI thread, the first page may be drawn in advance before an application window is prepared.

The application startup page may be preset by the application in advance, and the UI thread may extract the application startup page from an application resource. Alternatively, the application startup page may be drawn based on related information of the application. Alternatively, the application startup page may be a page screenshot before the application is backgrounded last time, or the application startup page may be a default main page screenshot displayed when the application is started for the first time.

S13: The UI thread invokes a Startactivity() method.

The StartActivity() method may be used to start a new activity, to start the application.

S14: The UI thread initializes animation content.

S15: The UI thread creates an icon layer.

The icon layer is a layer at which an icon view is located. The icon layer may include a foreground layer and a background layer. The electronic device 100 may display the icon startup animation in the icon layer.

For example, the icon layer may be located below the application window layer. In this way, when the electronic device 100 prepares the application window and starts to play the window startup animation, the window startup animation may be superimposed and displayed above the layer where the icon startup animation is located, to implement switching display from the icon startup animation to the window startup animation.

S16: The UI thread creates a startup page layer.

The startup page layer is a layer at which a first page view is located. The electronic device 100 may display the startup page animation in the startup page layer.

For example, the startup page layer may be located above the icon layer. In addition, the startup page animation may have a transparency animation in which transparency gradually decreases in a playback process. In this way, when the electronic device 100 simultaneously plays the startup page animation and the icon startup animation, animation effect in which the icon gradually transitions to the application startup page may be presented. In addition, the startup page layer may be located below the application window layer. In this way, when the electronic device 100 prepares the application window and starts to play the window startup animation, the window startup animation may be superimposed and displayed above the layer where the startup page animation is located, to implement switching display from the startup page animation to the window startup animation.

S17: The UI thread creates the icon startup animation through the RT thread.

S18: The RT thread plays the icon startup animation.

S19: The UI thread creates the startup page animation through the RT thread.

S20: The RT thread plays the startup page animation.

It may be understood that step S18 and step S20 may be performed at the same time. In other words, the electronic device 100 may play the icon startup animation and the startup page animation at the same time. Alternatively, the electronic device 100 may first perform step S18 and then perform step S20. In other words, the electronic device 100 may first play the icon startup animation, and then play the startup page animation. An execution sequence of step S18 and step S20 is not limited in this embodiment of this application.

S21: The UI thread requests the System_server for the window startup animation of the application.

The window startup animation may be used to display a process in which page content of the application is gradually scaled up when the application is started. The window startup animation can be displayed on a user interface only after the application window is prepared.

S22: The System_server draws the application startup page.

The System_server may start to prepare the application window after the user triggers startup of the application, and draw the application startup page in the application window.

S23: The System_server notifies the UI thread that the application window is prepared.

S24: The RT thread transfers an animation attribute of the startup page animation to the SurfaceFlinger.

The RT thread may transfer the animation attribute of the startup page animation to the SurfaceFlinger after the application window is prepared, so that the SurfaceFlinger can create the window startup animation based on the animation attribute of the startup page animation, so that an animation attribute of the window startup animation is consistent with the animation attribute of the startup page animation.

It may be understood that an execution sequence of step S24 is not limited in this embodiment of this application, and step S24 may be performed before or after any one of steps S19 to S23. In other words, the RT thread may directly transfer the animation attribute of the startup page animation to the SurfaceFlinger after obtaining the animation attribute of the startup page animation, so that the SurfaceFlinger can directly draw the window startup animation by using the animation attribute of the current startup page animation after the application window is prepared, to ensure that the startup page animation and the window startup animation are displayed continuously.

S25: The UI thread plays the window startup animation by using the SurfaceFlinger.

It may be understood that, if the window startup animation starts to be played before the application startup page is drawn, the window is invisible in this case, and the window startup animation is visible until the application startup page is drawn. If the window startup animation starts to be played after the application startup page is drawn, the window startup animation is visible when the window startup animation starts to be played.

It can be learned that, after starting the application, the electronic device 100 may draw the first page by using the UI thread, to preload the first page before the window drawing is completed, and release dependency on the System_server, to play the icon startup animation and the startup page animation before the window drawing is completed, and then add the window startup animation after the application window is prepared. This implements an animation process in which the electronic device 100 can display a process of gradually transitioning from the application icon to the startup page of the application in the application startup process.

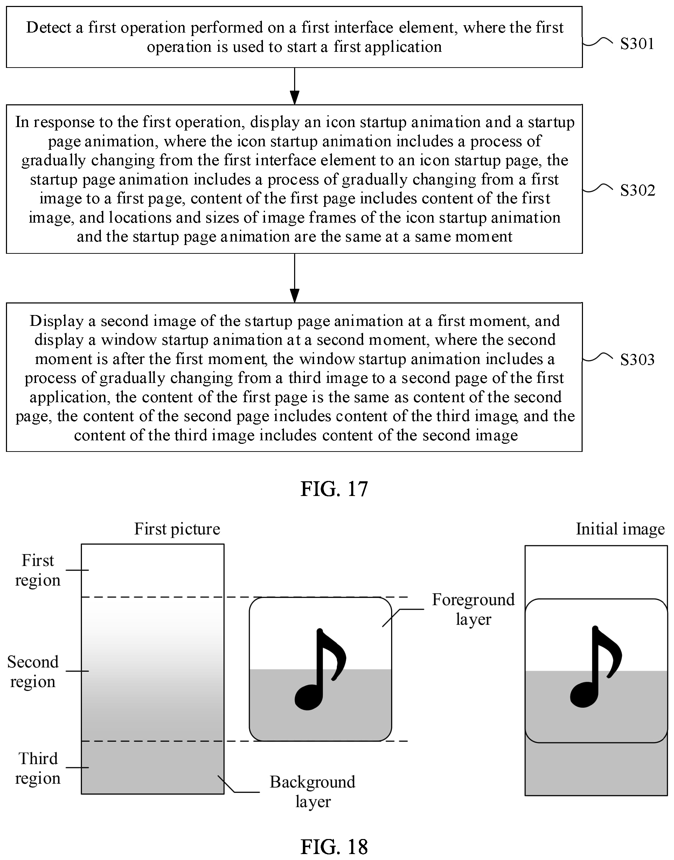

**FIG. 17** **is a schematic flowchart of a display method according to an embodiment of this application.**

S301: An electronic device 100 detects a first operation performed on a first interface element, where the first operation is used to start a first application.

The first interface element may be an interface element such as an application icon of the first application, a service widget, a widget, a notification bar, or a historical task in a multi-task interface.

The first operation may include a tap operation, a slide operation, or the like performed on the first interface element. An operation manner of the first operation is not limited in this embodiment of this application.

For example, the first interface element may be the application icon 103A shown in FIG. 2A, and the first operation may be the tap operation performed on the application icon 103A shown in FIG. 2A.

For example, the first interface element may alternatively be the application icon 103B shown in FIG. 3A, and the first operation may be the tap operation performed on the application icon 103B shown in FIG. 3A.

For example, the first interface element may also be the service widget 104 shown in FIG. 9A, and the first operation may be a tap operation performed on the service widget 104.

It should be noted that, before the electronic device 100 detects the first operation performed on the first interface element, the electronic device 100 does not display content of the first application. Therefore, after the electronic device 100 detects a user operation performed on the first interface element, the electronic device 100 needs to start the first application and draw an application window of the first application, to display the content of the first application in the application window.

S302: In response to the first operation, the electronic device 100 displays an icon startup animation and a startup page animation, where the icon startup animation includes a process of gradually changing from the first interface element to an icon startup page, the startup page animation includes a process of gradually changing from a first image to a first page, content of the first page includes content of the first image, and locations and sizes of image frames of the icon startup animation and the startup page animation are the same at a same moment.

It should be noted that the content of the first page is the same as the content of the application startup page, where the application startup page is a 1^{st} page displayed after the application is started.

In some embodiments, the content of the first page may include a part or all of the content of the first image.

For a startup mode of the first application, the application startup page may have the following cases.
(1) If the user operation mentioned in step S301 is used to trigger cold startup of the application, the application startup page may be an application startup page picture preset by the first application, an application startup page drawn by the electronic device 100 based on related information of the first application, or a main page screenshot of the first application.
   Cold startup of the application means that before the electronic device 100 detects the user operation mentioned in step S301, there is no process of the first application in a background, that is, the first application does not run in the background.
(2) If the user operation mentioned in step S301 is used to trigger hot startup of the application, the application startup page may be a page screenshot before the first application is backgrounded last time.

Hot startup of the application means that before the electronic device 100 detects the user operation mentioned in step S301, there is a process of the first application in the background, that is, the first application runs in the background.

For specific descriptions of the application startup page, cold startup of the application, and hot startup of the application, refer to the foregoing content. Details are not described herein again.

For example, the first application is a game center application, and the application startup page may be the image shown in (a), (b), (c), or (d) in FIG. 1.

In addition, it should be noted that the electronic device 100 may draw the application startup page by using a UI thread of the desktop, so that the electronic device 100 can separate an action of drawing the application startup page from the application startup process, so that drawing of the application startup page is not limited by drawing of an application window. The electronic device 100 may draw the application startup page before the application window is drawn, so that the startup page animation is played before the window startup animation.

For example, the image startup animation may include a process of gradually scaling up the first interface element to the icon startup page, and the startup page animation may include a process of gradually scaling up the first image to the first page.

The electronic device 100 may display the icon startup animation at a first layer, and may display the startup page animation at a second layer.

The first layer may be located above the second layer, and the icon startup animation may include a change process in which picture transparency increases. Alternatively, the first layer may be located below the second layer, and the startup page animation may include a change process in which picture transparency decreases. Alternatively, the icon startup animation may include a change process in which picture transparency increases, and the startup page animation may include a change process in which picture transparency decreases.

In an implementation, the first layer may be located below the second layer. Transparency of the image frame of the icon startup animation may always remain 0, and the startup page animation may include an image 1 and an image 2. In a display process of the startup page animation, the image 1 may be displayed before the image 2, and transparency of the image 1 may be higher than transparency of the image 2. In this way, in a process of displaying the icon startup animation and the startup page animation, animation effect in which the first interface element is gradually scaled up and disappears, and animation effect in which the first page is gradually scaled up and displayed can be presented.

For example, the first interface element is the application icon 103A shown in FIG. 2A. For a plurality of frames of images of the icon startup animation and the startup page animation, refer to the plurality of frames of images T0 to T6 shown in FIG. 7. The first interface element may be an image frame shown by the icon startup animation at a moment T0. The icon startup page may be an image frame shown by the icon startup animation at the moment T6, the first image may be an image frame shown by the startup page animation at the moment T1, and the first page may be an image frame shown by the startup page animation at the moment T6.

For example, if the icon startup animation and the startup page animation are superimposed and displayed. Refer to FIG. 2A to FIG. 2G. It is assumed that the application window is not completely drawn when the electronic device 100 displays FIG. 2E. The image 01 shown in FIG. 2B, the image 02 shown in FIG. 2C, the image 03 shown in FIG. 2D, and the image 04 shown in FIG. 2E are all images obtained by superimposing image frames of the icon startup animation and the startup page animation at a same moment. Alternatively, refer to FIG. 3A to FIG. 3G. It is assumed that the application window is not completely drawn when the electronic device 100 displays FIG. 3D. The image 11 shown in FIG. 3B, the image 12 shown in FIG. 3C, and the image 13 shown in FIG. 3D are all images obtained by superimposing image frames of the icon startup animation and the startup page animation at a same moment.

During specific implementation, the electronic device 100 may generate the icon startup page by using the first interface element, and determine an image frame in the icon startup animation by setting an animation attribute of the icon startup page. A size of the icon startup page is the same as a size of a page displayed after the first application is started.

The animation attribute may include but is not limited to one or more of the following: scaling, translating, cropping, transparency, a rounded corner, and the like.

Similarly, the electronic device 100 may determine the image frame in the startup page animation by setting an animation attribute of the first page.

In addition to transparency, at a same moment, the animation attribute of the image frame in the icon startup animation may be consistent with the animation attribute value of the image frame in the startup page animation, so that image frames of the icon startup animation and the startup page animation may have a same display location and a same display size at the same moment. In other words, superimposed display of the image frame of the icon startup animation and the image frame of the startup page animation is implemented.

For the icon startup page of the first interface element, the following two cases may exist.

Case 1: A foreground layer of the icon startup page is a foreground layer of the first interface element that is scaled up by a first proportion, and a background layer of the icon startup page is determined based on a background layer of the first interface element that is scaled up by a second proportion.

For example, the first interface element is the application icon 103A in FIG. 2A. The icon startup page may be the image A shown in (a) in FIG. 4.

The first proportion may be different from the second proportion. In this way, the icon startup page is determined based on foreground layers and background layers that are scaled up by different proportions in the first interface element.

The first proportion and the second proportion may be set by a developer and preset in the electronic device 100. The developer may configure the first proportion and the second proportion based on visual effect of a picture in the icon startup page.

Preferably, the first proportion should enable a width of the first interface element after the first interface element is scaled up by the first proportion to be equal to a width of the icon startup page, or a length of the first interface element after the first interface element is scaled up by the first proportion to be equal to a length of the icon startup page.

In a process of determining the background layer of the icon startup page by using the background layer of the first interface element, in addition to scaling up the background layer of the first interface element by using the second proportion, the background layer of the icon startup page is further obtained by cropping the scaled-up background layer. In addition, a size of the scaled-up background layer of the first interface element needs to exceed a cropping region range. A size of a cropping region may be a size of an image displayed after the first application is started. This is because the background layer of the first interface element may not match a shape of the background layer of the icon startup page after being scaled up. Therefore, the background layer of the first interface element after being scaled up needs to be cropped. For example, when the application icon 103A shown in FIG. 2A is scaled up to the image A shown in (a) in FIG. 4, the background layer of the application icon 103A is a rounded rectangle, and the background layer of the image A is a non-rounded rectangle. It can be learned that, after the background layer of the application icon 103A is scaled up, the background layer of the application icon 103A needs to be cropped to obtain the background layer of the icon startup page.

In addition, it should be noted that, when the background layer of the first interface element is scaled up, the second proportion may have the following two cases.
(a) The second proportion may include different scaling-up proportions on an X axis and a Y axis.

In this case, when the background layer of the first interface element is scaled up, scaling-up proportions on the X axis and the Y axis are different.

For example, the application icon 103A in FIG. 2A is scaled up to obtain the image A shown in (a) in FIG. 4. Because the background layer of the application icon 103A is a rectangle with a width equal to a height, and the image A is a rectangle with a height greater than a width, when the background layer of the first interface element is scaled up, the scaling-up proportion on the Y axis may be greater than the scaling-up proportion on the X axis.

It can be learned that this case is applicable to a case in which the background layer of the first interface element is a solid-color background. This is because when the foreground layer of the first interface element is scaled up, even if horizontal and vertical scaling-up proportions are different, and the background layer of the first interface element is stretched horizontally or vertically, no image distortion occurs.

(b) The second proportion may include only one scaling-up proportion.

In this case, when the background layer of the first interface element is scaled up, the scaling-up proportions on the X axis and the Y axis are the same.

For example, the application icon 103A in FIG. 2A is scaled up to obtain the image A shown in (a) in FIG. 4. Because the background layer of the application icon 103A is the rectangle with the width equal to the height, if the application icon 103A is scaled up proportionally, the background layer of the application icon 103A is still a rectangle with a width equal to a height after being scaled up. Therefore, after the application icon 103A is scaled up, the background layer of the icon startup page may be further obtained through cropping.

It can be learned that this case is applicable to a case in which the background layer of the first interface element is a non-solid-color background. In this way, the background layer of the first interface element may be scaled up proportionally, to avoid a problem of picture distortion caused by horizontal or vertical stretching of the background layer of the first interface element.

Case 2: The foreground layer of the icon startup page is the first interface element scaled up by a third proportion, and the background layer of the icon startup page is a first picture.

For example, the first interface element is the application icon 103B shown in FIG. 3A. The icon startup page may be the image B shown in (b) in FIG. 4.

The third proportion may be set by the developer and preset in the electronic device 100. The developer may configure the third proportion based on visual effect of a picture in the icon startup page.

Preferably, the third proportion should enable a width of the first interface element after the first interface element is scaled up by the third proportion to be equal to the width of the icon startup page, or the length of the first interface element after the first interface element is scaled up by the third proportion to be equal to the length of the icon startup page.

For example, the first picture may have the following plurality of cases.
(a) The first picture is a solid-color background of a first color.

In this case, the first color may be determined in any one of the following manners.

(a-1) The first color is a preset color.

For example, the color is white, yellow, or black.

(a-2) The first color is a primary color of a region in the first interface element.

In this case, the first color is a color included in the first interface element. For example, if a central region of the first interface element uses red as a primary color, the first color is red.

(a-3) The first color is a primary color of a region in the first interface element * a coefficient.

For example, the coefficient may be an RGB coefficient.

In this case, the first color is determined based on a color included in the first interface element. For example, if the central region of the first interface element uses red as the primary color, the first color is light red. For another example, if the central region of the first interface element uses blue as the primary color, the first color is dark blue.

It may be understood that the electronic device 100 may further determine the first color in another manner. This is not limited in this embodiment of this application.

(b) The first picture is a gradient background.

For example, the first picture includes a gradient region that transitions from the first color to a third color.

In this case, the color used by the gradient background may be:

### (b-1) Preset color

In other words, when generating the first picture, the electronic device 100 may generate the first picture by using the preset color.

### (b-2) Color determined based on the color in the first interface element

The color may be the color included in the first interface element, or may be a color obtained after the color in the first interface element is corrected.

In other words, when generating the first picture, the electronic device 100 may generate the first picture by using the color in the first interface element.

### (b-3) Randomly generated color

In other words, when generating the first picture, the electronic device 100 may generate the first picture by using the randomly generated color.

It may be understood that the electronic device 100 may determine the gradient color in the first picture with reference to any one or more of the preset color, the color in the first interface element, and the randomly generated color.

In addition, in another embodiment of this application, the color of the first picture may include a gradient of two different colors from left to right, include a gradient of two different colors from inside to outside, or include a gradient of three different colors from left to right. A gradient parameter such as a gradient direction of the first picture and a quantity of gradient colors is not limited in this embodiment of this application.

If the first picture is the gradient background, all display regions of the first picture may be gradient colors, or the first picture may include a region including a gradient color and a region including a solid color.

In some implementations, if the first picture includes a region including a gradient color and a region including a solid color, the first picture may include a first region, a second region, and a third region, where a boundary line between the first region and the second region may be an upper boundary of the first interface element scaled up by the third proportion, and a boundary line between the second region and the third region may be a lower boundary of the first interface element scaled up by the third proportion. The first region and the third region may be solid color regions. A color of the first region is a color (referred to as a color 1 below) included in the upper boundary of the first interface element, and a color of the third region is a color (referred to as a color 2 below) included in the lower boundary of the first interface element. A color of the third region may be a gradient color from the color 1 to the color 2.

**FIG. 18** **is a diagram of generating an icon startup page according to an embodiment of this application.**

As shown in FIG. 18, the icon startup page includes the application icon that is in the foreground layer and that is scaled up by the third proportion and the first picture that is in the background layer. The first picture includes the first region, the second region, and the third region. It is assumed that a color included in an upper boundary of the application icon is white, and a color included in a lower boundary of the application icon is gray. In this case, a color of the first region is white, a color of the third region is gray, and a color of the second region is a gradient color that transitions from the white above to the gray below.

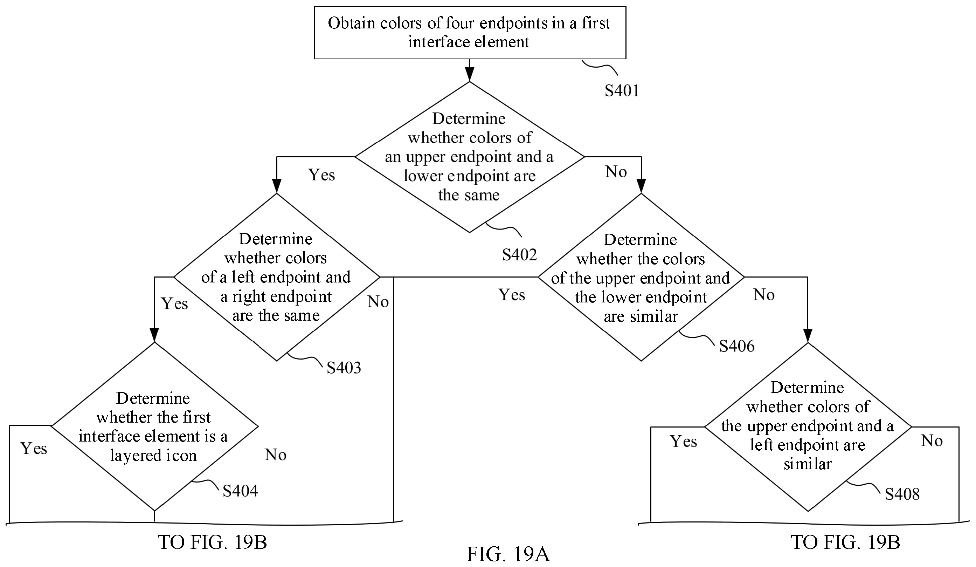

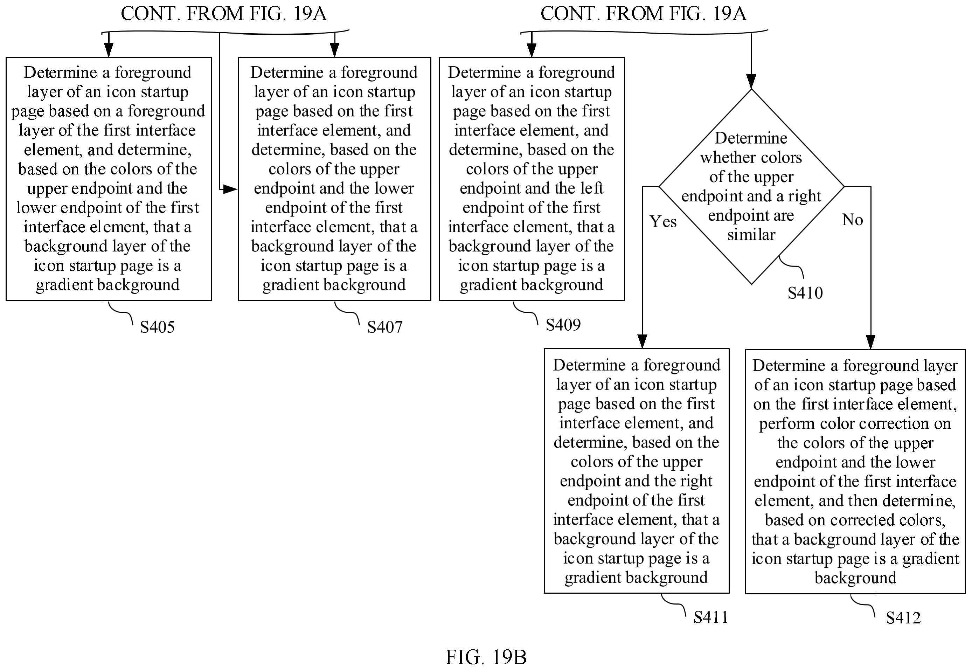

In some other implementations, if all display regions of the first picture are gradient colors, the gradient colors may be determined based on two colors in the first interface element. In this case, for detailed descriptions of determining the icon startup page by the electronic device 100, refer to subsequent content in FIG. 19A and FIG. 19B to FIG. 25. Details are not described herein.

It can be learned from the foregoing two cases of the icon startup page that the case 1 is applicable to the first interface element that can be split into the foreground layer and the background layer, and the case 2 is applicable to the first interface element that cannot be split into the foreground layer and the background layer.

In this case, before the electronic device 100 generates the icon startup page, the electronic device 100 may determine whether the first interface element is a layered icon. If the first interface element is the layered icon, it indicates that the first interface element can be split into the foreground layer and the background layer. Therefore, the icon startup page may be generated in the manner in the foregoing case 1. If the first interface element is a non-layered icon, it indicates that the first interface element cannot be split into the foreground layer and the background layer. Therefore, the icon startup page may be generated in the manner in the foregoing case 2.

It should be understood that whether the first interface element is the layered icon may be determined by a designer who designs the first interface element. In addition, if the first interface element is the layered icon, the icon startup page may also be generated in the manner in the foregoing case 2.

It can be learned that, if the icon startup page is generated in the manner in the case 1, the icon startup animation may include: a process of scaling up the foreground layer of the first interface element to the foreground layer of the icon startup page, and a process of scaling up the background layer of the first interface element to the background layer of the icon startup page. If the icon startup page is generated in the manner in the case 2, the icon startup animation may include a process of scaling up the first interface element to the foreground layer of the icon startup page, and a process in which the first picture appears and is scaled up.

In addition, the icon startup page and the first page may have the following two cases.
(1) Both the icon startup page and the first page are views created by a View animation in a launcher.
(2) Both the icon startup page and the first page are images drawn in a window created by a SurfaceView in the launcher.

In either the case 1 or the case 2, when starting the application, the electronic device 100 does not need to wait for creation of the application window, and may quickly start, after detecting a user operation performed by the user on the first interface element, the icon startup animation corresponding to the icon startup page and the startup page animation corresponding to the first page. For specific descriptions of the launcher, the View animation, and the SurfaceView, refer to the related descriptions of FIG. 14. Details are not described herein again.

In addition, the electronic device 100 may create and play the icon startup animation and the startup page animation by using an RT thread of a desktop, so that creation and playback of the icon startup animation and the startup page animation are not limited to drawing of the application window. In this way, the electronic device 100 may display the icon startup animation and the startup page animation in advance before drawing of the application window is completed, so that the user does not need to wait for long time to view a response made by application startup, thereby visually speeding up application startup.

For example, the icon startup animation and the startup page animation may be created by a system unit in the electronic device 100, and the system unit is different from the first application.

In this embodiment of this application, the icon startup animation may also be referred to as a first startup animation, and the startup page animation may also be referred to as a second startup animation.

S303: The electronic device 100 displays a second image of the startup page animation at a first moment, and displays a window startup animation at a second moment, where the second moment is after the first moment, the window startup animation includes a process of gradually changing from a third image to a second page of the first application, the content of the first page is the same as content of the second page, the content of the second page includes content of the third image, and the content of the third image includes content of second image.

In some embodiments, the content of the second page may include a part or all of the content of the third image, and the content of the third image includes a part or all of the content of the second image.

In some embodiments, when the second image of the startup page animation is displayed, the electronic device 100 displays the window startup animation, where the window startup animation includes a process of gradually changing from the third image to the second page of the first application. Content displayed on the first page is the same as content displayed on the second page, the content of the second page includes the part or all of the content of the third image, and the content of the third image includes the part or all of the content of the second image.

For example, the window startup animation may include a process of gradually scaling up from the third image to the second page of the first application.

The electronic device 100 may start to draw the application window of the first application after detecting the first operation used for the first interface element. The application window is used to carry display of application content. When the application is started, the application content carried in the application window may include but is not limited to any one or more of the following: an application startup page, an image cached in advance by the application, a main page that is displayed by default when the application is started, a startup animation preset by the application, and the like.

After the application window of the first application is drawn, the electronic device 100 may display the window startup animation corresponding to the application window. For example, the electronic device 100 may display the window startup animation after displaying the second image of the startup page animation.

For example, the first interface element is the application icon 103A shown in FIG. 2A. Refer to FIG. 7. The first moment may be the moment T4, the second image may be an image frame of the startup page animation at the moment T4. For a plurality of frames of images of the window startup animation, refer to a plurality of frames of images at the moments T5 and T6 shown in FIG. 7. The second moment may be the moment T5. The third image may be an image frame of the window startup animation at the moment T5. The second page may be an image frame of the window startup animation at the moment T6.

Similar to a process in which the electronic device 100 generates the icon startup animation and the startup page animation, a process of generating the window startup animation may also include: first generating an image displayed after the application is started, and then generating a plurality of frames of images of the window startup animation by setting an animation attribute of the image. For example, for the plurality of frames of images in the window startup animation generated by the electronic device 100, refer to FIG. 7. It can be learned from FIG. 7 that, in display processes of the icon startup animation and the window startup animation, display content gradually increases, and a size of the display content gradually increases.

During specific implementation, before displaying the window startup animation, the electronic device 100 may transfer the animation attribute of the startup page animation to the application window, and draw an image frame of the window startup animation based on the animation attribute of the startup page animation, so that the window startup animation and the startup page animation can have a same animation attribute at a same moment. In this way, the image frame in the startup page animation and the image frame in the window startup animation can have a same transparency, a same display size, a same display location, and the like at a same moment, so that in the window startup animation displayed by the electronic device 100, a scaling-up process of the application window can maintain a scaling-up process of the icon in the icon startup animation, or a scaling-up process of the first page in the startup page animation continues to change.

For example, the image frames of the startup page animation and the window startup animation at the same moment are the same in terms of location, size, and display content.

For example, in display processes of the startup page animation and the window startup animation, display content gradually increases, and a size of the display content gradually increases.

In some implementations, the third layer may be above the first layer and the second layer. In this way, when displaying the window startup animation, the electronic device 100 may block an icon startup animation and a startup page animation that are located at a lower layer, to complete application startup. For a specific layer relationship between the first layer, the second layer, and the third layer, refer to FIG. 5. The icon layer is the first layer, the startup page layer is the second layer, and the application window layer is the third layer.

For example, the electronic device 100 may play the window startup animation by using the SurfaceFlinger. Before the electronic device 100 displays the window startup animation, the electronic device 100 may transfer, through the RT thread, the animation attribute of the startup page animation to the application window.

For example, if the icon startup animation, the startup page animation, and the window startup animation are superimposed and displayed, refer to FIG. 2A to FIG. 2G. It is assumed that the application window is drawn after the electronic device 100 displays FIG. 2E. The image 05 shown in FIG. 2F and the image 06 shown in FIG. 2G are images obtained by superimposing image frames of the icon startup animation, the startup page animation, and the window startup animation at a same moment. Alternatively, refer to FIG. 3A to FIG. 3G. It is assumed that the application window is drawn after the electronic device 100 displays FIG. 3D. The image 14 shown in FIG. 3E, the image 15 shown in FIG. 3F, and the image 16 shown in FIG. 3G are all images obtained by superimposing image frames of the icon startup animation, the startup page animation, and the window startup animation at a same moment.

It may be understood that, when transparency of the image frame of the window startup animation changes to 0, only the image frame of the window startup animation is visible in the image obtained by the electronic device 100 through superposition.

In some implementations, the startup page animation may stop being displayed when the electronic device 100 displays the window startup animation. This is because images of the first several frames of the startup page animation and the window startup animation may be the same. When the electronic device 100 displays the window startup animation, the startup animation is not displayed, which can save power consumption.

In addition, it should be noted that, in a scaling-up process of the application window, or after the window startup animation ends, content displayed in the application window may be switched. For example, during startup of some applications, a preset application startup page picture may be first displayed, and then switched to a main page of the application.

For example, if the application startup page of the first application is not the main page of the application, after the electronic device 100 displays a fourth image of the window startup animation, the electronic device may display a process of changing from a fifth image to the third page, where the content of the second page includes content of the fourth image, a size of the fifth image is greater than or equal to a size of the fourth image, content of the third page includes content of the fifth image, the third page is a main page of the first application, and the second page is different from the third page.

In some implementations, the content of the second page may include a part or all of the content of the fourth image, and the content of the third page may include a part or all of the content of the fifth image.

In other words, if the application startup page is not the main page of the application, in a process in which the electronic device 100 displays the window startup animation, a process of scaling up the third image to the application startup page may be first displayed, and a process of scaling up to the application startup page is displayed.

For example, FIG. 3A to FIG. 3E, FIG. 3I, and FIG. 3H are user interfaces sequentially displayed by the electronic device 100 after the application is started. It is assumed that the application window is drawn after the electronic device 100 displays FIG. 3D. In this case, the image 14 shown in FIG. 3E, the image 15' shown in FIG. 3I, and the user interface 40 shown in FIG. 3H are all obtained based on the image frame in the window startup animation. In the image 14 shown in FIG. 3E, the image frame in the window startup animation is determined based on a preset application startup page picture of a music application, and the image 14 may be the fourth image. The image 14 shows a process of changing to the application startup page picture. In the image 15' shown in FIG. 3I and the user interface 40 shown in FIG. 3H, an image frame in the window startup animation is determined based on a main page of the music application. The image 15' and the user interface 40 show a process of changing to the main page of the music application. The image 15' may be the fifth image, and a page displayed in the user interface 40 may be the third page.

In addition, after the window startup animation ends, there are the following two cases according to different startup manners of the first application.
(1) If the user operation mentioned in step S301 is used to trigger cold startup of the application, the electronic device 100 displays the main page of the first application in the application window of the first application.
(2) If the user operation mentioned in step S301 is used to trigger hot startup of the application, the electronic device 100 displays, in the application window of the first application, a page displayed by the first application before the first application is backgrounded last time.

In general, after the electronic device 100 detects the user operation performed by the user on the first interface element, the electronic device 100 may display the transition animation from the first interface element to the application startup page by displaying the icon startup animation, the startup page animation, and the window startup animation, to improve visual experience during application startup.

In some implementations, if the electronic device 100 detects, after completing display of the startup animation or in the process of displaying the startup animation, a user operation of exiting the first application, the electronic device 100 may display an exit animation.

The exit animation may include a plurality of frames of images that are arranged in a reverse order based on a time sequence in the currently displayed startup animation. In other words, after the electronic device 100 detects the operation of exiting the application by the user, the electronic device 100 may reversely display the image frames in the currently displayed startup animation.

For example, refer to FIG. 10A to FIG. 10G. The user operation of exiting the first application may be the sliding operation shown in FIG. 10A. After the electronic device 100 detects the operation of exiting the application by the user, the electronic device 100 may sequentially display user interfaces shown in FIG. 10A to FIG. 10G.

In this way, the electronic device 100 may directly display the exit animation by using the image frame of the startup animation that is cached when the application is started, thereby reducing a calculation amount of the electronic device 100.

In some implementations, in a process in which the electronic device displays the icon startup animation, the startup page animation, and the window startup animation, when the electronic device displays a sixth image in the icon startup animation, a seventh image in the startup page animation, and an eighth image in the window startup animation, if the electronic device 100 detects a second operation, the second operation is used to exit the first application. In response to the second operation, the electronic device 100 may display a first exit animation, a second exit animation, and a third exit animation, where the first exit animation includes a process of changing from the sixth image to the first interface element, the second exit animation includes a process of changing from the seventh image to the first image, and the third exit animation includes a process of changing from the eighth image to the third image.

In this way, the electronic device 100 may switch from the startup animation to the exit animation based on the operation of exiting the application by the user, and display a process of scaling down from the application page to the application icon, thereby improving visual experience of the user.

In some implementations, in a process in which the electronic device 100 displays the icon startup animation and the startup page animation, the electronic device 100 may further detect a sliding operation of the user, and change, based on the sliding operation, a display direction and/or a display process of image frames of the icon startup animation and the startup page animation that are displayed by the electronic device 100.

For example, the electronic device 100 may determine, based on a sliding speed, a sliding distance, a sliding direction, and the like of the sliding operation, the display direction and/or the display process of the image frames of the icon startup animation and the startup page animation.

For example, if the sliding operation is an operation of holding the screen and sliding upward, the electronic device 100 may reversely display the image frames of the currently displayed icon startup animation and startup page animation.

For another example, if the sliding operation is an operation of holding the screen and sliding down, the electronic device 100 may continue to display an image frame that is not currently played in the image startup animation and the startup page animation.

For example, when the electronic device displays a ninth image in the first startup animation and a tenth image in the second startup animation, the electronic device detects a third operation, where the third operation is a sliding operation; when the third operation is an operation of holding the screen and sliding up, the electronic device may display the first exit animation and the second exit animation with the user operation of holding the screen and sliding up, where the first exit animation includes a process of changing from the ninth image to the first interface element, and the second exit animation includes a process of changing from the tenth image to the first image; or when the third operation is an operation of holding the screen and sliding down, the electronic device may display, with the operation of holding the screen and sliding down, a process of gradually changing from the ninth image to the icon startup page and a process of gradually changing from the tenth image to the first page.

In this way, the electronic device 100 controls a display process of the startup animation based on a sliding operation of the user, and flexibly changes a display direction and/or a display process of an image frame in a current startup animation based on a sliding direction of the user.

In some implementations, the electronic device 100 may generate the icon startup page based on a color extracted from the first interface element.

For example, the electronic device 100 may set the background layer of the icon startup page to a gradient background based on the color extracted from the first interface element. For example, the electronic device 100 may extract colors of an upper endpoint and a lower endpoint of the first interface element, and set a gradient background that transitions from the color of the upper endpoint to the color of the lower endpoint by using the colors of the two endpoints.

For the layered icon, the electronic device 100 may set the foreground layer of the icon startup page by using the foreground layer of the first interface element, and the background layer of the icon startup page is a gradient background generated by using the color extracted from the first interface element. In this way, for an icon with a complex pattern of the background layer of the first interface element, the electronic device 100 does not need to use the background with the complex pattern to generate the background layer of the icon startup page, to avoid a problem that the background layer of the image frame of the icon startup animation is excessively fancy, thereby improving neatness and aesthetics of the image.

For the non-layered icon, the electronic device 100 may set a foreground layer of the icon startup page by using the first interface element. Compared with using a solid-color picture as a background layer of the icon startup page, a gradient picture is used as the background layer of the icon startup page. This can further improve richness of the picture and improve visual effect of the icon startup animation.

The following uses a specific embodiment to describe a detailed process in which the electronic device 100 generates the icon startup page by using the color in the first interface element.

**FIG. 19A** **and** **FIG. 19B** **are a schematic flowchart of generating an icon startup page by using a color of a first interface element according to an embodiment of this application.**

S401: An electronic device 100 obtains colors of four endpoints in the first interface element.

The electronic device 100 may set a background layer of the icon startup page based on colors of the four endpoints of the first interface element.

The color in the first interface element may be represented by using an HSB color value or an RGB value. The HSB color value includes three parameters: Hue (hue), Saturation (saturation), and Brightness (brightness). The RGB value includes three parameters: Red (red), Green (green), and Blue (blue). A parameter used to represent a color of an interface element is not limited in this embodiment of this application.

For example, the four endpoints may be an upper endpoint, a lower endpoint, a left endpoint, and a right endpoint in the first interface element. Further, the four endpoints may be endpoints on the boundary of the first interface element.

During specific implementation, when obtaining the colors of the four endpoints in the first interface element, the electronic device 100 may perform color extraction on four edge locations of the first interface element, and use the extracted color as the colors of the four endpoints in the first interface element.

It should be noted that, because the first interface element may be an icon of an irregular shape, that is, the edge location of the first interface element may not include picture content, after extracting the color, the electronic device 100 may further determine whether transparency of the extracted color is equal to 1. If the transparency is equal to 1, it indicates that the extracted color is valid and may be used as the extracted color in the first interface element. If the transparency is not equal to 1, the electronic device 100 may continue to move by one pixel inside the first interface element to extract the color until a valid color is extracted.

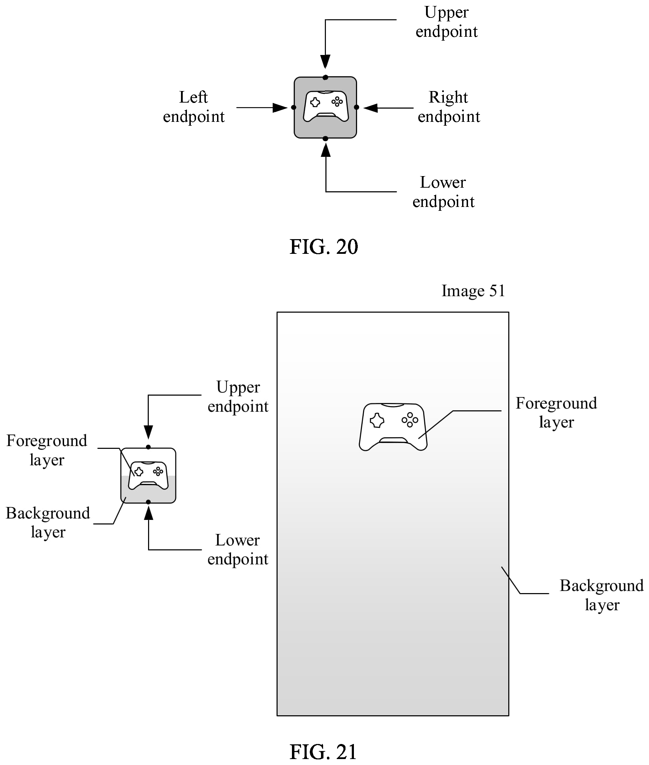

For example, FIG. 20 is a diagram of four endpoints for extracting a color of a first interface element by using an example in which the first interface element is an application icon. As shown in FIG. 20, the upper endpoint may be a middle point of an upper boundary of the application icon, the lower endpoint may be a middle point of a lower boundary of the application icon, the left endpoint may be a middle point of a left boundary of the application icon, and the right endpoint may be a middle point of a right boundary of the application icon.

S402: The electronic device 100 determines whether colors of the upper endpoint and the lower endpoint are the same.

For example, using the HSB color value as an example, the electronic device 100 may compare HSB color values of the upper endpoint and the lower endpoint. If the HSB color values of the upper endpoint and the lower endpoint are the same, it indicates that the colors of the upper endpoint and the lower endpoint are the same.

Optionally, if the difference between the HSB color values of the upper endpoint and the lower endpoint may be less than a first threshold, for example, the first threshold may be 5, it may also be considered that the colors of the upper endpoint and the lower endpoint are the same.

If the colors of the upper endpoint and the lower endpoint are the same, step S403 is performed. Otherwise, step S406 is performed.

S403: The electronic device 100 determines whether colors of the left endpoint and the right endpoint are the same.

For example, using the HSB color value as an example, the electronic device 100 may compare HSB color values of the left endpoint and the right endpoint. If the HSB color values of the left endpoint and the right endpoint are the same, it indicates that the colors of the left endpoint and the right endpoint are the same.

Optionally, if a difference between the HSB color values of the left endpoint and the right endpoint is less than the threshold, for example, 5, it may also be considered that the colors of the left endpoint and the right endpoint are the same.

If the colors of the left endpoint and the right endpoint are the same, step S404 is performed. Otherwise, step S407 is performed.

S404: The electronic device 100 determines whether the first interface element is a layered icon.

If the first interface element includes a plurality of layers, the first interface element is a layered icon. Otherwise, the first interface element is a non-layered icon.

If the first interface element is the layered icon, step S405 is performed. Otherwise, step S407 is performed.

It may be understood that step S404 is an optional step. In this case, if the colors of the left endpoint and the right endpoint are the same, the electronic device 100 may directly perform step S407 after performing step S403. In other words, whether the first interface element is the layered icon is not distinguished, and the icon startup page is directly generated according to step S407.

S405: The electronic device 100 determines a foreground layer of the icon startup page based on the foreground layer of the first interface element, and determines, based on the colors of the upper endpoint and the lower endpoint of the first interface element, that the background layer of the icon startup page is a gradient background.

Specifically, the foreground layer of the icon startup page may be a foreground layer of the first interface element that is scaled up by a specific proportion, and the background layer of the icon startup page is a newly added gradient background. A color of the gradient background may be a gradient color that transitions from the color of the upper endpoint of the first interface element to the color of the lower endpoint of the first interface element from top to bottom.

It may be understood that, if the color values of the upper endpoint and the lower endpoint of the first interface element are equal, the newly added gradient background is a solid color background.

In other words, if the colors of the four endpoints of the first interface element are almost the same, the electronic device 100 may set the background layer of the icon startup page by using the colors of the upper endpoint and the lower endpoint, set a color of a top of the background layer to the color of the upper endpoint of the first interface element, set a color of a bottom of the background layer to the color of the lower endpoint of the first interface element, and then set a color of a middle layer of the background layer to a transition color of the two colors, to determine the color of the background layer.

It may be understood that, in another embodiment of this application, the electronic device 100 may also set the background layer of the icon startup page by using the colors of the left endpoint and the right endpoint of the first interface element, and set the color of the background layer to a gradient color that transitions from the color of the left endpoint of the first interface element to the color of the right endpoint of the first interface element from left to right.

For example, to better understand a process of generating the gradient background of the icon startup page, FIG. 21 shows a diagram of the icon startup page generated by using step S405 by using an example in which the first interface element is an application icon.

As shown in FIG. 21, a color of an upper endpoint of the application icon is white, and a color of a lower endpoint is light gray. It is assumed that a difference between color values of the white and the light gray is less than a first threshold. The icon startup page generated based on the application icon may be an image 51 shown in FIG. 21. A foreground layer of the image 51 is a foreground layer of the application icon, and a background layer of the image 51 is a gradient background that transitions from the white on the top to the light gray on the bottom.

S406: The electronic device 100 determines whether the colors of the upper endpoint and the lower endpoint are similar.

For example, using an HSB color value as an example, the electronic device 100 may compare difference values of HSB color values of the upper endpoint and the lower endpoint. If each difference value is less than a second threshold, for example, 15, it indicates that the colors of the upper endpoint and the lower endpoint are similar.

If the colors of the upper endpoint and the lower endpoint are similar, step S407 is performed. Otherwise, step S408 is performed.

S407: The electronic device 100 determines the foreground layer of the icon startup page based on the first interface element, and determines, based on the colors of the upper endpoint and the lower endpoint of the first interface element, that the background layer of the icon startup page is a gradient background.

Specifically, the foreground layer of the icon startup page may be the first interface element that is scaled up by a specific proportion, and the background layer of the icon startup page is a newly added gradient background. A color of the gradient background may be a gradient color that transitions from the color of the upper endpoint of the first interface element to the color of the lower endpoint of the first interface element from top to bottom.

With reference to steps S403, S404, and S406, it can be learned that, when the colors of the upper endpoint and the lower endpoint in the first interface element are the same, the colors of the left endpoint and the right endpoint are the same, and the first interface element cannot be split, when the colors of the upper endpoint and the lower endpoint in the first interface element are the same, the colors of the left endpoint and the right endpoint are different, and when the colors of the upper endpoint and the lower endpoint in the first interface element are similar, the electronic device 100 may determine the foreground layer of the icon startup page based on the first interface element that is scaled up by the specific proportion, and determine the background layer of the icon startup page based on the colors of the upper endpoint and the lower endpoint of the first interface element.

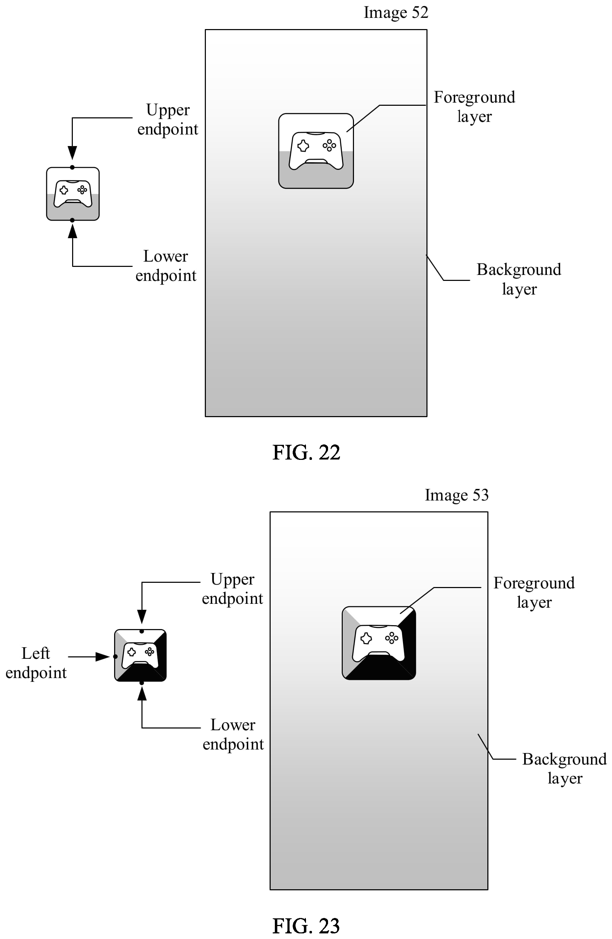

For example, to better understand a process of generating the gradient background of the icon startup page, FIG. 22 shows a diagram of the icon startup page generated by using step S407 by using an example in which the first interface element is an application icon.

As shown in FIG. 22, a color of an upper endpoint of the application icon is white, and a color of a lower endpoint is gray. It is assumed that a difference between color values of the white and the gray is less than a second threshold. The icon startup page generated based on the application icon may be an image 52 shown in FIG. 22. A foreground layer of the image 52 is a foreground layer of the application icon, and a background layer of the image 52 is a gradient background that transitions from the white on the top to the gray on the bottom.

S408: The electronic device 100 determines whether the colors of the upper endpoint and the left endpoint are similar.

For example, using an HSB color value as an example, the electronic device 100 may compare difference values of HSB color values of the upper endpoint and the left endpoint. If each difference value is less than the second threshold, for example, 15, it indicates that the colors of the upper endpoint and the left endpoint are similar.

If the colors of the upper endpoint and the left endpoint are similar, step S409 is performed. Otherwise, step S410 is performed.

S409: The electronic device 100 determines the foreground layer of the icon startup page based on the first interface element, and determines, based on the colors of the upper endpoint and the left endpoint of the first interface element, that the background layer of the icon startup page is a gradient background.

Specifically, the foreground layer of the icon startup page may be the first interface element that is scaled up by a specific proportion, and the background layer of the icon startup page is a newly added gradient background. A color of the gradient background may be a gradient color that transitions from the color of the upper endpoint of the first interface element to the color of the left endpoint of the first interface element from top to bottom.

In other words, if the colors of the upper endpoint and the left endpoint of the first interface element are similar, the electronic device 100 may set the gradient background of the icon startup page by using the colors of the upper endpoint and the left endpoint of the first interface element.

For example, to better understand a process of generating the gradient background of the icon startup page, FIG. 23 shows a diagram of the icon startup page generated by using step S409 by using an example in which the first interface element is an application icon.

As shown in FIG. 23, a color of an upper endpoint of the application icon is white, a color of a lower endpoint is black, and a color of a left endpoint is gray. It is assumed that a difference between color values of white and black is greater than a first threshold, and a difference between color values of white and gray is less than the first threshold, the icon startup page generated based on the application icon may be an image 53 shown in FIG. 23. A foreground layer of the image 53 is a foreground layer of the application icon, and a background layer of the image 53 is a gradient background that transitions from the white on the top to the gray on the bottom.

S410: The electronic device 100 determines whether the colors of the upper endpoint and the right endpoint are similar.

For example, using an HSB color value as an example, the electronic device 100 may compare difference values of HSB color values of the upper endpoint and the right endpoint. If each difference value is less than the second threshold, for example, 15, it indicates that the colors of the upper endpoint and the right endpoint are similar.

If the colors of the upper endpoint and the right endpoint are similar, step S411 is performed. Otherwise, step S412 is performed.

It may be understood that an execution sequence of step S408 and step S410 is not limited in this embodiment of this application. The electronic device 100 may first perform step S408, and then perform step S410, that is, first determine whether the colors of the upper endpoint and the left endpoint of the first interface element are similar, and then determine whether the colors of the upper endpoint and the right endpoint of the first interface element are similar when the colors of the upper endpoint and the left endpoint of the first interface element are not similar. Alternatively, the electronic device 100 may first perform step S410, and then perform step S408, that is, first determine whether the colors of the upper endpoint and the right endpoint of the first interface element are similar, and then determine whether the colors of the upper endpoint and the left endpoint of the first interface element are similar when the colors of the upper endpoint and the right endpoint of the first interface element are not similar.

S411: The electronic device 100 determines the foreground layer of the icon startup page based on the first interface element, and determines, based on the colors of the upper endpoint and the right endpoint of the first interface element, that the background layer of the icon startup page is a gradient background.

Specifically, the foreground layer of the icon startup page may be the first interface element that is scaled up by a specific proportion, and the background layer of the icon startup page is a newly added gradient background. A color of the gradient background may be a gradient color that transitions from the color of the upper endpoint of the first interface element to the color of the right endpoint of the first interface element from top to bottom.

In other words, if the colors of the upper endpoint and the right endpoint of the first interface element are similar, the electronic device 100 may set the gradient background of the icon startup page by using the colors of the upper endpoint and the right endpoint of the first interface element.

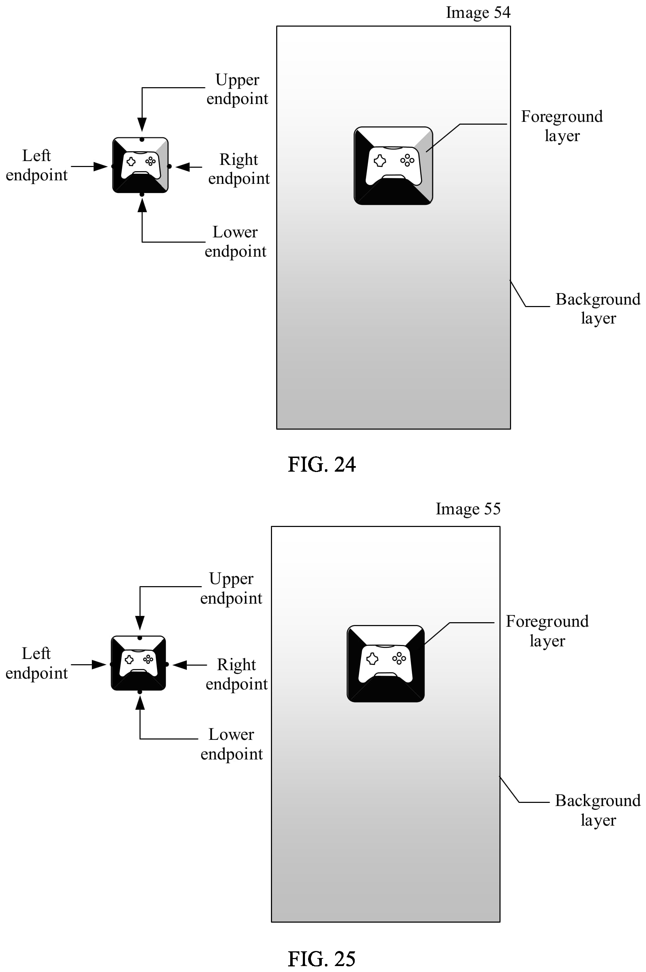

For example, to better understand a process of generating the gradient background of the icon startup page, FIG. 24 shows a diagram of the icon startup page generated by using step S411 by using an example in which the first interface element is an application icon.

As shown in FIG. 24, a color of an upper endpoint of the application icon is white, a color of a lower endpoint is black, a color of a left endpoint is black, and a color of a right endpoint is gray. It is assumed that a difference between color values of white and black is greater than a first threshold, and a difference between color values of white and gray is less than the first threshold, the icon startup page generated based on the application icon may be an image 54 shown in FIG. 24. A foreground layer of the image 54 is a foreground layer of the application icon, and a background layer of the image 54 is a gradient background that transitions from the white on the top to the gray on the bottom.

S412: The electronic device 100 determines the foreground layer of the icon startup page based on the first interface element, performs color correction on the colors of the upper endpoint and the lower endpoint of the first interface element, and then determines, based on corrected colors, that the background layer of the icon startup page is a gradient background.

Color correction may be adjusting the color of the upper endpoint and/or the color of the lower endpoint, to narrow the color difference between the two endpoints, so that the adjusted colors of the two endpoints are similar.

For example, the color of the upper endpoint may be controlled not to change, and the color of the lower endpoint is adjusted, so that the adjusted color of the lower endpoint is similar to the color of the upper endpoint. Alternatively, the color of the lower endpoint may be controlled not to change, and the color of the lower endpoint is adjusted, so that the adjusted color of the upper endpoint is similar to the color of the upper endpoint. Alternatively, the colors of the upper endpoint and the lower endpoint may be adjusted at the same time, so that the adjusted color of the upper endpoint is similar to the adjusted color of the lower endpoint.

For example, if a value of S in a HSB color value of the upper endpoint is 80, and a value of S in a HSB color value of the lower endpoint is 40, the value of S in the HSB color value of the lower endpoint may be changed to 60, so that the color of the lower endpoint after the change is similar to the color of the upper endpoint.

Specifically, the foreground layer of the icon startup page may be a first interface element that is scaled up by a specific proportion, and the background layer of the icon startup page is a newly added gradient background. A color of the gradient background may be a gradient color that transitions from the corrected color of the upper endpoint of the first interface element to the color of the lower endpoint of the first interface element from top to bottom.

In other words, if the color of the upper endpoint of the first interface element is greatly different from the colors of the other three endpoints, the electronic device 100 may adjust the color difference between the upper endpoint and/or the lower endpoint, and use the adjusted color of the endpoint to set the gradient background of the icon startup page.

For example, to better understand a process of generating the gradient background of the icon startup page, FIG. 25 shows a diagram of the icon startup page generated by using step S412 by using an example in which the first interface element is the application icon.

As shown in FIG. 25, a color of an upper endpoint of an application icon is white, a color of a lower endpoint is black, a color of a left endpoint is black, and a color of a right endpoint is black. It is assumed that a difference between color values of white and black is greater than a first threshold, and a difference between color values of white and gray is less than the first threshold. In this case, the icon startup page generated based on the application icon may be an image 55 shown in FIG. 25. A foreground layer of the image 55 is a foreground layer of the application icon, and a background layer of the image 55 is a gradient background that transitions from white on the top to gray on the bottom. The gray is a color obtained by adjusting the color of the lower endpoint.

It may be understood that FIG. 20 to FIG. 25 are merely examples for better understanding of this solution, and do not constitute a limitation on this embodiment of this application.

In addition, it should be noted that FIG. 19A and FIG. 19B merely describe an example of a detailed process of generating the icon startup page by using the color in the first interface element. In another embodiment of this application, the electronic device 100 may further select more or better colors in the first interface element to generate the gradient background of the icon startup page. A location of an endpoint selected by the electronic device 100, a quantity of endpoints, a sequence of determining whether colors of endpoints are the same or similar, and the like are not limited in this application.

In general, the electronic device 100 may generate the background layer of the icon startup page by using the color extracted from the first interface element. Two colors may be extracted from the first interface element, and the two colors are used to set the background layer of the icon startup page to the gradient background layer, so that a picture in the icon startup animation is more vivid and rich. Further, if a difference between the two extracted colors is large, the extracted colors may be corrected, to narrow the difference between the two colors. The gradient background layer is set by using the two corrected colors, to ensure that a hue of the gradient background layer is more harmonious.

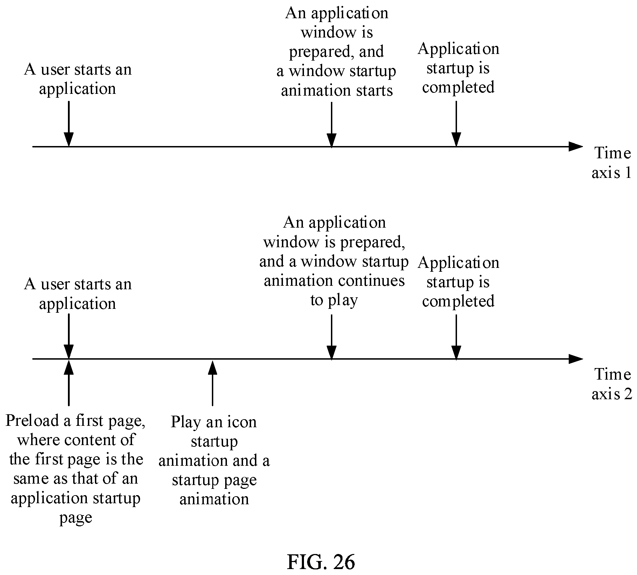

**FIG. 26** **is a diagram of time sequence comparison between an application startup manner according to an embodiment of this application and an application startup manner.**

As shown in FIG. 26, a time axis 1 shows a time sequence diagram of an application startup manner, and a time axis 2 shows a time sequence diagram of an application startup manner according to an embodiment of this application.

In the time axis 1, after a user starts the application, an application window needs to be prepared first, and then a window startup animation is started after the application window is prepared to complete application startup.

During specific implementation, after an operation of starting the application by the user is detected, a UI thread of a desktop notifies a system service and starts the application in response to the operation. After receiving the notification, the system service mainly performs the following tasks: applying for the application window, drawing an application startup page, switching an application life cycle, and notifying the UI thread after the application window is applied for. After receiving the notification, the UI thread starts to play a window startup animation, and finally completes application startup.

It can be learned that, in a startup process of an application, the UI thread needs to communicate with the system service for a plurality of times. There are a plurality of intermediate links, and pre-dependency of each link is complex. Consequently, a response to application startup is slow, and waiting time of the user in terms of visual experience is long. In addition, the window startup animation is played by using the UI thread. The UI thread has heavy workload. Therefore the window startup animation is prone to frame freezing, and a frame loss phenomenon occurs in the animation.

In the time axis 2, when the application is started, a first page whose content is the same as that of the application startup page may be preloaded, and then an icon startup animation and a startup page animation are played. After the application window is prepared, the window startup animation may be played continuously, to complete application startup.

During specific implementation, after the operation of starting an application by the user is detected, the UI thread of the desktop draws the icon startup page corresponding to the icon and the first page, constructs animation attribute parameters of the icon startup animation and the startup page animation, and notifies a render thread to execute the icon startup animation and the startup page animation. The render thread synchronizes the animation attribute parameters of the icon startup animation or the startup page animation to a SurfaceFlinger, and the SurfaceFlinger starts the window startup animation based on the animation attribute parameters after the application window is prepared.

It can be learned that, after the operation of starting an application by the user is detected, the application may be directly started. Playing of the icon startup animation and the startup page animation does not wait for window drawing of a system service, and blocking of the UI thread does not affect playing of the window startup animation.

It can be learned from comparison between the time axis 1 and the time axis 2 that, after the user starts the application, the icon startup animation and the startup page animation can be quickly started on the time axis 2, and the animation triggered after the user starts the application is displayed to the user. However, on the time axis 1, because the application window needs to be prepared, it takes long time to display the animation triggered after the user starts the application to the user. In addition, on the time axis 2, before the application window is prepared, the first page is loaded first, and the startup page animation is displayed, to avoid a case in which display is performed after long time after the user starts the application. In addition, because content of the first page is the same as content of the application startup page, a sudden feeling of a picture transitioning from the application icon to the application startup page in the startup animation is reduced.

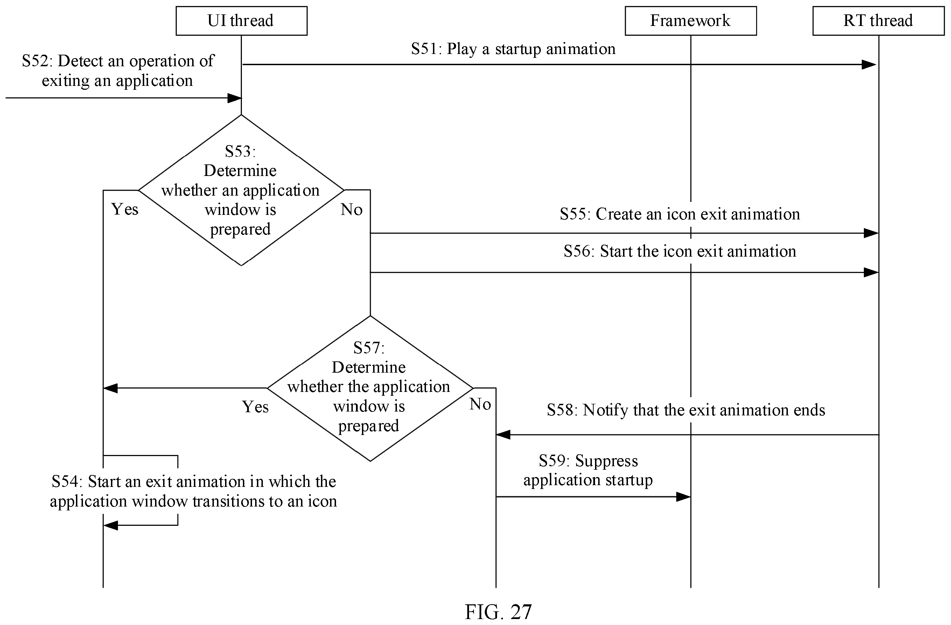

**FIG. 27** **is a diagram of interaction between internal modules of an electronic device 100 that displays an exit animation after being interrupted by a user in an application startup process according to an embodiment of this application.**

Specifically, displaying an exit animation after the electronic device 100 is interrupted by the user in the application startup process mainly involves interaction between a UI thread, a framework, and an RT thread. For specific definitions of the UI thread, the framework, and the RT thread, refer to related content in FIG. 14. Details are not described herein again.

As shown in FIG. 27, after the application startup process is interrupted by the user, main internal implementation includes the following.

S51: The UI thread plays the startup animation through the RT thread.

The UI thread may start, through the RT thread, the icon startup animation and the startup page animation after detecting the user operation of starting the application. For specific internal implementation of the electronic device 100 in starting the icon startup animation and the startup page animation, refer to the descriptions of steps S11 to S20. Details are not described herein again.

S52: The UI thread detects an operation of exiting the application.

The user operation may include a user operation performed on the startup animation, for example, a tap operation or a slide operation.

S53: The UI thread determines whether the application window is prepared.

The electronic device 100 may start to prepare the application window after detecting the user operation of starting the application. Specifically, the UI thread may trigger, after detecting the operation of exiting the application, determining whether the application window is prepared.

If the application window is prepared, step S54 is performed to start the exit animation in which the application window transitions to the icon. Otherwise, step S55 is performed to create a hand-following animation of the icon.

S54: The UI thread starts the exit animation in which the application window transitions to the icon.

If the application window is prepared, the UI thread starts the exit animation in which the application window transitions to the icon. The exit animation is used to display a process in which the application window is gradually scaled down transitions to the icon, and is gradually scaled down.

In other words, in a process in which the application is started and the startup animation is displayed, when the electronic device 100 detects the user operation of exiting the application, if the current application is prepared, the electronic device 100 switches from the currently displayed startup animation to the exit animation in which the application window transitions to the icon.

Optionally, if the operation of exiting the application includes the sliding operation, the exit animation may further include the hand-following animation, and the hand-following animation is used to display a process in which an image frame follows a sliding track of the sliding operation in first several frames of images of the exit animation.

For example, refer to FIG. 12A to FIG. 12E. FIG. 12A shows the sliding operation of exiting the application that is detected by the electronic device 100 when the electronic device 100 displays the startup animation. FIG. 12B to FIG. 12E show a plurality of frames of images 31 to 33 included in the exit animation in which the application window transitions to an image. Motion tracks of image frames shown in FIG. 12B and FIG. 12C show a hand-following animation in which the image frames move with sliding estimation of the sliding operation.

S55: The UI thread creates an icon exit animation through the RT thread.

If the application window is not prepared, the UI thread creates the icon exit animation through the SurfaceFlinger, that is, displays a process in which the application icon is gradually scaled down. The frames of images included in the icon exit animation may be frames of images in the icon startup animation that is reversely played.

In other words, in a process in which the application is started and the icon startup animation is displayed, when the electronic device 100 detects the user operation of exiting the application, if the current application window is not prepared, the electronic device 100 may reversely play the icon startup animation, and display the exit animation in which the icon is gradually scaled down.

It may be understood that, after detecting the operation of exiting the application, the electronic device 100 may also create and start the icon exit animation, and does not need to determine whether the application window is prepared. In other words, step S53 is an optional step.

Further, the icon exit animation may include the hand-following animation. In other words, when the operation of exiting the application is the sliding operation, in a process in which the electronic device 100 displays the icon that is gradually scaled down, a movement track of the icon further moves with a sliding direction of the user.

In other words, in a process in which the application is started and the icon startup animation is displayed, when the electronic device 100 detects the user operation of exiting the application, if the current application window is not prepared, the electronic device 100 may display a process in which the icon moves and is gradually scaled down based on the sliding operation of the user.

S56: The UI thread starts the icon exit animation through the RT thread.

S57: The UI thread determines whether the application window is prepared.

After the electronic device 100 starts the icon exit animation, that is, in a process of displaying the icon exit animation, the electronic device 100 may continuously perform or periodically perform step S57 to determine whether the application window is prepared.

If the application window is prepared, step S54 is performed to start the exit animation in which the application window transitions to the icon. Otherwise, the electronic device 100 continues to play the icon exit animation until the icon exit animation is played, and performs step S58.

In other words, in a process in which the electronic device 100 displays the icon exit animation, if the application window is prepared, the electronic device 100 may switch from the current icon exit animation to the exit animation in which the application window transitions to the icon.

In some implementations, if the icon exit animation includes the hand-following animation, the electronic device 100 may trigger, after the hand-following animation ends, determining whether the application window is prepared. If the application window is prepared, the electronic device 100 switches to the exit animation in which the application window transitions to the icon. If the application window is not prepared, the electronic device 100 displays an icon return desktop animation, that is, displays a process in which the application icon is gradually scaled down to return to the desktop.

For example, refer to FIG. 13A to FIG. 13C and FIG. 12D to FIG. 12E. FIG. 13A shows the sliding operation of exiting the application detected by the electronic device 100 when the electronic device 100 displays the startup animation, FIG. 13A to FIG. 13C show the hand-following animation of the icon, and FIG. 12D to FIG. 12E show the exit animation in which the application window transitions to the icon.

For example, refer to FIG. 13A to FIG. 13E. FIG. 13A shows the sliding operation of exiting the application detected by the electronic device 100 when the electronic device 100 displays the startup animation. FIG. 13A to FIG. 13C show the hand-following animation of the icon. FIG. 13D to FIG. 13E show the icon return desktop animation.

In addition, it may be understood that step S57 is an optional step. After the electronic device 100 starts the icon exit animation, whether the application window is prepared may not need to be determined, and the icon exit animation may be directly played until the icon exit animation ends, to complete exit of the application.

S58: The RT thread notifies the UI thread that the exit animation ends.

S59: The UI thread suppresses application startup through a Framework.

For example, the UI thread may suppress application startup by using an activity management service (activity manager service, AMS) in the Framework.

It can be learned that, in an application exit process in this embodiment of this application, different exit animations may exist based on whether the application window is prepared, to provide rich visual experience for the user.

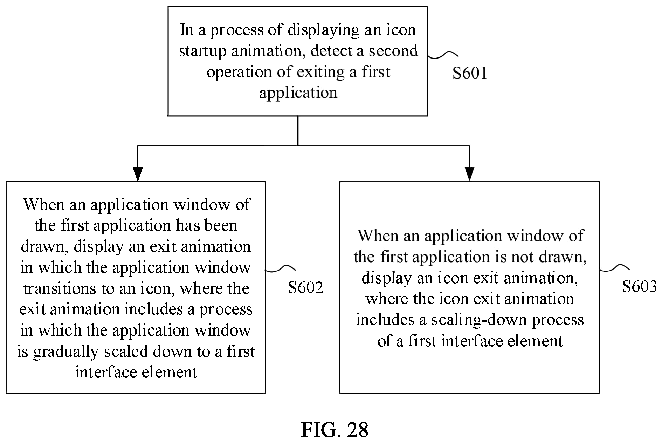

**FIG. 28** **is a schematic flowchart of another display method according to an embodiment of this application.**

S601: The electronic device 100 detects, in a process of displaying an icon startup animation, a second operation of exiting a first application.

The second operation may be a touch operation, a voice operation, or the like. A form of the second operation is not limited in this embodiment of this application.

For example, the second operation may be the sliding operation shown in FIG. 12A or FIG. 13A.

S602: When an application window of the first application has been drawn, the electronic device 100 displays an exit animation in which the application window of the first application transitions to the icon, where the exit animation includes a process in which the application window is gradually scaled down to a first interface element.

If the electronic device 100 detects, when the application window of the first application has been drawn, the user operation of exiting the first application, there are the following two cases for the currently displayed startup animation.
(1) The electronic device 100 has displayed the window startup animation.

In other words, when detecting the user operation of exiting the first application, the electronic device 100 has displayed the window startup animation, and the electronic device 100 may sequentially reversely display a plurality of frames of images based on the currently displayed window startup animation and the image frame of the icon startup animation.

(2) The electronic device 100 does not display the window startup animation.

If the electronic device 100 detects, in a process of displaying the icon startup animation and the startup page animation, the operation of exiting the application by the user, and the electronic device 100 has currently prepared the application window but does not display the window startup animation, in response to the operation, the electronic device 100 may display a scaling-down animation in which display content of the application window transitions to the first interface element.

For example, refer to FIG. 12A to FIG. 12E. The electronic device 100 detects, when displaying the image 04 shown in FIG. 12A, the operation of exiting the application by the user. The image 04 is obtained by drawing based on an image frame in the startup page animation. If the electronic device 100 completes drawing of the application window after detecting the operation of exiting the application by the user, the image 31 shown in FIG. 12B is an image frame drawn based on the display content of the application window. FIG. 12B to FIG. 12E show a scaling-down animation of the content of the application window to the application icon 103A.

S603: When the application window of the first application is not drawn, the electronic device 100 displays an icon exit animation, where the icon exit animation includes a scaling-down process of a first interface element.

If the electronic device 100 detects, in a process of displaying the icon startup animation, the operation of exiting the application by the user, and the electronic device 100 is currently not prepared for the application window, in response to the operation, the electronic device 100 may display the scaling-down animation of the image frame displayed when the operation of exiting the application is detected to the first interface element.

For example, refer to FIG. 13A to FIG. 13E. The electronic device 100 detects, when displaying the image 04 shown in FIG. 12A, the operation of exiting the application by the user. The image 04 is obtained by drawing based on the image frame in the startup page animation. If the electronic device 100 detects that the application window is not drawn after detecting the operation of exiting the application by the user, the electronic device 100 may display the icon exit animation shown in FIG. 13B to FIG. 13E. The icon exit animation is used to display a scaling-down process of the application icon.

In some implementations, when detecting the second operation, the electronic device 100 may directly respond to the second operation without considering whether the application window is drawn, and reversely play the image frame in the displayed icon startup animation. In this way, the electronic device 100 may directly display the exit animation of scaling down the interface element to the user.

Alternatively, when detecting the second operation, the electronic device 100 may continue to display M frames of images of the icon startup animation, and then reversely play the image frame in the displayed icon startup animation. In the M frames of images that are continuously displayed, a playback speed of the M frames of images gradually decreases, and a playback speed of first L frames of images that are reversely displayed gradually increases. In this way, when the electronic device 100 detects the operation of exiting the application by the user, the electronic device 100 can avoid switching to the exit animation excessively rigidly, thereby improving visual experience of the user.

In addition, the exit animation displayed by the electronic device 100 may further include the hand-following animation. In other words, first several frames (for example, K frames) of images displayed in the exit animation may further move with a sliding track of the user.

Further, if the application window is drawn after the electronic device 100 displays the hand-following animation, the electronic device 100 may switch to a scaling-down animation in which content of the application window transitions to the first interface element.

In some implementations, the electronic device 100 may further detect, in a process of displaying the exit animation, an operation of starting the first application again by the user, and continue to display the startup animation based on the currently displayed image frame.

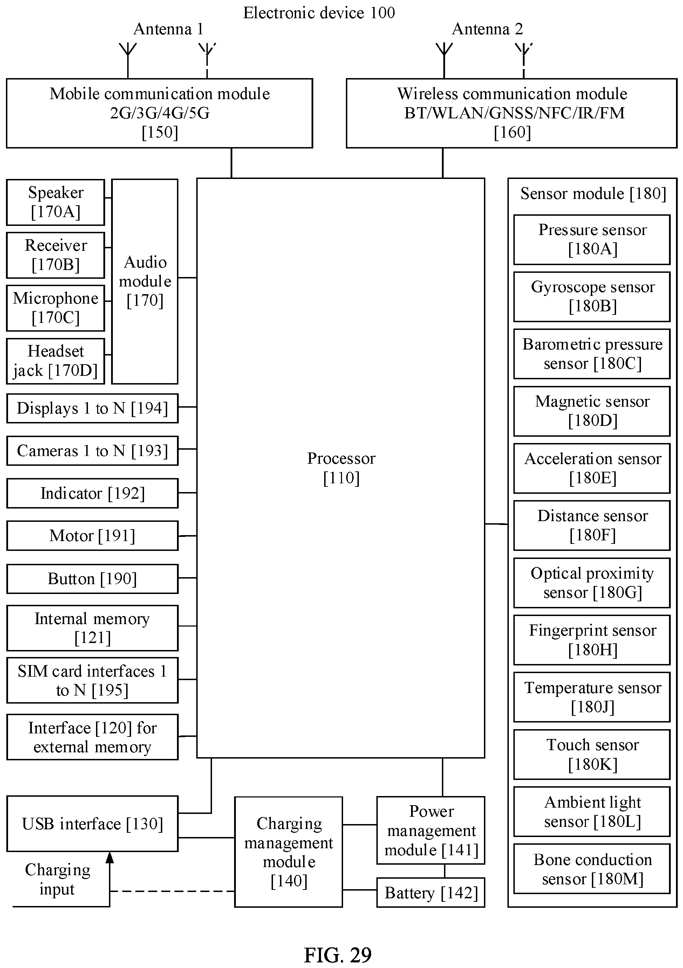

**FIG. 29** **is a diagram of a hardware structure of an electronic device 100.**

The electronic device 100 may be a mobile phone, a tablet computer, a desktop computer, a laptop computer, a handheld computer, a notebook computer, an ultra-mobile personal computer (ultra-mobile personal computer, UMPC), a netbook, a cellular phone, or a personal digital assistant (personal digital assistant, PDA), augmented reality (augmented reality, AR) device, virtual reality (virtual reality, VR) device, artificial intelligence (artificial intelligence, AI) device, wearable device, in-vehicle device, smart home device, and/or smart city device, a specific type of the electronic device is not limited in the embodiment of this application.

The electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

**In some embodiments, the processor 110 may be configured to: after detecting a first operation of a user, start a first application, obtain a first page based on an application startup page of the first application, and generate an icon startup animation, a startup page animation, a window startup animation, and the like.**

The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 170A, the receiver 170B, or the like), or displays an image or a video by the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs demodulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite-based augmentation system (satellite based augmentation systems, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD). The display panel may alternatively be an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diode, QLED), or the like. In some embodiments, the electronic device may include one or N displays 194, where N is a positive integer greater than 1.

**In some embodiments, the display 194 may be configured to display the startup animation in an application startup process, including the icon startup animation, the startup page animation, the window startup animation, and the exit animation in the application exit process. For specific content displayed on the display 194, refer to the content in** **FIG. 2A to FIG. 2G****, FIG. 3A to FIG. 3I,** **FIG. 9A to FIG. 9D****,** **FIG. 10A to FIG. 10G****,** **FIG. 12A to FIG. 12E****, and** **FIG. 13A to FIG. 13E****.**

The electronic device 100 may implement a photographing function through the camera 193, the ISP, the video codec, the GPU, the display 194, the application processor and the like.

The internal memory 121 may include one or more random access memories (random access memories, RAMs) and one or more non-volatile memories (non-volatile memories, NVMs).

The random access memory may be directly read and written by the processor 110, may be configured to store executable programs (such as machine instructions) of an operating system or another running program, and may also be configured to store data of users and applications.

The non-volatile memory may also store the executable programs, the data of the user and the application, and the like, and may be loaded into the random access memory in advance, to be directly read and written by the processor 110.

The electronic device 100 may implement an audio function, for example, music playing and recording, through the audio module 170, the speaker 170A, the receiver 170B, the microphone 170C, the headset jack 170D, the application processor, and the like.

The touch sensor 180K is also referred to as a "touch component". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided through the display 194. In some other embodiments, the touch sensor 180K may also be disposed on a surface of the electronic device 100 at a location different from that of the display 194.

It should be understood that the steps in the foregoing method embodiments may be completed by using an integrated logic circuit of hardware in the processor or instructions in a form of software. The steps of the method disclosed with reference to embodiments of this application may be directly performed and completed by a hardware processor, or may be performed and completed by using a combination of hardware in the processor and a software module.

This application further provides an electronic device. The electronic device may include a memory and a processor. The memory may be configured to store a computer program. The processor may be configured to invoke the computer program in the memory, to enable the electronic device to perform the method performed by the electronic device 100 in any one of the foregoing embodiments.

This application further provides a chip system. The chip system includes at least one processor, configured to implement functions in the method performed by the electronic device 100 in any one of the foregoing embodiments.

In a possible design, the chip system further includes a memory, the memory is configured to store program instructions and data, and the memory is located inside or outside the processor.

The chip system may include a chip, or may include a chip and another discrete component.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may alternatively be one or more memories in the chip system. The memory may be integrated with the processor, or may be disposed separately from the processor. This is not limited in embodiments of this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in embodiments of this application.

For example, the chip system may be a field programmable gate array (field programmable gate array, FPGA), an application-specific integrated circuit (application-specific integrated circuit, ASIC), a system on chip (system on chip, SoC), a central processing unit (central process unit, CPU), a network processor (network processor, NP), a digital signal processor (digital signal processor, DSP), a micro controller unit (micro controller unit, MCU), a programmable logic device (programmable logic device, PLD), or another integrated chip.

This application further provides a computer program product. The computer program product includes a computer program (which may also be referred to as code or instructions). When the computer program is run, a computer is enabled to perform any method performed by the electronic device 100 in any one of the foregoing embodiments.

This application further provides a computer-readable storage medium. The computer-readable storage medium stores a computer program (which may also be referred to as code or instructions). When the computer program is run, a computer is enabled to perform any method performed by the electronic device 100 in any one of the foregoing embodiments.

It should be noted that the processor in embodiments of this application may be an integrated circuit chip, and has a signal processing capability. In an implementation process, steps in the foregoing method embodiments may be completed by using an integrated logic circuit of hardware in the processor or instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps of the method disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

In addition, an embodiment of this application further provides an apparatus. The apparatus may be specifically a component or a module, and the apparatus may include one or more processors and memories that are connected to each other. The memory is configured to store a computer program. When the computer program is executed by one or more processors, the apparatus is enabled to perform the methods in the foregoing method embodiments.

The apparatus, the computer-readable storage medium, the computer program product, or the chip provided in embodiments of this application is configured to perform the corresponding method provided above. Therefore, for beneficial effect that can be achieved, refer to beneficial effect in the corresponding method provided above, and details are not described herein again.

Implementations of this application may be randomly combined to achieve different technical effect.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

A person of ordinary skill in the art may understand that all or some of the processes of the methods in embodiments may be implemented by a computer program instructing relevant hardware. The program may be stored in a computer-readable storage medium. When the program runs, the processes of the methods in embodiments are performed. The foregoing storage medium includes any medium that can store program code, such as a ROM, a random access memory RAM, a magnetic disk, or an optical disc.

In conclusion, the foregoing descriptions are merely embodiments of the technical solutions of the present invention, but are not intended to limit the protection scope of the present invention. Any modification, equivalent replacement, improvement, or the like made according to the disclosure of the present invention shall fall within the protection scope of the present invention.

## Claims

1. A display method, wherein the method comprises:
detecting, by an electronic device, a first operation performed on a first interface element, wherein the first operation is used to start a first application;
in response to the first operation, displaying, by the electronic device, a first startup animation and a second startup animation, wherein the first startup animation comprises a process of gradually changing from the first interface element to an icon startup page, the second startup animation comprises a process of gradually changing from a first image to a first page, content of the first page comprises content of the first image, and locations and sizes of image frames of the first startup animation and the second startup animation at a same moment are the same;
displaying, by the electronic device, a second image of the second startup animation at a first moment; and
displaying, by the electronic device, a window startup animation at a second moment, wherein the second moment is after the first moment, the window startup animation comprises a process of gradually changing from a third image to a second page of the first application, the content of the first page is the same as content of the second page, the content of the second page comprises content of the third image, and the content of the third image comprises content of the second image.

2. The method according to claim 1, wherein the first startup animation comprises a change process in which picture transparency increases, and the second startup animation comprises a change process in which picture transparency decreases.

3. The method according to claim 1, wherein the first startup animation is displayed on a first layer, and the second startup animation is displayed on a second layer; and
the first layer is located above the second layer, and the first startup animation comprises a change process in which picture transparency increases; or the first layer is located below the second layer, and the second startup animation comprises a change process in which picture transparency decreases.

4. The method according to claim 3, wherein the window startup animation is displayed on a third layer, and the third layer is located above the first layer and the second layer.

5. The method according to any one of claims 1 to 4, wherein locations, sizes, and display content of image frames of the second startup animation and the window startup animation at a same moment are the same.

6. The method according to any one of claims 1 to 5, wherein in display processes of the second startup animation and the window startup animation, the display content gradually increases, and a size of the display content gradually increases.

7. The method according to any one of claims 1 to 6, wherein the method further comprises:
in response to the first operation, starting, by the electronic device, to draw an application window of the first application; and
after displaying, by the electronic device, the first startup animation and the second startup animation, and before displaying the window startup animation, the method further comprises:
completing, by the electronic device, drawing of the application window of the first application.

8. The method according to any one of claims 1 to 7, wherein the first page is an application startup page picture preset for the first application, the first page is drawn by the electronic device based on first information of the first application, the first page is a page screenshot of the first application before the first application is backgrounded last time, or the first page is a main page screenshot of the first application.

9. The method according to any one of claims 1 to 8, wherein the method further comprises:
after the electronic device displays a fourth image of the window startup animation, displaying, by the electronic device, a process of changing from a fifth image to a third page, wherein the content of the second page comprises content of the fourth image, a size of the fifth image is greater than or equal to a size of the fourth image, content of the third page comprises content of the fifth image, the third page is a main page of the first application, and the second page is different from the third page.

10. The method according to any one of claims 1 to 9, wherein
before detecting, by the electronic device, the first operation, the first application does not run in a background of the electronic device, and after the window startup animation ends, the method further comprises:
displaying, by the electronic device, the main page of the first application in the application window of the first application;
or
before detecting, by the electronic device, the first operation, the first application runs in the background of the electronic device, and after the window startup animation ends, the method further comprises:
displaying, by the electronic device in the application window of the first application, a page displayed by the first application before the first application is backgrounded last time.

11. The method according to any one of claims 1 to 10, wherein the first interface element comprises a first foreground layer and a first background layer, the icon startup page comprises a second foreground layer and a second background layer, and before displaying, by the electronic device, the first startup animation, the method further comprises:
scaling up, by the electronic device, the first foreground layer based on a first proportion, to obtain the second foreground layer;
scaling up, by the electronic device, the first background layer based on a second proportion, to obtain the second background layer, wherein a size of the second background layer is the same as a size of the first page; and
generating, by the electronic device, the image frame of the first startup animation based on the second foreground layer and the second background layer, wherein the first startup animation is used to display a process of scaling up the first foreground layer to the second foreground layer and a process of scaling up the first background layer to the second background layer.

12. The method according to claim 11, wherein the first proportion is different from the second proportion.

13. The method according to any one of claims 1 to 10, wherein the icon startup page comprises a second foreground layer and a second background layer, and before displaying, by the electronic device, the first startup animation, the method further comprises:
scaling up, by the electronic device, the first interface element based on a third proportion, to obtain the second foreground layer; and
generating, by the electronic device, the image frame of the first startup animation based on the second foreground layer and the second background layer, wherein the second background layer comprises a first picture, a size of the first picture is the same as a size of the first page, and the first startup animation is used to display a process of scaling up the first interface element to the second foreground layer and a process in which the first picture appears and is scaled up.

14. The method according to claim 13, wherein
the first picture is a solid-color background picture of a first color, and the first color comprises any one of the following cases: the first color is a preset color, the first color is a color comprised in the first interface element, or a color value of the first color is a color value of a color comprised in the first interface element * a coefficient;
or
the first picture is a gradient background picture that transitions from a second color to a third color, wherein the second color and/or the third color are/is obtained based on a color comprised in the first interface element;
or
the first picture comprises a first region, a second region, and a third region, a boundary line between the first region and the second region is an upper boundary of the second foreground layer, a boundary line between the second region and the third region is a lower boundary of the second foreground layer, a color of the first region is a fourth color comprised in an upper boundary of the first interface element, a color of the second region is a fifth color comprised in a lower boundary of the first interface element, and a color comprised in the third region is a gradient color that transitions from the fourth color to the fifth color.

15. The method according to claim 13 or 14, wherein a width of the second foreground layer is equal to a width of the second background layer.

16. The method according to any one of claims 11 to 15, wherein generating, by the electronic device, the image frame of the first startup animation based on the second foreground layer and the second background layer specifically comprises:
generating, by the electronic device, the image frame of the first startup animation by setting animation attributes of the second foreground layer and the second background layer, wherein animation attributes of image frames displayed at different moments in the first startup animation are different, and the animation attributes comprise one or more of the following: translating, scaling, cropping, a rounded corner, or transparency.

17. The method according to any one of claims 1 to 16, wherein before displaying, by the electronic device, the first startup animation, the method further comprises:
drawing, by the electronic device, the first page.

18. The method according to any one of claims 1 to 17, wherein before displaying, by the electronic device, the window startup animation, the method further comprises:
transferring, by the electronic device, an animation attribute of the second startup animation to the application window of the first application, wherein the animation attribute comprises one or more of the following: translating, scaling, cropping, a rounded corner, or transparency; and
drawing, by the electronic device, the image frame of the window startup animation based on the animation attribute of the second startup animation.

19. The method according to any one of claims 1 to 18, wherein the second startup animation stops being displayed when the electronic device displays the window startup animation.

20. The method according to any one of claims 1 to 19, wherein in a process in which the electronic device displays the first startup animation and the second startup animation, the method further comprises:
detecting, by the electronic device, a second operation, wherein the second operation is used to exit the first application; and
in response to the second operation, reversely playing, by the electronic device, the image frames of the displayed first startup animation and the displayed second startup animation, or continuing to display, by the electronic device, M frames of images of the first startup animation and the second startup animation, and then reversely playing the image frames of the displayed first startup animation and the displayed second startup animation, wherein in the M frames of images that are continuously displayed, a playback speed of the M frames of images gradually decreases as time goes by, and a playback speed of first L frames of images that are reversely played gradually increases.

21. The method according to any one of claims 1 to 20, wherein in a process in which the electronic device displays the first startup animation, the second startup animation, and the window startup animation, the method further comprises:
when the electronic device displays a sixth image of the first startup animation, a seventh image of the second startup animation, and an eighth image of the window startup animation, detecting, by the electronic device, the second operation, wherein the second operation is used to exit the first application; and
in response to the second operation, displaying, by the electronic device, a first exit animation, a second exit animation, and a third exit animation, wherein the first exit animation comprises a process of changing from the sixth image to the first interface element, the second exit animation comprises a process of changing from the seventh image to the first image, and the third exit animation comprises a process of changing from the eighth image to the third image.

22. The method according to any one of claims 1 to 21, wherein the first interface element comprises any one of the following: an application icon, a service widget, a widget, a notification bar, and a historical task in a multi-task interface.

23. The method according to any one of claims 1 to 22, wherein the first startup animation and the second startup animation are created by a system unit in the electronic device, and the system unit is different from the first application.

24. An electronic device, comprising a memory, one or more processors, and one or more programs, wherein when the one or more processors execute the one or more programs, the electronic device is enabled to implement the method according to any one of claims 1 to 23.

25. A computer-readable storage medium, comprising instructions, wherein when the instructions are run on an electronic device, the electronic device is enabled to perform the method according to any one of claims 1 to 23.

26. A computer program product, wherein when the computer program product runs on a computer, the computer is enabled to perform the method according to any one of claims 1 to 23.
